# EUROPEAN PATENT APPLICATION

(11) **EP 3 199 279 A1**
(43) Date of publication of application: **02.08.2017**
(21) Application number: 15845359.7
(22) Date of filing: 28.09.2015
(51) Int. Cl.: B23B 51/00

(54) **DRILL AND DRILL HEAD**

(30) Priority: 26.09.2014 JP 2014197097; 30.07.2015 JP 2015150810; 24.09.2015 JP 2015187316
(71) Applicant: Mitsubishi Materials Corporation, Chiyoda-ku Tokyo 100-8117 (JP)
(72) Inventor: MABUCHI Masayuki, Tokyo 100-8117 (JP); NARUKE Koichiro, Tokyo 100-8117 (JP); TAKAHASHI Souhei, Tokyo 100-8117 (JP); HIBI Takahiro, Tokyo 100-8117 (JP); YAMAMOTO Tadashi, Tokyo 100-8117 (JP); YANAGIDA Kazuya, Tokyo 100-8117 (JP)
(74) Representative: Hoffmann Eitle
(86) International application number: PCT/JP2015/077325
(87) International publication number: WO 2016/047803

(57) **Abstract**

A drill comprising: a drill main body; a chip discharge flute; and a tip cutting edge. The tip cutting edge includes: a first tip cutting edge which extends toward the axially posterior end as it goes toward the outside in a radial direction; and a second tip cutting edge which is disposed outside the first tip cutting edge in the radial direction. The second tip cutting edge extends toward the tip in the axis direction as it goes toward the outside in the radial direction or extends to be perpendicular to the axis. The radially inner end of the second tip cutting edge is disposed on the axially posterior end with respect to the radially outer end of the first tip cutting edge. The radially outer end of the second tip cutting edge is disposed on a virtual extension line of the first tip cutting edge.

## Description

### Technical Field

The present invention relates to, for example, a drill which performs drilling on a work material such as a CFRP (carbon fiber reinforced resin) or a composite material in which a plate of metal such as titanium or aluminum is laminated on the CFRP, and a drill head which is detachably mounted on a tip portion of a tool main body of a indexable insert drill or which is mounted to be fixed to the tip portion of the tool main body by brazing or the like.

Priority is claimed on Japanese Patent Application No. 2014-197097, filed on September 26,2014, Japanese Patent Application No. 2015-150810, filed on July 30, 2015, and Japanese Patent Application No. 2015-187316, filed on September 24,2015, the content of each of which is incorporated herein by reference.

### Background Art

In the related art, for example, a work material such as a CFRP (carbon fiber reinforced resin) which is used in an aircraft part or the like or a composite material in which a plate of metal such as titanium or aluminum is laminated on the CFRP is drilled by a drill.

In this kind of work material, delamination of a fiber layer easily occurs on an inner circumference of a machined hole due to a thrust load (a force which is applied from a drill to the work material in a drill feeding direction) which is transmitted from the drill when drilling is performed. In addition, a remainder of a fiber, rear burrs of extensibility, a beard, or the like (hereinafter, referred to as burrs or the like) may occur. For example, as a drill for solving the above-described problem, drills disclosed in the following PTL1 to PTL 5 have been known.

In the drill disclosed in PTL 1, a point angle is set to a small angle such as 70 degrees to 100 degrees to decrease a thrust load.

In the drills disclosed in PTL 2 and PTL 3, a tip portion is formed at an acute angle such that the tip portion is sharpened in a side view of the drill, and a point angle of a cutting edge is changed to be gradually decreased or decreased in stages from the tip toward posterior end so as to decrease a thrust load.

In the drill disclosed in PTL 4, a small diameter portion and a large diameter portion which are adjacent to each other in the axis direction of the drill are formed on the tip portion of the drill, and first, after the small diameter portion drills (rough machining) a work material, the large diameter portion cuts the work material and performs finishing machining on the inner circumference of the machined hole. That is, even in a case where a defect such as delamination or burrs occurs due to the drilling of the small diameter portion, the large diameter portion cutting the machined hole after the drilling of the small diameter portion removes the inner circumference of the machined hole for each portion in which the defect occurs.

The drill disclosed in PTL 5 is a so-called candle type drill, and in the drill, an end portion in the outside in the radial direction of a cutting edge (tip cutting edge) is formed to protrude toward the tip of the drill, and the end portion sharply cuts the inner circumference of a machined hole so as to suppress occurrence of delamination, burrs, or the like.

### Citation List

### Patent Literature

[PTL 1] United States Patent Application, Publication No. 2008/0019787
[PTL 2] Japanese Patent No. 5087744
[PTL 3] Japanese Patent No. 5258677
[PTL 4] Japanese Unexamined Patent Application, First Publication No. 2014-34079
[PTL 5] United States Patent No. 8540463

### Summary of Invention

### Technical Problem

However, the drills of the related art have the following problems.

In the drills of PTL 1 to PTL 3, it is possible to suppress the delamination by decreasing the thrust load when the drilling is performed. However, a radial load increases as the thrust load decreases. That is, since the drilling is performed while enlarging the machined hole of the work material in the radial direction, a diameter reduction phenomenon (spring back) of the machined hole occurs after the machining, and it is difficult to secure accuracy of the drilling. Specifically, when the drilling is performed by the drill, the inner circumference of the machined hole is pressed toward the outside in the radial direction and elastically deformed and is restoration-deformed after the machining, and the machined hole has a smaller hole-diameter than an expected hole-diameter. Accordingly, it is not possible to secure inner-diameter accuracy.

In addition, since the edge length of the cutting edge is long, a cutting resistance increases during the drilling. Moreover, since the length of the cutting edge in the axis direction of the drill is long, a stroke (a machined length in a drill feeding direction) during the drilling is lengthened, which influences machining efficiency (productivity).

In the drill disclosed in PTL 4, since the small diameter portion and the large diameter portion are disposed so as to be arranged in the axis direction of the drill, the stroke during the drilling is lengthened, which influences the machining efficiency (productivity).

In addition, since the length of the small diameter portion in the axis direction of the drill is short, it is not possible to sufficiently secure a regrinding allowance, and a tool life is shortened.

In the drill disclosed in PTL 5, since the end portion in the outside in the radial direction of the cutting edge (tip cutting edge) is formed to protrude toward the tip of the drill with respect to portions except for the end portion, a cutting resistance is largely applied to the end portion, and wear and chipping easily occurs.

The present invention is made in consideration of the above-described circumstances, and an object thereof is to provide a drill and a drill head in which quality and inner-diameter accuracy of the inner circumference of the machined hole bored in the work material can increase, machining efficiency can be increased by decreasing a cutting resistance during drilling, wear and chipping of the cutting edge can be prevented, a regrinding allowance can be sufficiently secured, and a tool life can be extended.

### Solution to Problem

In order to solve the above-described problems and achieve the object, the present invention suggests the following means.

An aspect of the present invention relates to a drill comprising: a drill main body which is rotated around an axis; a chip discharge flute which is formed on the outer circumference of the drill main body, and extends from the tip of the drill main body toward the posterior end of the drill main body in an axis direction; and a tip cutting edge which is formed on an intersection ridge portion between a wall surface facing in a rotation direction of the drill of the chip discharge flute and the tip surface of the drill main body, in which the tip cutting edge includes: a first tip cutting edge which extends toward the axially posterior end as it goes toward the outside in a radial direction orthogonal to the axis; and a second tip cutting edge which is disposed outside the first tip cutting edge in the radial direction, the second tip cutting edge extends toward the tip in the axis direction as it goes toward the outside in the radial direction or extends to be perpendicular to the axis, the radially inner end of the second tip cutting edge is disposed on the axially posterior end with respect to the radially outer end of the first tip cutting edge, and the radially outer end of the second tip cutting edge is disposed on a virtual extension line of the first tip cutting edge which extends toward the outside in the radial direction.

An aspect of the present invention relates to a drill head which is mounted on a tip portion of a tool main body, comprising: a head main body which is rotated around an axis along with the tool main body; a chip discharge flute which is formed on the outer circumference of the head main body, and extends from the tip of the head main body toward the posterior end of the head main body in an axis direction; and a tip cutting edge which is formed on an intersection ridge portion between a wall surface facing in a rotation direction of the drill of the chip discharge flute and the tip surface of the head main body, in which the tip cutting edge includes: a first tip cutting edge which extends toward the axially posterior end as it goes toward the outside in a radial direction orthogonal to the axis; and a second tip cutting edge which is disposed outside the first tip cutting edge in the radial direction, the second tip cutting edge extends toward the tip in the axis direction as it goes toward the outside in the radial direction or extends to be perpendicular to the axis, the radially inner end of the second tip cutting edge is disposed on the axially posterior end with respect to the radially outer end of the first tip cutting edge, and the radially outer end of the second tip cutting edge is disposed on a virtual extension line of the first tip cutting edge which extends toward the outside in the radial direction.

According to the drill and the drill head, the tip cutting edge positioned on the tip surface of the drill includes the first tip cutting edge, and the second tip cutting edge positioned outside the first tip cutting edge in the radial direction. Specifically, the first tip cutting edge is inclined toward the posterior end in the axis direction as it goes toward the outside in the radial direction. On the other hand, the second tip cutting edge is inclined toward the tip in the axis direction as it goes toward the outside in the radial direction or extends to be perpendicular to the axis. In addition, since the radially inner end of the second tip cutting edge is disposed to be closer to the posterior end in the axis direction than the radially outer end of the first tip cutting edge, and the radially outer end of the second tip cutting edge is positioned on the virtual extension line of the first tip cutting edge which extends toward the outside in the radial direction, the following effects are exerted.

That is, since the tip cutting edge separately includes the first tip cutting edge positioned inside the tip of the drill in the radial direction and the second tip cutting edge positioned outside the tip of the drill in the radial direction, a thrust load (a force which is applied from the drill to the work material in the drill feeding direction) generated when the first tip cutting edge drills the work material applies to a portion positioned inside the inner circumference (here, the inner circumference means a planned portion which will be the inner circumference of the machined hole after the machining, and hereinafter, referred to as an inner circumference planned portion) in the radial direction of the machined hole in the work material, and it is possible to prevent the thrust load from being transmitted to a drill outer circumferential portion (the inner circumference planned portion of the machined hole in the work material).

Specifically, in general, the thrust load applied to the work material during the drilling easily increases in the portion (the vicinity of the center portion in the radial direction including the axis) inside the tip of the drill in the radial direction, and in the drill of the related art, the thrust load applied from the vicinity of the center portion of the tip of the drill to the work material is transmitted to the inner circumference planned portion of the machined hole, and delamination easily occurs.

According to the present invention, since the first and second tip cutting edges are separated from each other, the thrust load applied from the vicinity of the center portion of the tip of the drill to the work material is prevented from being transmitted to the inner circumference planned portion of the machined hole. Accordingly, it is possible to prevent delamination from occurring in the inner circumference of the machined hole after the machining.

In addition, since the first and second tip cutting edges are separately formed so as to prevent the delamination, unlike the drill of the related art, it is not necessary to set the point angle of the drill to be small in order to prevent the delamination or it is not necessary to form an acute angle so as to sharpen the tip portion of the drill. Therefore, according to the present invention, it is possible to decrease the edge length of the tip cutting edge. Accordingly, it is possible to decrease a cutting resistance during the drilling.

Moreover, it is possible to decrease the length of the tip cutting edge in the axis direction, it is possible to decrease the stroke (the machined length in the drill feeding direction) during the drilling, and machining efficiency (productivity) is improved.

In a cutting force which is applied from the first and second tip cutting edges to the work material during drilling, a component force toward the tip (drill feeding direction) in the axis direction becomes a thrust load, and a component force in the radial direction becomes a radial force.

In addition, in the present invention, the second tip cutting edge of the tip cutting edge is inclined toward the tip in the axis direction as it goes toward the outside in the radial direction or extends to be perpendicular to the axis while the first tip cutting edge of the tip cutting edge is inclined toward the posterior end in the axis direction as it goes toward the outside in the radial direction.

Accordingly, the direction of the radial load applied from the first tip cutting edge to the work material and the direction of the radial load applied from the second tip cutting edge to the work material are different from each other while the directions of the thrust loads applied from the first and second tip cutting edges to the work material are the same as each other.

Specifically, the radial load of the second tip cutting edge is applied to the work material toward the inside in the radial direction or becomes approximately zero (is not applied) while the radial load of the first tip cutting edge is applied to the work material toward the outside in the radial direction.

Here, for example, in the drill of the related art, the point angle is set to be small or the tip portion of the drill is formed at an acute angle so as to sharpen the tip portion of the drill. Accordingly, since the radial load applied to the work material toward the outside in the radial direction increases, the drilling is performed while enlarging the machined hole in the radial direction, a diameter reduction phenomenon (spring back) of the machined hole occurs after the machining, and it is difficult to secure inner-diameter accuracy of the machined hole.

According to the present invention, the radial load toward the outside in the radial direction which is applied from the first tip cutting edge to the work material is decreased or is not further increased by the radial load which is applied in the direction different from the radial load and is applied from the second tip cutting edge to the work material. That is, the entire radial load of the tip cutting edge of the drill according to the present invention is further decreased than the entire radial load of the tip cutting edge of the drill of the related art. In addition, in the present invention, it is possible to dispose the second tip cutting edge near the inner circumference planned portion of the machined hole of the work material, and in this case, the radial load toward the inside in the radial direction of the second tip cutting edge can be directly applied to the inner circumference planned portion of the machined hole.

Accordingly, it is possible to effectively prevent the diameter reduction phenomenon from occurring in the inner circumference of the machined hole, and it is possible to increase inner-diameter accuracy of the machine hole.

Since the second tip cutting edge extends toward the tip in the axis direction as it goes toward the outside in the radial direction or extends to be perpendicular to the axis, the second tip cutting edge sharply cuts the vicinity of the inner circumference planned portion of the machine hole.

In addition, for example, in a case where the chip discharge flute has a spiral shape which is gradually twisted toward the opposite to the rotation direction of the drill as it goes from the tip in the axis direction toward the posterior end, the second tip cutting edge is gradually inclined toward the posterior end in the axis direction as it goes inward from the radially outer end, a radial rake angle (rake angle in the radial direction) of the second tip cutting edge can be easily set to a positive angle larger than the radial rake angle of the first tip cutting edge, and it is possible to further increase sharpness of the second tip cutting edge.

Accordingly, it is possible to effectively prevent burrs or the like from occurring in the inner circumference of the machined hole, and it is possible to increase quality of the inner circumference of the machined hole.

In addition, since the radially outer end of the second tip cutting edge is positioned on the virtual extension line of the first tip cutting edge, the first and second tip cutting edges approximately simultaneously cut the work material during the drilling.

Accordingly, an excessive cutting resistance is not applied to the second tip cutting edge during the drilling, and as described above, it is possible to prevent wear and chipping of the second tip cutting edge while sufficiently increasing the sharpness of the second tip cutting edge.

In addition, since the radially outer end of the second tip cutting edge is positioned on the virtual extension line of the first tip cutting edge, the first and second tip cutting edges are not disposed to be largely separated from each other in the axis direction.

Accordingly, it is possible to reliably obtain the above-described effect by which the stroke can be decreased during the drilling.

In addition, when the drill is manufactured, since the radially outer end of the second tip cutting edge is positioned on the virtual extension line of the first tip cutting edge, for example, it is possible to easily form the first and second tip cutting edges by forming a recessed portion on a portion of the entire edge length of the tip cutting edge. Accordingly, it is possible to easily manufacture the drill.

In addition, since the radially outer end of the second tip cutting edge is positioned on the virtual extension line of the first tip cutting edge, it is possible to easily secure large regrinding allowance of the tip cutting edge. Accordingly, it is possible to lengthen the tool life.

Hereinbefore, according to the above-described invention, it is possible to improve the quality and the inner-diameter accuracy of the inner circumference of the machined hole bored in the work material, the cutting resistance is decreased during the drilling, it is possible to improve the machining efficiency, and it is possible to decrease wear and chipping of the cutting edge, to sufficiently secure the regrinding allowance, and to lengthen the tool life.

In the drill, the tip cutting edge may include a third tip cutting edge which is disposed outside the second tip cutting edge in the radial direction, and the third tip cutting edge may extend along the virtual extension line.

In this case, the above-described remarkable effects can be obtained by the first and second tip cutting edges, the third tip cutting edge cuts the work material approximately simultaneously with the first and second tip cutting edges, and it is possible to stably improve the quality and the inner-diameter accuracy of the inner circumference of the machined hole.

In addition, since the third tip cutting edge is provided between the radially outer end of the second tip cutting edge and the tip (leading edge) of the peripheral cutting edge extending along the chip discharge flute, it is possible to prevent a sharp corner portion from being formed between the tip cutting edge and the peripheral cutting edge by the third tip cutting edge, and it is possible to connect the tip cutting edge and the peripheral cutting edge to each other at a corner portion having an obtuse angle. That is, since it is possible to sufficiently increase the strength of the edge tip in the connection portion between the tip cutting edge and the peripheral cutting edge, wear and chipping of the cutting edge is significantly decreased.

Particularly, for example, in a case where drilling is performed on a composite material in which a plate of metal such as titanium or aluminum is laminated on a CFRP (carbon fiber reinforced resin) or a work material configured of a metal material having high extensibility or the like, preferably, it is possible to stably cut the work material with high accuracy by adopting the above-described configuration.

In the drill, the radially inner end of the second tip cutting edge may be disposed on the inside in the radial direction or at the same position in the radial direction with respect to the radially outer end of the first tip cutting edge.

In this case, since drilling is performed such that the first tip cutting edge and the second tip cutting edge overlap each other in the radial direction, remainder does not occur between the first and second tip cutting edges. That is, it is possible to prevent the remainder from occurring between the radially outer end of the first tip cutting edge and the radially inner end of the second tip cutting edge without applying a function of the cutting edge to a connection portion such as a ridge which connects the radially outer end of the first tip cutting edge and the radially inner end of the second tip cutting edge to each other.

Accordingly, for example, in a case where the configuration of the present invention is applied to a drill having multiple cutting edges such as two cutting edges or three cutting edges, separation positions (positions corresponding to the radially outer end of the first tip cutting edge and the radially inner end of the second tip cutting edge) between the first and second tip cutting edges in the cutting edges (tip cutting edges) adjacent to each other in the circumferential direction are not required to be deviated to each other in the edge length direction.

Specifically, for example, in the drill head disclosed in Japanese Unexamined Patent Application, First Publication No. H11-129109, if positions of nicks are not deviated to each other in the edge length direction in the cutting edges (tip cutting edges) adjacent to each other in the circumferential direction, a remainder occurs.

According to the configuration of the present invention, since the remainder does not occur in each of the tip cutting edges adjacent to each other in the circumferential direction, it is possible to relatively freely dispose the first and second tip cutting edges at expected positions. Accordingly, it is possible to easily cope with requirements of various drills.

In addition, particularly, in a case where a drill adopting the above-described configuration of the present invention drills CFRP as the work material, remarkable effects can be exerted.

In the drill, preferably, a ridge which connects the radially outer end of the first tip cutting edge and the radially inner end of the second tip cutting edge is formed, and an angle θ1 which is formed between the axis and the ridge is 10 degrees or less in a side view in which the drill main body is viewed in the radial direction.

In this case, in acute angles and obtuse angles which are formed between the axis and the ridge in a side view of the drill, since the angle θ1 of the acute angle is 10 degrees or less, the following effects are exerted.

That is, it is possible to prevent a remainder from occurring between the first and second tip cutting edges, and when the second tip cutting edge is formed, it is possible to prevent stiffness of the tip of the drill from being decreased due to a large recessed portion being notched toward the inside in the radial direction or the like.

In the drill, the radially inner end of the second tip cutting edge may be disposed on the outside in the radial direction with respect to the radially outer end of the first tip cutting edge, the tip cutting edge may include a fourth tip cutting edge which connects the radially outer end of the first tip cutting edge and the radially inner end of the second tip cutting edge, and the fourth tip cutting edge may extend toward the axially posterior end as it goes toward the outside in the radial direction.

Since the fourth tip cutting edge which connects the first tip cutting edge and the second tip cutting edge to each other is disposed therebetween, it is possible to more reliably prevent a remainder from occurring between the first and second tip cutting edges.

Accordingly, for example, in a case where the configuration of the present invention is applied to a drill having multiple cutting edges such as two cutting edges or three cutting edges, separation positions (positions at which the fourth tip cutting edges are disposed) between the first and second tip cutting edges in the cutting edges (tip cutting edges) adjacent to each other in the circumferential direction are not required to be deviated to each other in the edge length direction.

In this way, according to the configuration of the present invention, since a remainder does not occur in each of the tip cutting edges adjacent to each other in the circumferential direction, it is possible to relatively freely dispose the first and second tip cutting edges at expected positions. Accordingly, it is possible to easily cope with requirements of various drills.

In addition, in a case where a drill adopting the above-described configuration of the present invention drills a composite material (particularly, a metal plate is disposed on the end portion of the rear side through which the drill passes) in which a plate of metal such as titanium or aluminum is laminated on the CFRP or a metal material having high extensibility or the like, as the work material, particularly, remarkable effects can be exerted.

In the drill, an angle θ2 which is formed between the axis and the fourth tip cutting edge may be 30 degrees or less in a side view in which the drill main body is viewed in the radial direction.

In this case, in acute angles and obtuse angles which are formed between the axis and the fourth tip cutting edge in a side view of the drill, since the angle θ2 of the acute angle is 30 degrees or less, the following effects are exerted.

That is, since the angle θ2 is 30 degrees or less, the fourth tip cutting edge is not largely inclined to the axis and extends so as to approximately follow the axis, and it is possible to shorten the edge length of the fourth tip cutting edge. Accordingly, it is possible to lengthen the edge length of the second tip cutting edge, and effects generated by providing the above-described second tip cutting edge are more remarkable.

In the drill, a point angle α of the drill corresponding to an angle which is two times an acute angle which is formed between the first tip cutting edge and the axis in a side view in which the drill main body is viewed in the radial direction may be 100 degrees or more and 170 degrees or less.

In this case, since the point angle α of the drill is 100 degrees or more, the point angle α is not excessively small, and it is possible to prevent a radial load (a force which is applied to the work material toward the outside in the radial direction) from being excessively increased during the drilling. Accordingly, the effects by which the diameter reduction phenomenon of the machined hole after the machining is prevented are more remarkable.

In addition, since the point angle α of the drill is 170 degrees or less, the point angle α is not excessively large, and it is possible to prevent a thrust load (a force which is applied to the work material in the drill feeding direction) from being excessively increased during the drilling. Accordingly, effects by which the delamination is prevented are more reliably exerted.

In the drill, when a diameter of a rotation locus which is obtained by rotating the tip cutting edge in the circumferential direction around the axis is set to φD, preferably, the radially outer end of the second tip cutting edge is disposed within a range which is φD × 10% or less from the radially outer end of the tip cutting edge.

In this case, since the radially outer end of the second tip cutting edge is disposed within a range of φD × 10% or less from the outermost end of the entire tip cutting edge in the radial direction, the following effects are exerted.

That is, it is possible to dispose the second tip cutting edge near the inner circumference planned portion of the machined hole of the work material, and the radial load toward the inside in the radial direction of the second tip cutting edge can be directly applied to the inner circumference planned portion of the machined hole.

Accordingly, it is possible to effectively prevent the diameter reduction phenomenon from occurring in the inner circumference of the machined hole, and it is possible to increase inner-diameter accuracy of the machine hole.

Moreover, since the second tip cutting edge extends toward the tip in the axis direction as it goes toward the outside in the radial direction or extends to be perpendicular to the axis, the second tip cutting edge sharply cuts the vicinity of the inner circumference planned portion of the machine hole.

Accordingly, it is possible to effectively prevent burrs or the like from occurring in the inner circumference of the machined hole, and it is possible to increase quality of the inner circumference of the machined hole.

In the drill, when a diameter of a rotation locus which is obtained by rotating the tip cutting edge in the circumferential direction around the axis is set to φD, preferably, the radially outer end of the first tip cutting edge is disposed within a range which is φD × 25% or less from the radially outer end of the tip cutting edge.

In this case, since the radially outer end of the first tip cutting edge is disposed within a range of φD × 25% or less from the outermost end of the entire tip cutting edge in the radial direction, the following effects are exerted.

That is, the edge length of the first tip cutting edge can be secured approximately half or more of the entire edge length of the tip cutting edge, and when the second tip cutting edge disposed outside the first tip cutting edge in the radial direction is formed, it is possible to prevent stiffness of the tip of the drill from being decreased due to a large recessed portion being notched or the like.

In the drill, preferably, an angle β which is formed between a virtual plane perpendicular to the axis and the second tip cutting edge is 25 degrees or less in a side view in which the drill main body is viewed in the radial direction.

In this case, in acute angles and obtuse angles which are formed between the virtual plane perpendicular to the axis and the second tip cutting edge in a side view of the drill, since the angle β of the acute angle is 25 degrees or less, the following effects are exerted.

That is, it is possible to prevent the position of the radially inner end of the second tip cutting edge in the axis direction from being largely separated from the first tip cutting edge toward the axially posterior end. Accordingly, when the second tip cutting edge is formed, it is possible to prevent stiffness of the tip of the drill from being decreased due to a large recessed portion being notched or the like. In addition, effects by which the stroke can be decreased during the drilling are more reliably exerted.

In the drill, preferably, a gash rake face which is parallel to the axis is formed on a tip portion continued to the tip surface via the tip cutting edge on the wall surface facing in the rotation direction of the drill of the chip discharge flute, and the tip cutting edge extends in the radial direction orthogonal to the axis in a front view of the drill in which the drill main body is viewed from the tip toward the posterior end in the axis direction.

In the drill head, preferably, a gash rake face which is parallel to the axis is formed on a tip portion continued to the tip surface via the tip cutting edge on the wall surface facing in the rotation direction of the drill of the chip discharge flute, and the tip cutting edge extends in the radial direction orthogonal to the axis in a front view of the drill in which the head main body is viewed from the tip toward the posterior end in the axis direction.

In this case, since the gash rake face of the chip discharge flute which becomes the rake face of the tip cutting edge is formed so as to be parallel to the axis of the drill main body, an axial rake angle (a rake angle in the axis direction) of the tip cutting edge becomes a negative angle (0 degree). In addition, the tip cutting edge extends in the radial direction of the drill main body in a front view of the drill. That is, the tip cutting edge is set to be zero in a center height and the tip cutting edge is not set to center height ascending or center height descending.

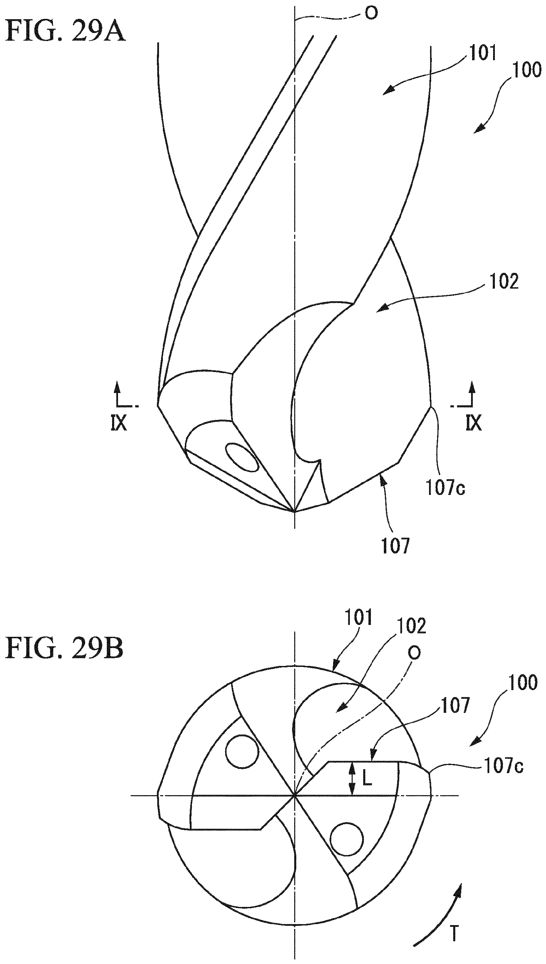

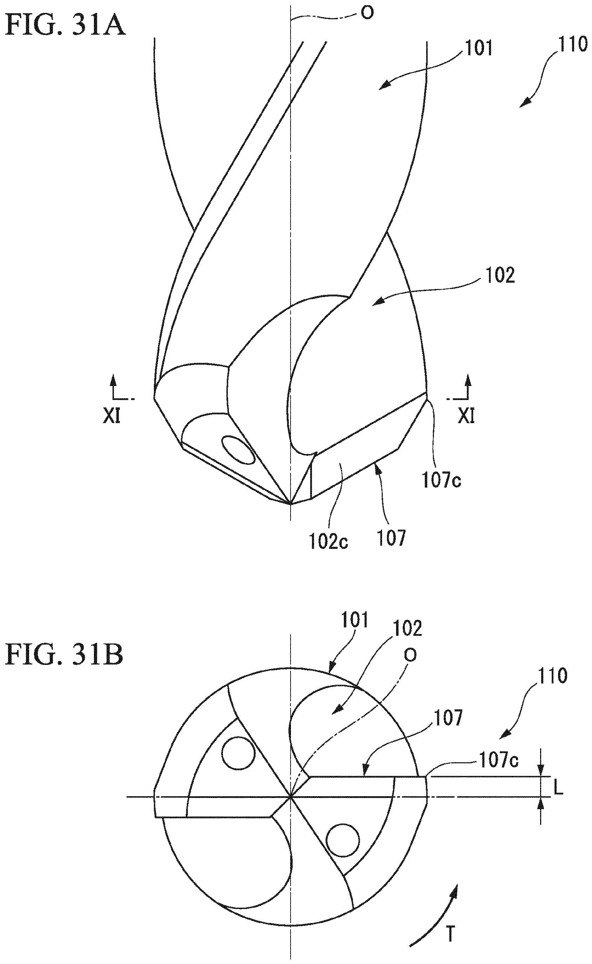

Here, the "center height" is described. As is well known, the center height (center-height dimension) is a distance in which the tip cutting edge is separated from a virtual straight-line which is parallel to the edge length direction of the tip cutting edge and passes through the axis in a front view of the drill. Specifically, in drills 100 and 110 of the related art shown in FIGS. 29B and 31B, a distance L in which the tip cutting edge 107 is separated from the virtual straight-line which is parallel to the edge length direction of the tip cutting edge 107 and passes through the axis O is the center height. In addition, a case where the tip cutting edge 107 is positioned in the rotation direction T of the drill with respect to the virtual straight-line is the "center height ascending", and a case where the tip cutting edge 107 is positioned on the opposite to the rotation direction T of the drill with respect to the virtual straight-line is the "center height descending".

The drills 100 and 110 of the related art are the center height ascending.

When effects according to the configuration of the present invention are described, first, problems of the drills 100 and 110 of the related art are specifically described using FIGS. 29A to 33 attached to the present specification.

Each of the drills 100 and 110 includes a drill main body 101 which is rotated around an axis O, a chip discharge flute 102 which is formed on the outer circumference of the drill main body 101 and extends from the tip of the drill main body 101 toward the posterior end thereof in the axis O direction, and a tip cutting edge 107 which is formed on an intersection ridge portion between a wall surface facing in a rotation direction T of a drill of the chip discharge flute 102 and the tip surface of the drill main body 101.

In addition, a portion of the tip cutting edge 107 which is closely related to finishing accuracy of the inner circumference of the machined hole which is subjected to the drilling is the vicinity of the radially outer end (outer circumferential corner) 107c in the tip cutting edge 107.

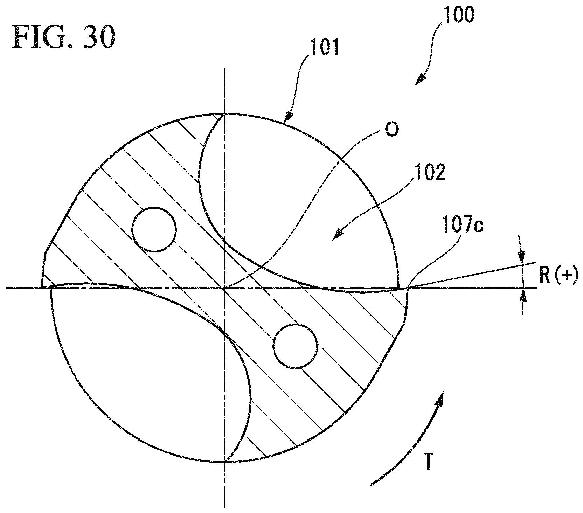

In the drill 100 which is shown in FIGS. 29A, 29B, and 30, the chip discharge flute 102 is opened to the tip surface of the drill main body 101, is gradually twisted toward the opposite to the rotation direction T of the drill as it goes from the tip surface toward the posterior end in the axis O direction, and extends in a spiral shape. Accordingly, the axial rake angle (the rake angle in the axis direction) of the tip cutting edge 107 is a positive angle. In addition, as shown in FIG. 30, the radial rake angle (the rake angle in the radial direction) R of the outer circumferential corner 107c of the tip cutting edge 107 is a positive angle (+).

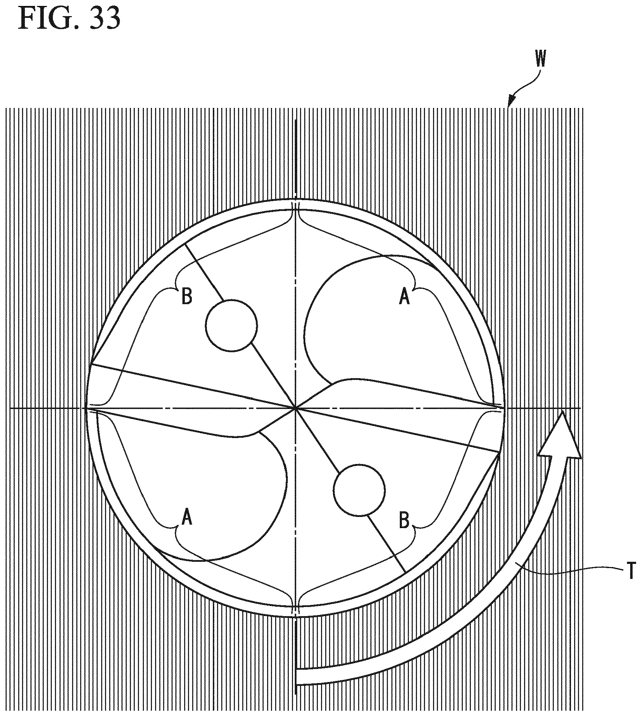

If a work material such as CFRP is dilled using the drill 100, burrs or the like easily occur in a region (a circumferential region) shown by a reference numeral A in the inner circumference of the machined hole of a work material W shown in FIG. 33.

That is, the work material W configured of CFRP or the like has a direction of fibers, and in FIG. 33, the direction of the fibers is an up-down direction (vertical direction). Accordingly, if the radial rake angle R of the outer circumferential corner 107c of the tip cutting edge 107 is a positive angle (+), the edge tip cuts the region A of the inner circumference of the machined hole at an acute angle (edge tip sharply cuts in a direction opposite to the lines of the fibers), the fibers are easily peeled out, and burrs or the like occur.

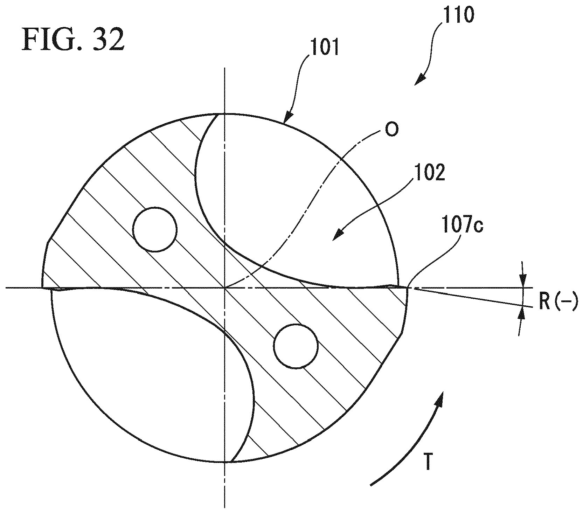

In addition, in the drill 110 shown in FIGS. 31A, 31B, and 32, a gash rake face 102c which is parallel to the axis O is formed on the tip portion of the chip discharge flute 102. Accordingly, the axial rake angle of the tip cutting edge 107 is a negative angle (0 degree). In addition, as shown in FIG. 32, the radial rake angle R of the outer circumferential corner 107c of the tip cutting edge 107 is a negative angle (-) which is smaller than 0 degree.

If a work material such as CFRP is dilled using the drill 110, burrs or the like easily occur in a region (a circumferential region) shown by a reference numeral B in the inner circumference of the machined hole of a work material W shown in FIG. 33.

That is, if the radial rake angle R of the outer circumferential corner 107c of the tip cutting edge 107 is a negative angle (-), the edge tip cuts the region B of the inner circumference of the machine hole at an obtuse angle (the edge tip cuts the region B in the directions of the lines of fibers but less sharply cuts the region B), a remainder of fibers easily occurs, and burrs or the like occur.

Accordingly, occurrence of burrs or the like over the entire circumferential region of the inner circumference of the machined hole being prevented so as to improve finishing accuracy is preferable.

In the configuration of the present invention, the tip cutting edge extends in the radial direction in a front view of the drill, and the center height is approximately zero. In addition, the "tip cutting edge extending in the radial direction" indicates that an angle formed between a virtual straight-line passing through the radially outer end (outer circumferential corner) of the tip cutting edge and the axis in the front view of the drill, and the edge length direction of the tip cutting edge becomes a value (approximately 0 degree) close to zero, and specifically, for example, the angle is 5 degrees or less (0 degree to 5 degrees).

In this way, if the axial rake angle of the tip cutting edge is a negative angle (0 degree) and the tip cutting edge extends in the radial direction (the center height is zero), the radial rake angle of the outer circumferential corner of the tip cutting edge is a negative angle (0 degree).

Accordingly, if a work material such as CFRP or the like is drilled by the drill and the drill head having the configurations of the present invention, occurrence of burrs or the like is significantly decreased in the region (circumferential region) shown by the reference numeral A and the region (circumferential region) shown by the reference numeral B in the inner circumference of the machined hole of the work material W shown in FIG. 33.

Specifically, in the related art, the edge tip cuts the region A of the inner circumference of the machined hole of the work material W at an acute angle (the edge tip sharply cuts in the direction opposite to the line of fibers), and the fibers are easily peeled out. However, in the configuration of the present invention, since the edge tip perpendicularly cuts the region A, the fibers are prevented from being peeled out. In addition, in the related art, the edge tip cuts the region B at an obtuse angle (the edge tip cuts the region B in the direction of the line of fibers but less sharply cuts the region B), a remainder of fibers easily occurs. However, in the configuration of the present invention, since the edge tip perpendicularly cuts the region B, occurrence of the remainder of fibers is prevented.

Accordingly, in the drill and the drill head having the above-described configuration of the present invention, it is possible to prevent occurrence of burrs or the like over the entire circumferential region of the inner circumference of the machined hole.

Hereinbefore, according to the configuration of the present invention, it is possible to stably increase finishing accuracy of the inner circumference of the machined hole which is drilled in the work material.

In the drill, a portion of the chip discharge flute which is positioned to be closer to the axially posterior end than the gash rake face may extend so as to be gradually twisted toward the opposite to the rotation direction of the drill as it goes from the gash rake face toward the axially posterior end.

In this case, the chip discharge flute is a twisted flute which extends in a spiral shape in the outer circumference of the drill main body. Accordingly, chip discharging properties are favorably maintained.

In the drill, the chip discharge flute may extend to be parallel to the axis.

In this case, the chip discharge flute is a straight flute which linearly extends on the outer circumference of the drill main body. Accordingly, the chip discharge flute is easily formed when the drill is manufactured.

In the drill, preferably, a recessed portion which extends from at least the second tip cutting edge of the tip cutting edge toward the opposite to the rotation direction of the drill and which is recessed toward the axially posterior end is formed on the tip surface, a coolant hole which penetrates the drill main body in the axis direction is formed inside the drill main body, and at least a portion of the coolant hole which opens to the tip surface is disposed in the recessed portion.

In the drill head, a recessed portion which extends from at least the second tip cutting edge of the tip cutting edge toward the opposite to the rotation direction of the drill and which is recessed toward the axially posterior end is formed on the tip surface, a coolant hole which penetrates the head main body in the axis direction is formed inside the head main body, and at least a portion of the coolant hole which opens to the tip surface is disposed in the recessed portion.

In this case, a coolant (compressed air, or an oil or water-soluble cutting fluid) which flows from the coolant hole into the recessed portion stably and easily flows from the recessed portion to the second tip cutting edge and the tip cutting edge portion (outer circumferential corner or the like) positioned outside the second tip cutting edge in the radial direction, and to the tip (leading edge) or the like of the peripheral cutting edge by effects of a centrifugal force during the drilling, or the like.

Specifically, the coolant is supplied to the cutting edge (tip cutting edge and the peripheral cutting edge) and the vicinity thereof while flowing from the tip surface (tip flank face) to the chip discharge flute (rake face) adjacent to the tip surface in the rotation direction of the drill through the inside of the recessed portion. That is, the coolant reaches the cutting edge from the tip surface without being subjected to influences of the chips which flow on the rake face. Accordingly, the cutting edge and the vicinity (machined portion) of the inner circumference of the machined hole of the work material are effectively cooled, and it is possible to remarkably improve machining accuracy.

Specifically, in the related art, after a coolant flows out from the coolant hole opened to the tip surface of the drill, the coolant unstably flows in a state where the direction of the flow is not determined and is supplied to the cutting edge through the inside of the chip discharge flute positioned on the opposite to the tip surface in the rotation direction of the drill, the outer circumferential surface of the drill, or the like. Accordingly, a useless coolant which does not reach the vicinity of the cutting edge increases, and it is not possible to obtain sufficient cooling effects. In addition, it is difficult to increase discharging properties with respect to the chips inside the chip discharge flute. Particularly, for example, in a case where a work material such as CFRP or a composite material in which a metal plate is laminated on CFRP is drilled, the temperature of the machined portion is increased due to cutting heat, the CFRP is embrittled, and burrs or the delamination easily occur. In addition, since chips stay in the machined portion, the bitten chips scratch the inner circumference of the machined hole, the machined surface is damaged, and machining quality decreases.

According to the configuration of the present invention, the coolant flows from the position near the cutting edge into the chip discharge flute adjacent to the tip surface in the rotation direction of the drill through the inside of the recessed portion without waste. Accordingly, the coolant is stably supplied to the machined portion, an increase in the temperature of the machined portion is significantly suppressed, and it is possible to stably increase machining quality. In addition, since the coolant stably flows to the machined portion, it is possible to prevent the chips from being stayed in the machined portion, and it is possible to significantly prevent the machining quality from being decreased due to biting of chips or the like.

In addition, it is possible to effectively prevent wear or damage of the outer circumference corner of the tip cutting edge or the leading edge of the peripheral cutting edge in which a cutting load easily increases, and it is possible to favorably maintain cutting performance over a long period.

In the drill, preferably, the recessed portion extends from the open portion of the coolant hole in the rotation direction of the drill and toward the opposite to the rotation direction of the drill.

In the drill head, preferably, the recessed portion extends from the open portion of the coolant hole in the rotation direction of the drill and toward the opposite to the rotation direction of the drill.

In this case, since the recessed portion extends from the open portion of the coolant hole in the rotation direction of the drill, the coolant flowing in the recessed portion stably flows from the tip surface of the drill to the chip discharge flute adjacent to the tip surface in the rotation direction of the drill, and the above-described effects are remarkably exerted.

In addition, since the recessed portion extends from the open portion of the coolant hole toward the opposite to the rotation direction of the drill, the coolant flowing in the recessed portion stably flows into the chip discharge flute adjacent to the opposite to the tip surface in the rotation direction of the drill. Accordingly, discharging of the chips inside the chip discharge flute is promoted, it is possible to increase chip discharging properties, chip clogging is significantly suppressed, and it is possible to continuously and favorably maintain drilling with high accuracy.

In the drill, preferably, the recessed portion includes a pair of wall surfaces which are connected to each other at the deepest portion of the recessed portion, and has a V-shaped recessed cross section, and the open portion of the coolant hole is opened to both of the pair of wall surfaces.

In the drill head, preferably, the recessed portion includes a pair of wall surfaces which are connected to each other at the deepest portion of the recessed portion, and has a V-shaped recessed cross section, and the open portion of the coolant hole is opened to both of the pair of wall surfaces.

In this case, since the coolant hole is opened to both of the pair of wall surfaces which are connected to each other at the deepest portion of the recessed portion, the coolant flowing out from the coolant hole flows along each of the wall surfaces so as to be uniformly distributed, deviation in the flow in the recessed portion decreases to from at least a stable flow, and the coolant flows out from the recessed portion and is stably supplied to the machined portion. Accordingly, the above-described effects are more remarkably exerted.

### Advantageous Effects of Invention

According to the drill and the drill head of the present invention, quality and inner-diameter accuracy of the inner circumference of the machined hole bored in the work material can increase, machining efficiency can be increased by decreasing a cutting resistance during drilling, wear and chipping of the cutting edge can be prevented, a regrinding allowance can be sufficiently secured, and a tool life can be extended.

### Brief Description of Drawings

FIG. 1 is a side view showing a drill according to a first embodiment of the present invention.
FIG. 2 is a view (front view) when a tip surface of the drill of FIG. 1 is viewed from the front.
FIG. 3 is a side view in which a tip portion of the drill of FIG. 1 is shown in an enlarged manner.
FIG. 4 is a side view in which the tip portion of the drill of FIG. 1 is shown in an enlarged manner, and is a view when the tip portion is viewed in a direction different from that of FIG. 3.
FIG. 5 is a view in which a V portion of FIG. 3 is shown in an enlarged manner, and is a view for explaining a cutting force (thrust load and radial load) which is applied from the drill to a work material during drilling.
FIG. 6 is a view for explaining an angle, a radial position, or the like of each component of the drill according to the first embodiment of the present invention.
FIG. 7 is a side view showing a modification example of the drill according to the first embodiment of the present invention.
FIG. 8 is a view (front view) when a tip surface of the drill of FIG. 7 is viewed from the front.
FIG. 9 is a side view in which a tip portion of the drill of FIG. 7 is shown in an enlarged manner.
FIG. 10 is a side view in which the tip portion of the drill of FIG. 7 is shown in an enlarged manner, and is a view when the tip portion is viewed in a direction different from that of FIG. 9.
FIG. 11 is a side view showing a drill according to a second embodiment of the present invention.
FIG. 12 is a view (front view) when a tip surface of the drill of FIG. 11 is viewed from the front.
FIG. 13 is a side view in which a tip portion of the drill of FIG. 11 is shown in an enlarged manner.
FIG. 14 is a side view in which the tip portion of the drill of FIG. 11 is shown in an enlarged manner, and is a view when the tip portion is viewed in a direction different from that of FIG. 13.
FIG. 15 is a view for explaining an angle, a radial position, or the like of each component of the drill according to the second embodiment of the present invention.
FIG. 16 is a side view showing a modification example of the drill according to the second embodiment of the present invention.
FIG. 17 is a view (front view) when a tip surface of the drill of FIG. 16 is viewed from the front.
FIG. 18 is a side view in which a tip portion of the drill of FIG. 16 is shown in an enlarged manner.
FIG. 19 is a side view in which the tip portion of the drill of FIG. 16 is shown in an enlarged manner, and is a view when the tip portion is viewed in a direction different from that of FIG. 18.
FIG. 20A is a side view showing a drill according to a reference example of the present invention.
FIG. 20B is a front view showing the drill according to the reference example of the present invention.
FIG. 21 is a view showing a cross section taken along line II-II of FIG. 20A.
FIG. 22A is a side view showing a drill according to a third embodiment of the present invention.
FIG. 22B is a front view showing a drill according to the third embodiment of the present invention.
FIG. 23A is a side view showing a modification example of the drill according to the third embodiment of the present invention.
FIG. 23B is a front view showing the modification example of the drill according to the third embodiment of the present invention.
FIG. 24 is a view in which main portions of the drill of FIG. 23A are shown in an enlarged manner, and is a view for explaining a cutting force (thrust load and radial load) which is applied from the drill to a work material during drilling.
FIG. 25 is a view for explaining an angle, a radial position, or the like of each component of the drill shown in FIGS. 23A and 23B.
FIG. 26A is a side view showing a drill according to a fourth embodiment of the present invention.
FIG. 26B is a front view showing the drill according to the fourth embodiment of the present invention.
FIG. 27A is a side view showing the modification example of the drill according to the second embodiment of the present invention.
FIG. 27B is a front view showing the modification example of the drill according to the second embodiment of the present invention.
FIG. 28 is a front view showing the modification example of the drill according to the third embodiment of the present invention.
FIG. 29A is a side view showing a drill of the related art.
FIG. 29B is a front view showing the drill of the related art.
FIG. 30 is a view showing a cross section taken along line IX-IX of FIG. 29A.
FIG. 31A is a side view showing the drill of the related art.
FIG. 31B is a front view showing the drill of the related art.
FIG. 32 is a view showing a cross section taken along line XI-XI of FIG. 31A.
FIG. 33 is a view for explaining a region in which burrs or the like easily occur in an inner circumference of a machined hole drilled in a work material.

### Description of Embodiments

### <First Embodiment>

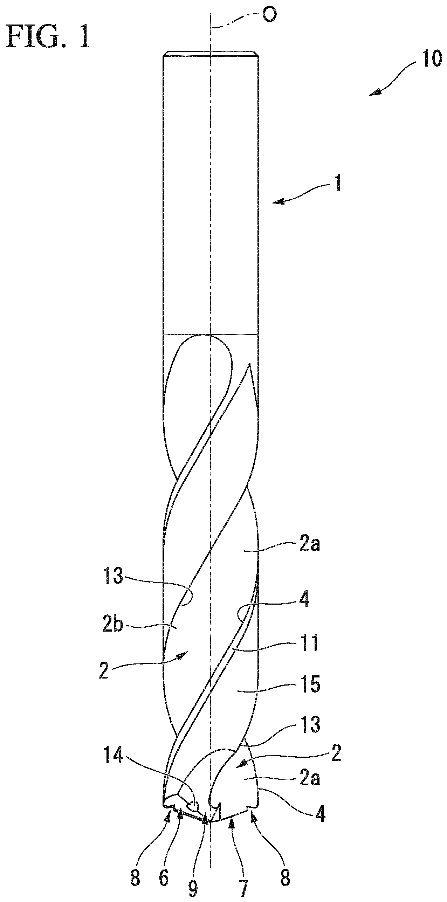

Hereinafter, a drill 10 according to a first embodiment of the present invention will be described with reference to FIGS. 1 to 6.

As shown in FIGS. 1 to 4, the drill 10 of the present embodiment includes a drill main body 1 which has an approximately columnar shape with an axis O as a center, and which is formed of a hard material such as cemented carbide. In the drill main body 1, the posterior end portion of the drill main body 1 in the axis O direction is a shank portion which has a columnar shape, and the tip portion thereof in the axis O direction is a cutting portion having a cutting edge. In addition, a tip cutting edge 7 and a peripheral cutting edge 4 described below are included in the cutting edge.

In the drill 10, the shank portion of the drill main body 1 is detachably mounted on a main shaft of a machining tool, a three-jaw chuck of a drilling machine and an electric drill, or the like, and the drill 10 is fed to the tip (lower side in FIG. 1) in the axis O direction while being rotated in a rotation direction T of the drill around the axis O, and cuts a work material by a cutting portion to perform drilling. In addition, for example, the work material includes a CFRP (carbon fiber reinforced resin) which is used in an aircraft part or the like, a composite material in which a plate of metal such as titanium or aluminum is laminated on the CFRP, a metal material having high extensibility, or the like.

In the present specification, the cutting portion side (lower side in FIG. 1) of the drill main body 1 in the axis O direction is referred to as a direction toward a tip, and the shank portion side (upper side in FIG. 1) which is opposite to the cutting portion and is held by a main shaft of the machining tool or the like is referred to as a direction toward a posterior end.

In addition, a direction orthogonal to the axis O is referred to as a radial direction, and in the radial direction, a direction approaching the axis O is referred to as the inside in the radial direction, and a direction which is away from the axis O is referred to as the outside in the radial direction.

In addition, a direction revolving around the axis O is referred to a circumferential direction, and in the circumferential direction, a direction in which the drill 10 rotates during cutting is referred to the rotation direction T of the drill, and a direction opposite to the rotation direction T of the drill is referred to as a opposite to the rotation direction T of the drill (counter direction of the rotation of the drill).

A chip discharge flute 2 which extends from the tip toward the posterior end in the axis O direction, and a peripheral cutting edge 4 which is formed on an intersection ridge portion between a wall surface 2a facing in the rotation direction T of the drill of the chip discharge flute 2 and the outer circumferential surface of the drill main body 1 are provided on the outer circumference of the drill main body 1.

In addition, a margin portion 11 which is continued to the opposite to the peripheral cutting edge 4 in the rotation direction T of the drill, extends along the peripheral cutting edge 4, and has the same diameter as that of the peripheral cutting edge 4 so as to be the outermost diameter portion in the cutting portion of the drill main body 1, and a body clearance 15 which is continued to the opposite to the margin portion 11 in the rotation direction T of the drill and has a diameter which is smaller than those of the peripheral cutting edge 4 and the margin portion 11 are formed on the outer circumferential surface except for the chip discharge flute 2 in the outer circumference of the drill main body 1.

In the present embodiment, multiple chip discharge flutes 2 are formed with gaps to each other on the outer circumference of the drill main body 1 in the circumferential direction, each of the chip discharge flutes 2 is opened to a tip surface 6 of the drill main body 1, is gradually twisted toward the opposite to the rotation direction T of the drill as it goes from the tip surface 6 toward the posterior end in the axis O direction, and extends in a spiral shape.

In addition, the chip discharge flutes 2 are disposed at equal intervals (equal pitches) on the outer circumference of the drill main body 1 in the circumferential direction so as to be positioned rotationally symmetrical with respect to the axis O. Specifically, the drill 10 of the present embodiment is a twist drill in which two chip discharge flutes 2 are disposed in the drill main body 1 so as to be rotationally symmetrical 180 degrees with respect to the axis O.

In FIG. 1, each of the chip discharge flutes 2 is opened to the tip surface 6 of the drill main body 1, extends the direction toward the posterior end, and terminates upward at the outer circumferential surface toward the outside in the radial direction in the vicinity of center portion (in the shown example, a portion positioned to be slightly closer to the posterior end than the center portion) in the axis O direction of the drill main body 1. In addition, in the drill main body 1, the range in which the chip discharge flute 2 is formed in the axis O direction becomes a cutting portion, and the portion closer to the posterior end than this range becomes the shank portion.

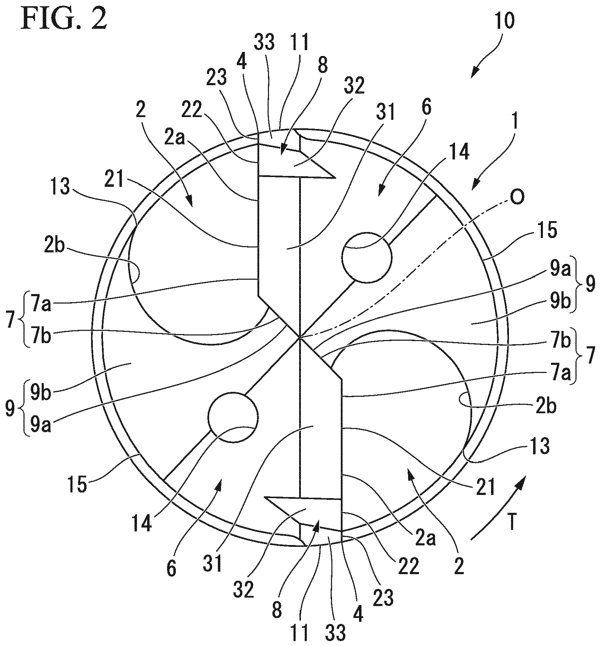

In FIG. 2, in the chip discharge flute 2, the inner circumference of the flute has a recessed curved surface shape, and the chip discharge flute 2 is formed to be recessed toward the inside in the radial direction and in the rotation direction T of the drill. In addition, the chip discharge flute 2 is formed such that the flute depth is deepest (the inner circumference of the flute is closest to the axis O) in the vicinity of the center portion in the circumferential direction.

In FIGS. 1, 3, and 4, in the peripheral cutting edge 4, the tip portion in the axis direction becomes a leading edge. Specifically, the outer diameter of the cutting portion of the drill main body 1 gradually and slightly decreases from the tip toward the posterior end in the axis O direction and a back taper is applied to the cutting portion. According to this, the outer diameter of the peripheral cutting edge 4 gradually decreases from the tip of the drill main body 1 toward the posterior end. However, the present invention is not limited to this, and a back taper may not be applied to the cutting portion of the drill main body 1.

In FIG. 2, the margin portion 11 is continued to the wall surface 2a facing in the rotation direction T of the drill of the chip discharge flute 2 and is formed to be positioned on a virtual cylindrical surface of an outer diameter which is approximately the same as the outermost diameter (a diameter φD of a circle of a rotation locus which is formed when the radially outer end of the tip cutting edge 7 rotates around the axis O) of the tip cutting edge 7 described below. In addition, in the drill main body 1, an intersection ridge portion between the wall surface 2a facing in the rotation direction T of the drill of the chip discharge flute 2 and the margin portion 11 becomes the peripheral cutting edge 4.

In FIGS. 1, 3, and 4, in the present embodiment, since the chip discharge flute 2 is formed so as to be twisted in a spiral shape as described above, each of the peripheral cutting edge 4 and the margin portion 11 along the chip discharge flute 2 is gradually twisted toward the opposite to the rotation direction T of the drill as it goes from the tip toward the posterior end in the axis O direction, and extends in a spiral shape. That is, the chip discharge flute 2, the peripheral cutting edge 4, and the margin portion 11 have the same helix angle (lead, axial inclination angle) as each other.

In FIG. 2, in the outer circumferential surface of the drill main body 1, a portion positioned between the margin portion 11 and the chip discharge flute 2 adjacent to the opposite to the margin portion 11 in the rotation direction T of the drill becomes the body clearance 15. The body clearance 15 is disposed so as to be retreated to the inside in the radial direction with respect to the rotation locus (a virtual circle corresponding to the outer diameter of the shank portion of the drill main body 1 shown in FIG. 2) around the axis O of the peripheral cutting edge 4.

Specifically, the body clearance 15 is continued to the opposite to the margin portion 11 in the rotation direction T of the drill on the outer circumferential surface of the drill main body 1 and has an outer diameter which is smaller than the outer diameter of the margin portion 11. In addition, in shown example, in the body clearance 15, a retreat amount (body clearance depth) from the rotation locus of the peripheral cutting edge 4 toward the inside in the radial direction is constant over the entire region in the circumferential direction. However, the present invention is not limited to this, and for example, in the body clearance 15, the retreat amount from the rotation locus of the peripheral cutting edge 4 toward the inside in the radial direction may gradually increase as it goes from the end portion in the rotation direction T of the drill toward the opposite to the rotation direction T of the drill.

In addition, in the outer circumference of the drill main body 1, an intersection ridge portion between the body clearance 15 and the wall surface 2b facing the opposite to the rotation direction T of the drill of the chip discharge flute 2 becomes a heel portion 13. The heel portion 13 is sharpened toward the opposite to the rotation direction T of the drill and has a ridge shape which extends along the chip discharge flute 2.

In FIGS. 1 to 4, the tip surface 6 facing the direction toward the tip of the drill 10 (drill feeding direction), a tip cutting edge 7 which is formed on the intersection ridge portion between the wall surface 2a facing in the rotation direction T of the drill of the chip discharge flute 2 and the tip surface 6, and a web thinning portion 9 which is positioned between the tip surface 6 and the chip discharge flute 2 which is adjacent to the opposite to the tip surface 6 in the rotation direction T of the drill are provided on the tip portion of the drill main body 1.

In FIG. 2, the tip surface (tip flank face) 6 includes a first flank face 31 which is inclined toward the posterior end in the axis O direction as it goes from a first tip cutting edge 21 which is positioned on the innermost side in the radial direction among first to third tip cutting edges 21 to 23 described below of the tip cutting edge 7 toward the opposite to the rotation direction T of the drill, a third flank face 33 which is inclined toward the posterior end in the axis O direction as it goes from the third tip cutting edge 23 which is positioned on the outermost side in the radial direction among the first to third tip cutting edges 21 to 23 toward the opposite to the rotation direction T of the drill, and a second flank face 32 which is inclined toward the posterior end in the axis O direction as it goes from the second tip cutting edge 22 which is positioned between the first tip cutting edge 21 and the third tip cutting edge 23 toward the opposite to the rotation direction T of the drill.

Since each of the first to third flank faces 31 to 33 is gradually inclined toward the posterior end in the axis O direction as it goes toward the opposite to the rotation direction T of the drill, each of clearance angles γ1 to γ3 is applied to each of the first to third tip cutting edges 21 to 23.

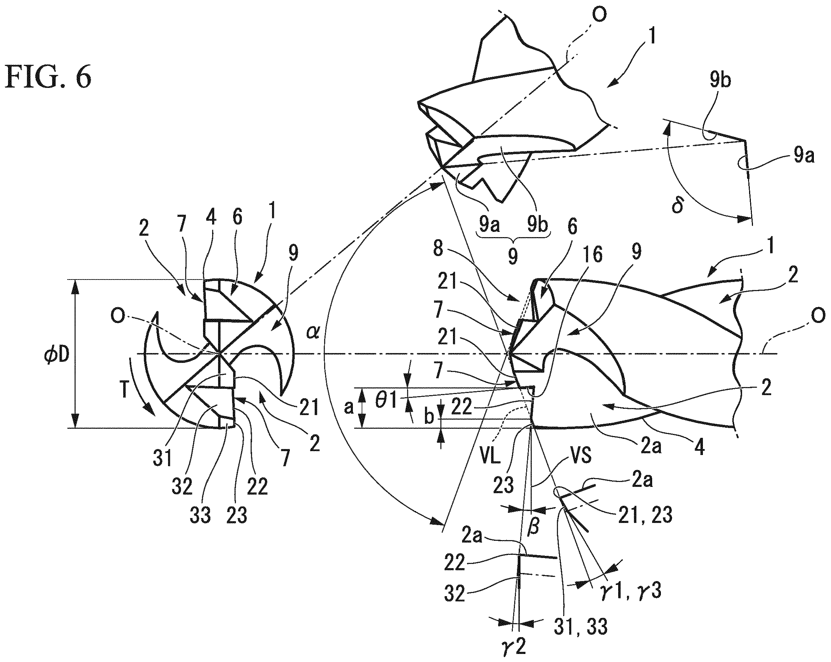

In FIG. 6, the clearance angle γ1 of the first flank face 31 and the clearance angle γ3 of the third flank face 33 are the same as each other. In addition, the clearance angle γ2 of the second flank face 32 is smaller than the clearance angle γ1 of the first flank face 31 and the clearance angle γ3 of the third flank face 33. In the present embodiment, for example, each of the clearance angles γ1 and γ3 is approximately 25 degrees, and for example, the clearance angle γ2 is approximately 5 degrees to 15 degrees.

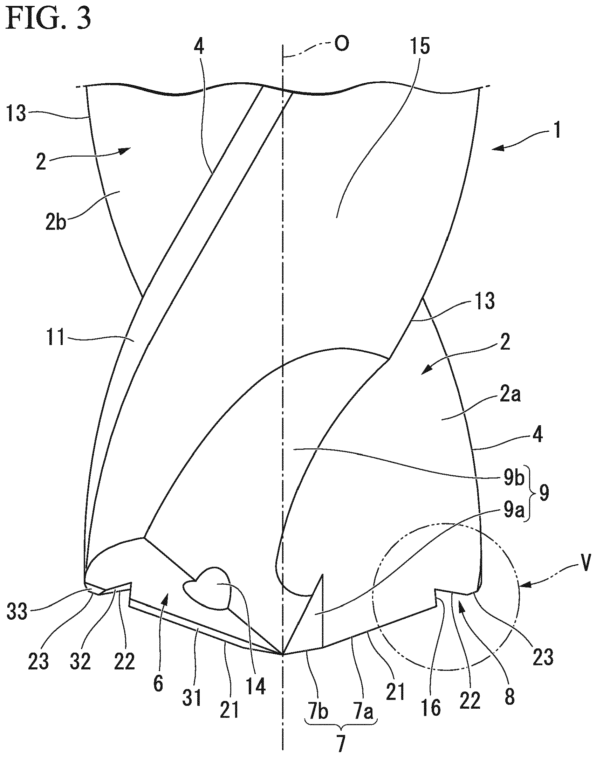

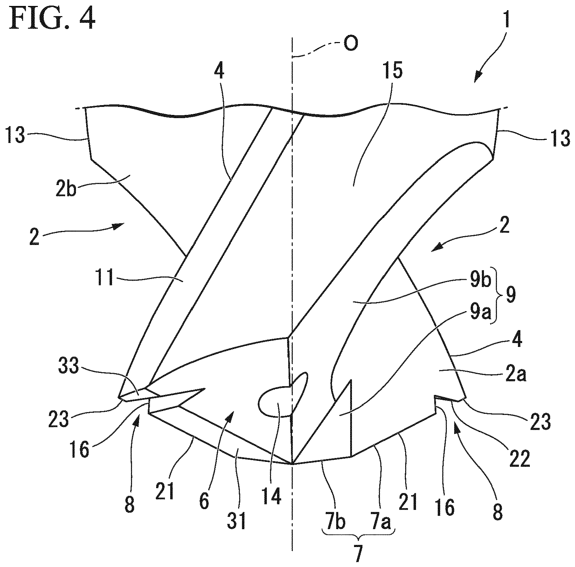

As shown in FIGS. 3 and 4, each of the first flank face 31 and the third flank face 33 is inclined toward the posterior end in the axis O direction as it goes toward the outside in the radial direction. In addition, the second flank face 32 is inclined toward the tip in the axis O direction as it goes toward the outside in the radial direction.

In FIG 2, the tip surface 6 includes a front portion which is continued to the opposite to the tip cutting edge 7 in the rotation direction T of the drill, in which the above-described first to third flank faces 31 to 33 are disposed, and which has a rectangular shape which is long in the radial direction, and a fan-shaped rear portion which is continued to the opposite to the front portion in the rotation direction T of the drill and has a clearance angle which is set to be larger than that of the front portion. However, the present invention is not limited to this, in the tip surface 6, the clearance angles of the front portion and the rear portion may be set to be the same as each other, and the front portion and the rear portion may be formed to be flush with each other.

In addition, the tip surface 6 includes a recessed portion 8 which extends from the tip cutting edge 7 toward the opposite to the rotation direction T of the drill and is formed to be recessed toward the posterior end in the axis O direction. In the present embodiment, the recessed portion 8 is formed in a flute shape which extends from the tip cutting edge 7 toward the opposite to the rotation direction T of the drill, and is formed from the front portion to the rear portion on the tip surface 6.

The recessed portion 8 includes a bottom surface which facing toward the tip in the axis O direction, and a wall surface facing the outside in the radial direction, and the bottom surface becomes the above-described second flank face 32.

In addition, coolant holes 14 are opened to the tip surface 6. Each of the coolant holes 14 extends so as to be twisted inside the drill main body 1 along the chip discharge flute 2 (at approximately the same lead as that of the chip discharge flute 2) and penetrates the drill main body 1 in the axis O direction. A coolant (compressed air, or an oil or water-soluble cutting agent) which is supplied from a main shaft of a machining tool or the like flows into the coolant hole 14, and the coolant flows out to the tip portion of the drill main body 1 and the machined portion of the work material.

In the present embodiment, the position of the coolant hole 14 which is opened to the tip portion of the drill main body 1 is set to be closer to the inside in the radial direction than the recessed portion 8. In addition, the coolant hole 14 is opened to the tip surface 6 and a thinning surface 9b described below.

In a front view of the drill shown in FIG. 2, the opening shape of the coolant hole 14 is a circular shape. However, the present invention is not limited to this, and for example, the opening shape may be a polygonal shape, an elliptical shape, or the like in addition to the circular shape.

The tip cutting edge 7 is formed on the intersection ridge portion between the tip portion of the wall surface 2a facing in the rotation direction T of the drill of the chip discharge flute 2 and the portion (the above-described front portion) which is continued to the opposite to the rotation direction T of the drill from the tip portion of the wall surface 2a in the tip surface 6 of the drill main body 1, the wall surface 2a is the rake face, and the tip surface 6 is the flank face. In addition, a thinning wall surface 9a described below is included in the wall surface 2a.

In addition, the tip cutting edge 7 includes a first tip cutting edge 21 which extends toward the posterior end in the axis O direction as it goes toward the outside in the radial direction, a second tip cutting edge 22 which is disposed outside the first tip cutting edge 21 in the radial direction, and a third tip cutting edge 23 which is disposed outside the second tip cutting edge 22 in the radial direction.

In a side view shown in FIG. 6 when the drill main body 1 is viewed in the radial direction, a point angle α of the drill 10 corresponding to an angle which is two times an acute angle in an acute angle and an obtuse angle which are formed between the first tip cutting edge 21 and the axis O is within a range from 100 degrees to 170 degrees. In addition, since the drill 10 of the present embodiment is a twist drill, the point angle α is the same as the angle which is formed between extension lines of the first tip cutting edges 21 of the pair of tip cutting edges 7 in the side view of the drill.

In addition, in FIG. 6, when a diameter (outermost diameter) of a rotation locus which is obtained by rotating the tip cutting edge 7 in the circumferential direction around the axis O is set to φD, the radially outer end of the first tip cutting edge 21 is disposed within a range which is φD × 25% or less from the radially outer end of the tip cutting edge 7. Specifically, in the side view of FIG. 6, a distance (length in the radial direction) indicated by a reference numeral a is set to φD × 25% or less.

In FIGS. 3 and 6, the second tip cutting edge 22 of the tip cutting edge 7 extends toward the tip in the axis O direction as it goes toward the outside in the radial direction or extends to be perpendicular to the axis O. In the example shown in the present embodiment, the second tip cutting edge 22 is inclined toward the tip in the axis O direction as it goes toward the outside in the radial direction.

In the side view of the drill of FIG. 6, among an acute angle and an obtuse angle which are formed between a virtual plane VS perpendicular to the axis O and the second tip cutting edge 22, an angle β of the acute angle is set to 25 degrees or less. Specifically, the angle β is 0 degree to 25 degrees.

In addition, the radially inner end of the second tip cutting edge 22 is disposed on the posterior end in the axis O direction with respect to the radially outer end of the first tip cutting edge 21.

In the present embodiment, the radially inner end of the second tip cutting edge 22 is disposed on the inside in the radial direction or at the same position in the radial direction with respect to the radially outer end of the first tip cutting edge 21. In the example shown in the present embodiment, the radially inner end of the second tip cutting edge 22 is disposed on the inside in the radial direction with respect to the radially outer end of the first tip cutting edge 21.

In FIGS. 3 and 4, a ridge 16 is formed on the intersection ridge portion between the wall surface 2a facing in the rotation direction T of the drill of the chip discharge flute 2 and the wall surface facing the outside in the radial direction in the recessed portion 8. The ridge 16 is a pretended cutting edge which does not contribute cutting, extends in the axis O direction, and connects the radially outer end of the first tip cutting edge 21 and the radially inner end of the second tip cutting edge 22 to each other. However, a clearance angle is also applied to the ridge 16 which does not contribute the cutting, and in the present embodiment, the clearance angle is 10 degrees or less. That is, in the tip surface 6, the portion (the wall surface facing the outside in the radial direction in the recessed portion 8) which is continued to the opposite to the ridge 16 in the rotation direction T of the drill becomes a flank face which is gradually inclined toward the inside in the radial direction as it goes toward the opposite to the rotation direction T of the drill.

In the side view of the drill shown in FIG. 6, among an acute angle and an obtuse angle which are formed between the axis O and the ridge 16, an angle of the acute angle is set to 10 degrees or less. Specifically, the angle θ1 is 0 degree to 10 degrees.

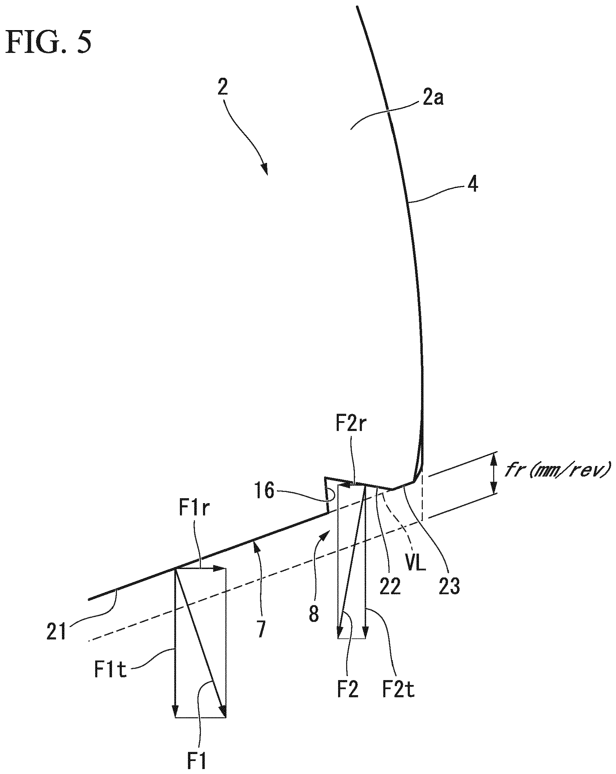

In addition, as shown in FIGS. 5 and 6, the radially outer end of the second tip cutting edge 22 is disposed on a virtual extension line VL of the first tip cutting edge 21 which extends toward the outside in the radial direction.

In addition, in FIG. 6, when the diameter (outermost diameter) of the rotation locus which is obtained by rotating the tip cutting edge 7 in the circumferential direction around the axis O is set to φD, the radially outer end of the second tip cutting edge 22 is disposed within the range which is φD × 10% or less from the radially outer end of the tip cutting edge 7. Specifically, in the side view of the drill shown in FIG 6, a distance (length in the radial direction) indicated by a reference numeral b is set to φD × 10% or less. In addition, the lower limit of the distance b satisfies b = 0, and in this case, the third tip cutting edge 23 may not be formed.

As shown in FIGS. 5 and 6, the third tip cutting edge 23 extends toward the posterior end in the axis O direction as it goes from the radially outer end of the second tip cutting edge 22 toward the outside in the radial direction. The third tip cutting edge 23 is positioned at the outermost diameter portion of the tip cutting edge 7, and the radially outer end of the third tip cutting edge 23 is connected to the tip of the peripheral cutting edge 4.

In addition, the third tip cutting edge 23 extends along the virtual extension line VL of the first tip cutting edge 21. That is, the third tip cutting edge 23 is formed so as to coincide with the virtual extension line VL.

In addition, the tip cutting edge 7 of the present embodiment includes a main cutting edge 7a and a thinning cutting edge 7b as elements of the cutting edge which configures the above-described first to third tip cutting edges 21 to 23. After the web thinning portion 9 is described, the cutting edges 7a and 7b will be separately described.

In FIG. 3, in the tip portion of the drill main body 1, the web thinning portion 9 is formed in a portion which is positioned between a region described below and (the rear portion of) the tip surface 6. The region is set from the wall surface 2b facing the opposite to the rotation direction T of the drill in the tip portion of the chip discharge flute 2 to a flute bottom (the wall surface portion which is positioned on the innermost side in the radial direction of the chip discharge flute 2).

The web thinning portion 9 includes a thinning wall surface (thinning rake face) 9a which faces in the rotation direction T of the drill and is continued to the thinning cutting edge 7b described below in the first tip cutting edge 21 of the tip cutting edge 7, and a thinning surface 9b which is positioned in the rotation direction T of the drill of the thinning wall surface 9a, has a flat surface shape which is inclined so as to face the tip in the axis O direction and the opposite to the rotation direction T of the drill and is continued to the tip surface 6.

In FIG. 6, for example, an angle δ which is formed between the thinning wall surface 9a and the thinning surface 9b in the web thinning portion 9 is within a range from 100 degrees to 110 degrees.

In addition, as shown in FIG. 2, in the present embodiment, the thinning surface 9b extends so as to reach the heel portion 13 of the drill main body 1.

As shown in FIGS. 2 to 4, the tip cutting edge 7 includes the main cutting edge 7a and the thinning cutting edge 7b as elements of the cutting edge which configures the above-described first to third tip cutting edges 21 to 23.

The thinning cutting edge 7b is formed on the intersection ridge portion between the thinning wall surface 9a of the web thinning portion 9 and the tip surface 6. The radially inner end of the thinning cutting edge 7b is positioned on the axis O. In addition, a portion except for the thinning cutting edge 7b in the tip cutting edge 7 becomes the main cutting edge 7a.

Accordingly, the second tip cutting edge 22 and the third tip cutting edge 23 in the tip cutting edge 7 are included in the main cutting edge 7a. In addition, the first tip cutting edge 21 of the tip cutting edge 7 includes the thinning cutting edge 7b and a portion which is positioned inside the second tip cutting edge 22 of the main cutting edge 7a in the radial direction.

Next, a cutting force, a thrust load, and a radial load applied from the drill 10 to the work material during drilling will be described with reference to FIG. 5.

FIG. 5 is a vertical sectional view showing main portions of the tip cutting edge 7 of the drill 10 in an enlarged manner, and in this sectional view, a reference numeral F1 indicates a cutting force which is applied to the work material at a predetermined point of the first tip cutting edge 21 in the tip cutting edge 7, and a reference numeral F2 indicates a cutting force which is applied to the work material at a predetermined point of the second tip cutting edge 22 in the tip cutting edge 7. In addition, in actual, the cutting forces F1 and F2 are generated in the entire edge length region of the first and second tip cutting edges 21 and 22.

In the cutting force F1, a component force in the direction of a drill feed fr is a thrust load F1t, and a component force in the radial direction of the drill is a radial load F1r. In addition, in the cutting force F2, a component force in the direction of a drill feed fr is a thrust load F2t, and a component force in the radial direction of the drill is a radial load F2r.

In addition, in the drill 10 of the present embodiment, the directions of the thrust loads F1t and F2t are the same as each other. However, the directions of the radial loads F1r and F2r are different from each other. Alternatively, the radial load F2r is approximately zero.

According to the drill 10 of the above-described present embodiment, the tip cutting edge 7 positioned on the tip surface 6 of the drill 10 includes the first tip cutting edge 21 and the second tip cutting edge 22 disposed outside the first tip cutting edge 21 in the radial direction. Specifically, the second tip cutting edge 22 is inclined toward the tip in the axis O direction as it goes toward the outside in the radial direction or extends to be perpendicular to the axis O while the first tip cutting edge 21 is inclined toward the posterior end in the axis O direction as it goes toward the outside in the radial direction. In addition, since the radially inner end of the second tip cutting edge 22 is disposed to be closer to the posterior end in the axis O direction than the radially outer end of the first tip cutting edge 21, and the radially outer end of the second tip cutting edge 22 is positioned on the virtual extension line VL of the first tip cutting edge 21 which extends toward the outside in the radial direction, the following effects are exerted.

That is, since the tip cutting edge 7 separately includes the first tip cutting edge 21 positioned inside the tip of the drill 10 in the radial direction and the second tip cutting edge 22 positioned outside the tip of the drill 10 in the radial direction, as shown in FIG. 5, the thrust load (a force which is applied from the drill 10 to the work material in the direction of the drill feed fr) F1t generated when the first tip cutting edge 21 drills the work material applies to a portion positioned inside the inner circumference (here, the inner circumference means a planned portion which will be the inner circumference of the machined hole after the machining, and hereinafter, referred to as an inner circumference planned portion) in the radial direction of the machined hole in the work material, and it is possible to prevent the thrust load F1t from being transmitted to the outer circumferential portion (the inner circumference planned portion of the machined hole in the work material) of the drill 10.

Specifically, in general, the thrust load applied to the work material during the drilling easily increases in the portion (the vicinity of the center portion in the radial direction including the axis O) inside the tip of the drill in the radial direction, and in the drill of the related art, the thrust load applied from the vicinity of the center portion of the tip of the drill to the work material is transmitted to the inner circumference planned portion of the machined hole, and delamination easily occurs.

According to the present embodiment, since the first and second tip cutting edges 21 and 22 are separated from each other, the thrust load F1t applied from the vicinity of the center portion of the tip of the drill 10 to the work material is prevented from being transmitted to the inner circumference planned portion of the machined hole. Accordingly, it is possible to prevent delamination from occurring in the inner circumference of the machined hole after the machining.

In addition, since the first and second tip cutting edges 21 and 22 are separately formed so as to prevent the delamination, unlike the drill of the related art, it is not necessary to set the point angle α of the drill to be small in order to prevent the delamination or it is not necessary to form an acute angle so as to sharpen the tip portion of the drill. Therefore, according to the present embodiment, it is possible to decrease the edge length of the tip cutting edge 7. Accordingly, it is possible to decrease a cutting resistance during the drilling.

Moreover, it is possible to decrease the length of the tip cutting edge 7 in the axis O direction, it is possible to decrease the stroke (the machined length in the direction of the drill feed fr) during the drilling, and machining efficiency (productivity) is improved.

As shown in FIG. 5, in cutting forces F1 and F2 which is applied from the first and second tip cutting edges 21 and 22 to the work material during the drilling, the component forces toward the tip (the direction of the drill feed fr) in the axis O direction become thrust loads F1t and F2t, and component forces in the radial direction become radial forces F1r and F2r.

In addition, in the present embodiment, the second tip cutting edge 22 of the tip cutting edge 7 is inclined toward the tip in the axis O direction as it goes toward the outside in the radial direction or extends to be perpendicular to the axis O while the first tip cutting edge 21 of the tip cutting edge 7 is inclined toward the posterior end in the axis O direction as it goes toward the outside in the radial direction.

Accordingly, the direction of the radial load F1r applied from the first tip cutting edge 21 to the work material and the direction of the radial load F2r applied from the second tip cutting edge 22 to the work material are different from each other while the directions of the thrust loads F1t and F2t applied from the first and second tip cutting edges 21 and 22 to the work material are the same as each other.

Specifically, the radial load F2r of the second tip cutting edge 22 is applied to the work material toward the inside in the radial direction or becomes approximately zero (is not applied) while the radial load F1r of the first tip cutting edge 21 is applied to the work material toward the outside in the radial direction.

Here, for example, in the drill of the related art, since the point angle α is set to be small or the tip portion of the drill is formed at an acute angle so as to sharpen the tip portion of the drill. Accordingly, since the radial load applied to the work material toward the outside in the radial direction increases, the drilling is performed while enlarging the machined hole in the radial direction, a diameter reduction phenomenon (spring back) of the machined hole occurs after the machining, and it is difficult to secure inner-diameter accuracy of the machined hole.

According to the present embodiment, the radial load F1r toward the outside in the radial direction which is applied from the first tip cutting edge 21 to the work material is decreased or is not further increased by the radial load F2r which is applied in the direction different from the radial load F1r and is applied from the second tip cutting edge 22 to the work material. That is, the entire radial load of the tip cutting edge 7 of the drill 10 according to the present embodiment is further decreased than the entire radial load of the tip cutting edge of the drill of the related art. In addition, in the present embodiment, it is possible to dispose the second tip cutting edge 22 near the inner circumference planned portion of the machined hole of the work material, and in this case, the radial load toward the inside in the radial direction of the second tip cutting edge 22 can be directly applied to the inner circumference planned portion of the machined hole.

Accordingly, it is possible to effectively prevent the diameter reduction phenomenon from occurring in the inner circumference of the machined hole, and it is possible to increase inner-diameter accuracy of the machine hole.

Moreover, since the second tip cutting edge 22 extends toward the tip in the axis direction as it goes toward the outside in the radial direction or extends to be perpendicular to the axis O, the second tip cutting edge 22 sharply cuts the vicinity of the inner circumference planned portion of the machine hole.

In addition, as described in the present embodiment, in a case where the chip discharge flute 2 has a spiral shape which is gradually twisted toward the opposite to the rotation direction T of the drill as it goes from the tip in axis O direction toward the posterior end, the second tip cutting edge 22 is gradually inclined toward the posterior end in the axis O direction as it goes inward from the radially outer end, a radial rake angle (rake angle in the radial direction) of the second tip cutting edge 22 can be easily set to a positive angle larger than the radial rake angle of the first tip cutting edge 21, and it is possible to further increase sharpness of the second tip cutting edge 22 (refer to the front view of the drill shown in FIG. 6).

Accordingly, it is possible to effectively prevent burrs or the like from occurring in the inner circumference of the machined hole, and it is possible to increase quality of the inner circumference of the machined hole.

In addition, since the radially outer end of the second tip cutting edge 22 is positioned on the virtual extension line VL of the first tip cutting edge 21, the first and second tip cutting edges 21 and 22 approximately simultaneously cut the work material during the drilling.

Accordingly, an excessive cutting resistance is not applied to the second tip cutting edge 22 during the drilling, and it is possible to prevent wear and chipping of the second tip cutting edge 22 while sufficiently increasing the sharpness of the second tip cutting edge 22 according to the above-described configuration.

In addition, since the radially outer end of the second tip cutting edge 22 is positioned on the virtual extension line VL of the first tip cutting edge 21, the first and second tip cutting edges 21 and 22 are not disposed to be largely separated from each other in the axis O direction.

Accordingly, it is possible to reliably obtain the above-described effect by which the stroke can be decreased during the drilling.

In addition, when the drill 10 is manufactured, since the radially outer end of the second tip cutting edge 22 is positioned on the virtual extension line VL of the first tip cutting edge 21, for example, it is possible to easily form the first and second tip cutting edges 21 and 22 by forming the recessed portion (recessed portion 8) on a portion of the entire edge length of the tip cutting edge 7. Accordingly, it is possible to easily manufacture the drill 10.

In addition, since the radially outer end of the second tip cutting edge 22 is positioned on the virtual extension line VL of the first tip cutting edge 21, it is possible to easily secure large regrinding allowance of the tip cutting edge 7. Accordingly, it is possible to lengthen the tool life.

Hereinbefore, according to the above-described embodiment, it is possible to improve the quality and the inner-diameter accuracy of the inner circumference of the machined hole bored in the work material, the cutting resistance is decreased during the drilling, it is possible to improve the machining efficiency, and it is possible to decrease wear and chipping of the cutting edge (tip cutting edge 7), to sufficiently secure the regrinding allowance, and to lengthen the tool life.

In addition, in the present embodiment, since the tip cutting edge 7 further includes the third tip cutting edge 23 which is disposed outside the second tip cutting edge 22 in the radial direction and the third tip cutting edge 23 extends along the virtual extension line VL, the following effects are exerted.

That is, according to the configuration, the above-described remarkable effects can be obtained by the first and second tip cutting edges 21 and 22, the third tip cutting edge 23 cuts the work material approximately simultaneously with the first and second tip cutting edges 21 and 22 and it is possible to stably improve the quality and the inner-diameter accuracy of the inner circumference of the machined hole.

In addition, since the third tip cutting edge 23 is provided between the radially outer end of the second tip cutting edge 22 and the tip (leading edge) of the peripheral cutting edge 4 extending along the chip discharge flute 2, it is possible to prevent a sharp corner portion from being formed between the tip cutting edge 7 and the peripheral cutting edge 4 by the third tip cutting edge, and it is possible to connect the tip cutting edge and the peripheral cutting edge to each other at a corner portion having an obtuse angle (refer to Fig. 5). That is, since it is possible to sufficiently increase the strength of the edge tip in the connection portion between the tip cutting edge 7 and the peripheral cutting edge 4, wear and chipping of the cutting edge is significantly decreased.

Particularly, for example, in a case where drilling is performed on a composite material in which a plate of metal such as titanium or aluminum is laminated on a CFRP (carbon fiber reinforced resin) or a work material configured of a metal material having high extensibility or the like, preferably, it is possible to stably cut the work material with high accuracy by adopting the above-described configuration (third tip cutting edge 23).

In the present invention, the third tip cutting edge 23 may not be provided, and for example, with respect to a work material configured of only CFRP, more preferably, the radially outer end of the second tip cutting edge 22 and the tip of the peripheral cutting edge 4 are directly connected to each other (that is, the distance b = 0 in FIG 6), and a sharp corner portion is positively formed between the tip cutting edge 7 and the peripheral cutting edge 4 so as to increase sharpness.

In addition, in the present embodiment, since the radially inner end of the second tip cutting edge 22 is disposed on the inside in the radial direction or at the same position in the radial direction with respect to the radially outer end of the first tip cutting edge 21, the following effects are exerted.

That is, according to the configuration, since drilling is performed such that the first tip cutting edge 21 and the second tip cutting edge 22 overlap each other in the radial direction, remainder does not occur between the first and second tip cutting edges 21 and 22. That is, it is possible to prevent the remainder from occurring between the radially outer end of the first tip cutting edge 21 and the radially inner end of the second tip cutting edge 22 without applying a function of the cutting edge to the connection portion (ridge 16) which connects the radially outer end of the first tip cutting edge 21 and the radially inner end of the second tip cutting edge 22 to each other.

Accordingly, for example, in a case where the configuration is applied to the drill 10 having multiple cutting edges such as the twist drill described in the present embodiment, separation positions (positions corresponding to the radially outer end of the first tip cutting edge 21 and the radially inner end of the second tip cutting edge 22) between the first and second tip cutting edges 21 and 22 in the cutting edges (tip cutting edges 7) adjacent to each other in the circumferential direction are not required to be deviated to each other in the edge length direction.

Specifically, for example, in the drill head disclosed in Japanese Unexamined Patent Application, First Publication No. H11-129109, if positions of nicks are not deviated to each other in the edge length direction in the cutting edges (tip cutting edges) adjacent to each other in the circumferential direction, a remainder occurs.

According to the configuration of the present embodiment, since the remainder does not occur in each of the tip cutting edges 7 adjacent to each other in the circumferential direction, it is possible to relatively freely dispose the first and second tip cutting edges 21 and 22 at expected positions. Accordingly, it is possible to easily cope with requirements of various drills 10.

In addition, particularly, in a case where the drill 10 adopting the above-described configuration of the present embodiment drills CFRP as the work material, remarkable effects can be exerted.

In addition, since the point angle α of the drill 10 is 100 degrees to 170 degrees in a side view when the drill main body 1 is viewed in the radial direction, the following effects are exerted.

That is, since the point angle α of the drill 10 is 100 degrees or more, the point angle α is not excessively small, and it is possible to prevent the radial load (the force which is applied to the work material toward the outside in the radial direction) F1r from being excessively increased during the drilling. Accordingly, the effects by which the diameter reduction phenomenon of the machined hole after the machining is prevented are more remarkable.

In addition, since the point angle α of the drill 10 is 170 degrees or less, the point angle α is not excessively large, and it is possible to prevent the thrust load (the force which is applied to the work material in the drill feeding direction) F1t from being excessively increased during the drilling. Accordingly, effects by which the delamination is prevented are more reliably exerted.

Moreover, since the radially outer end of the second tip cutting edge 22 is disposed within a range which is φD × 10% or less from the outermost end of the entire tip cutting edge 7 in the radial direction (that is, the distance b in FIG. 6 is φD × 10% or less), the following effects are exerted.

That is, it is possible to dispose the second tip cutting edge 22 near the inner circumference planned portion of the machined hole of the work material, and the radial load F2r toward the inside in the radial direction of the second tip cutting edge 22 can be directly applied to the inner circumference planned portion of the machined hole.

Accordingly, it is possible to effectively prevent the diameter reduction phenomenon from occurring in the inner circumference of the machined hole, and it is possible to increase inner-diameter accuracy of the machine hole.

Moreover, since the second tip cutting edge 22 extends toward the tip in the axis O direction as it goes toward the outside in the radial direction or extends to be perpendicular to the axis O, the second tip cutting edge 22 sharply cuts the vicinity of the inner circumference planned portion of the machine hole.

Accordingly, it is possible to effectively prevent burrs or the like from occurring in the inner circumference of the machined hole, and it is possible to increase quality of the inner circumference of the machined hole.

In addition, since the radially outer end of the first tip cutting edge 21 is disposed within a range of φD × 25% or less from the outermost end of the entire tip cutting edge 7 in the radial direction (that is, the distance a in FIG 6 is φD × 25% or less), the following effects are exerted.

That is, the edge length of the first tip cutting edge 21 can be secured approximately half or more of the entire edge length of the tip cutting edge 7, and when the second tip cutting edge 22 disposed outside the first tip cutting edge 21 in the radial direction is formed, it is possible to prevent stiffness of the tip of the drill 10 from being decreased due to a large recessed portion 8 being notched or the like.

In addition, since the angle β which is formed between the virtual plane VS perpendicular to the axis O and the second tip cutting edge 22 in the side view of the drill shown in FIG 6 is 25 degrees or less, the following effects are exerted.

That is, in this case, it is possible to prevent the position of the radially inner end of the second tip cutting edge 22 in the axis O direction from being largely separated from the first tip cutting edge 21 toward the posterior end in the axis O direction. Accordingly, when the second tip cutting edge 22 is formed, it is possible to prevent stiffness of the tip of the drill 10 from being decreased due to a large recessed portion 8 being notched or the like. In addition, effects by which the stroke can be decreased during the drilling are more reliably exerted.

In addition, since the angle θ1 which is formed between the axis O and the ridge 16 in the side view of the drill in FIG. 6 is 10 degrees or less, the following effects are exerted.

That is, in this case, it is possible to prevent a remainder from occurring between the first and second tip cutting edges 21 and 22, and when the second tip cutting edge 22 is formed, it is possible to prevent stiffness of the tip of the drill 10 from being decreased due to a large recessed portion 8 being notched toward the inside in the radial direction or the like.

In addition, in the present embodiment, the twisted flute type drill 10 is described, in which the chip discharge flute 2 is gradually twisted toward the opposite to the rotation direction T of the drill as it goes from the tip surface 6 of the drill main body 1 toward the posterior end in the axis O direction. However, the present invention is not limited to this.

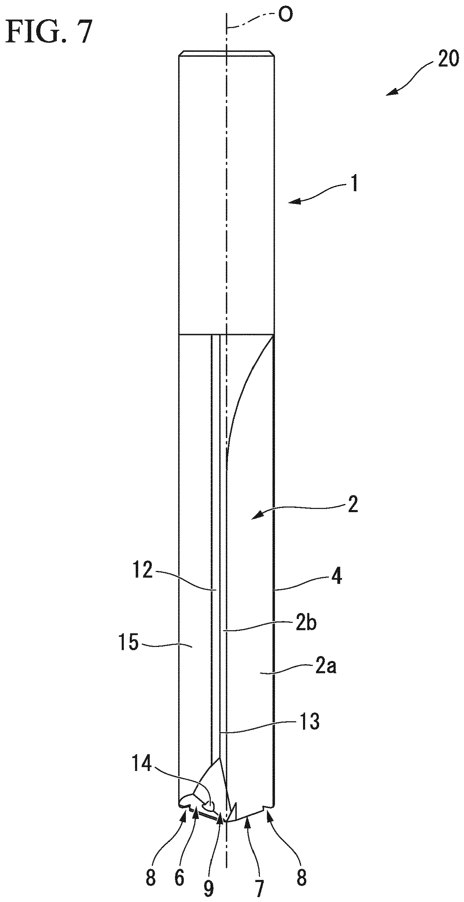

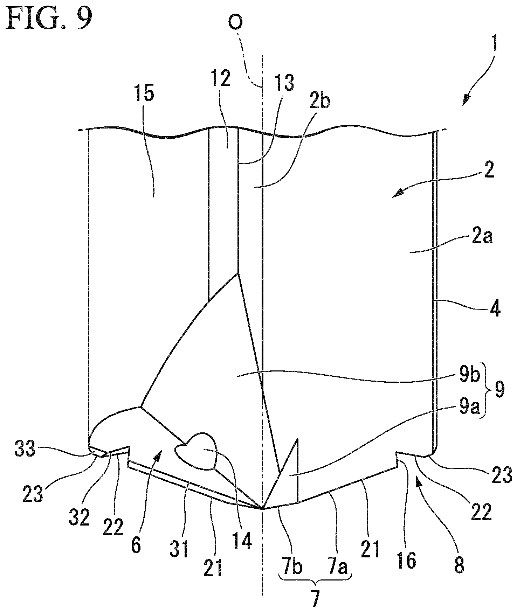

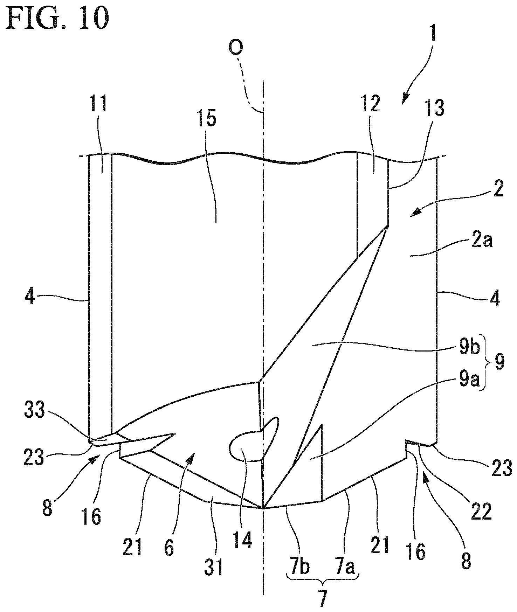

Here, FIGS. 7 to 10 show a modification example of the drill 10 described in the first embodiment and show a straight flute type drill 20.

As shown in FIG 7, in the drill 20 of this modification example, the chip discharge flute 2 straightly extends in the axis O direction without being twisted in the circumferential direction. The present invention can be also applied to the straight flute type drill 20.

Differences between the drill 20 and the drill 10 described in the first embodiment will be described below.

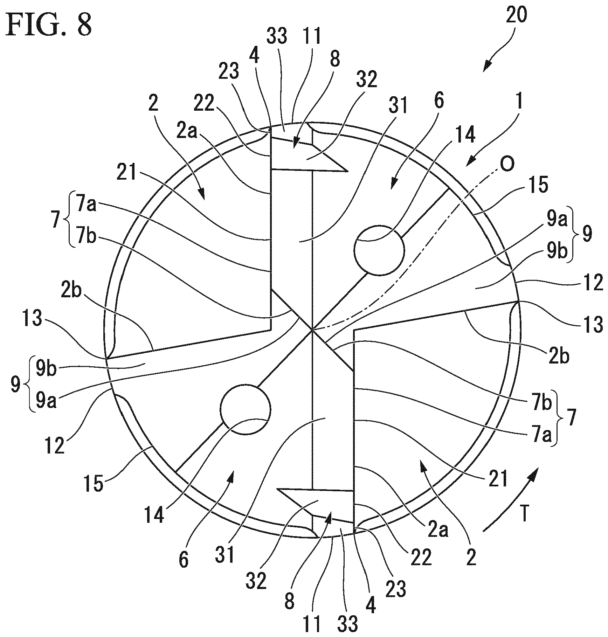

As shown in FIG. 8, in the drill 20 of this modification example, the inner circumferential shape of the flute of the chip discharge flute 2 is a L shape in a cross sectional view. In addition, this modification example includes a second margin portion 12 as a margin portion in addition to the margin portion 11 (first margin portion).

Except for the above-described matters, since the drills 10 and 20 have the same configurations as each other, in FIGS. 7 to 10, the same reference numbers are assigned to the same portions as those described in the first embodiment, and the detailed descriptions are omitted.

### <Second Embodiment>

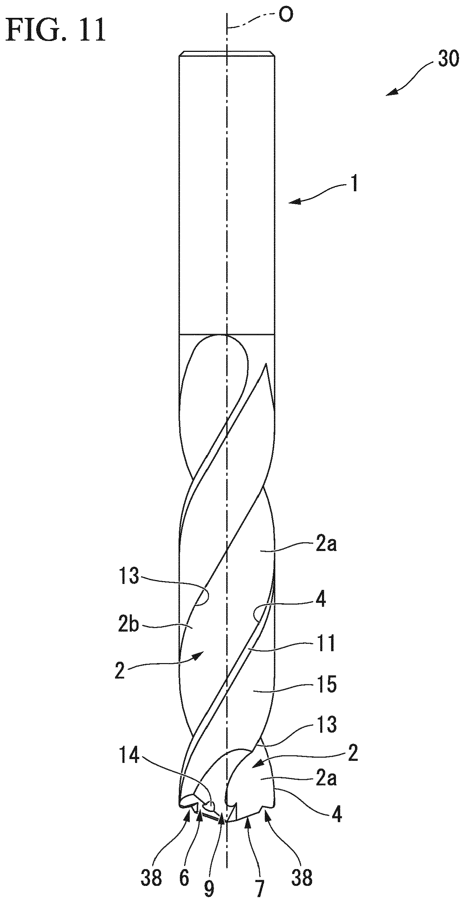

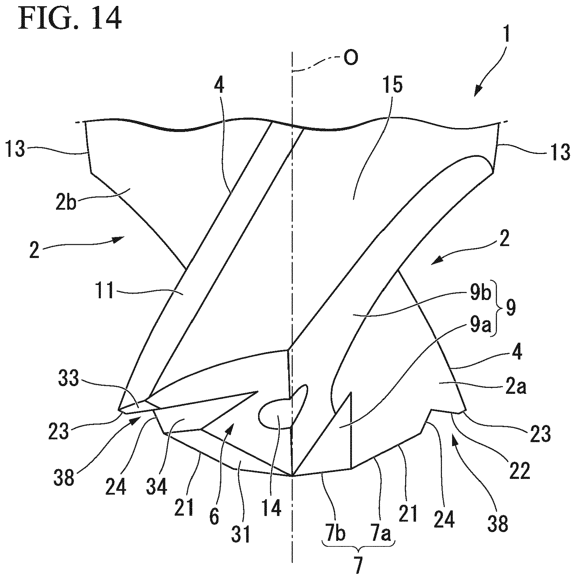

Next, a drill 30 according to a second embodiment of the present invention will be described with reference to FIGS. 11 to 15.

In addition, detailed descriptions of the same components as those of the above-described first embodiment are omitted, and differences therebetween will be mainly described as follows.

The drill 30 of the present embodiment includes a fourth tip cutting edge 24 which configures a portion of the tip cutting edge 7 and functions as the cutting edge instead of the ridge 16 described in the above-described drill 10. In addition, since the fourth tip cutting edge 24 is formed, the shape of a recessed portion 38 is different from the shape of the recessed portion 8 which is described in the first embodiment, and a fourth flank face 34 is formed on the recessed portion 38 of the present embodiment.

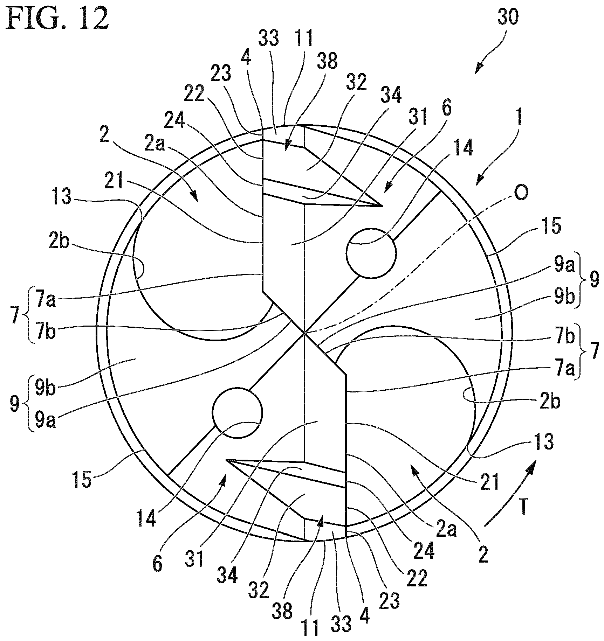

Specifically, in the present embodiment, as shown in FIGS. 12 to 15, the radially inner end of the second tip cutting edge 22 is disposed outside the radially outer end of the first tip cutting edge 21 in the radial direction. In addition, the tip cutting edge 7 includes a fourth tip cutting edge 24 as the cutting edge in addition to the above-described first to third tip cutting edges 21 to 23.

The fourth tip cutting edge 24 connects the radially outer end of the first tip cutting edge 21 and the radially inner end of the second tip cutting edge 22 to each other, and gradually extends toward the posterior end in the axis O direction as it goes toward the outside in the radial direction. Accordingly, the fourth tip cutting edge 24 cuts the work material between the first tip cutting edge 21 and the second tip cutting edge 22 in the radial direction.

That is, the tip cutting edge 7 of the present embodiment includes the first tip cutting edge 21, the fourth tip cutting edge 24, the second tip cutting edge 22, and the third tip cutting edge 23 in this order from the axis O (the center in the radial direction) toward the outside in the radial direction.

In addition, the tip surface 6 includes the fourth flank face 34 which is continued to the opposite to the fourth tip cutting edge 24 in the rotation direction T of the drill and applies a clearance angle γ4 to the fourth tip cutting edge 24, as a flank face in addition to the above-described first to third flank faces 31 to 33.

Specifically, the flute-shaped recessed portion 38 which extends from the tip cutting edge 7 toward the opposite to the rotation direction T of the drill is formed on the tip surface 6, and in the recessed portion 38, the bottom surface (second flank face 32) facing the tip in the axis O direction and the wall surface facing the outside in the radial direction are formed, and the wall surface becomes the fourth flank face 34. The fourth flank face 34 is inclined toward the inside in the radial direction as it goes from the fourth tip cutting edge 24 toward the opposite to the rotation direction T of the drill, and is inclined toward the posterior end in the axis O direction as it goes from the fourth tip cutting edge 24 toward the opposite to the rotation direction T of the drill.

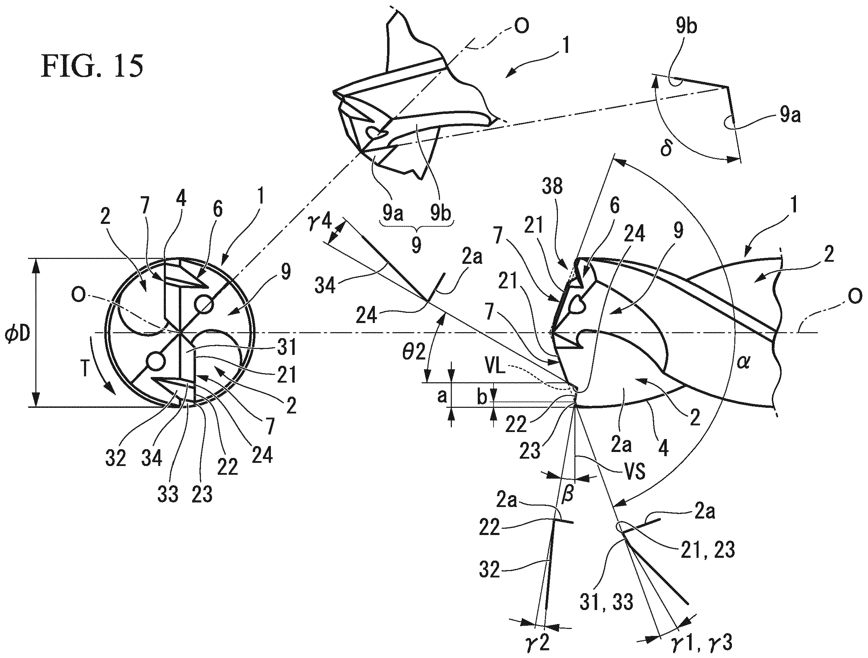

For example, a clearance angle γ4 of the fourth flank face 34 is approximately 15 degrees to 20 degrees in the side view of the drill shown in FIG. 15.

In addition, in the side view of the drill shown in FIG. 15, in acute angles and obtuse angles which are formed between the axis O and the fourth tip cutting edge 24, the angle θ2 of the acute angle is set to 30 degrees or less. Specifically, the angle θ2 is more than 0 degree and equal to or less than 30 degrees.

According to the drill 30 of the above-described present embodiment, effects similar to those of the above-described first embodiment can be obtained.

In addition, in the present embodiment, since the fourth tip cutting edge 24 which connects the first tip cutting edge 21 and the second tip cutting edge 22 to each other is disposed therebetween, it is possible to more reliably prevent a remainder from occurring between the first and second tip cutting edges 21 and 22.

Accordingly, for example, in a case where the configuration is applied to the drill 30 having multiple cutting edges such as two cutting edges or three cutting edges, separation positions (positions at which the fourth tip cutting edges 24 are disposed) between the first and second tip cutting edges 21 and 22 in the cutting edges (tip cutting edges 7) adjacent to each other in the circumferential direction are not required to be deviated to each other in the edge length direction.

In this way, according to the configuration of the present embodiment, since a remainder does not occur in each of the tip cutting edges 7 adjacent to each other in the circumferential direction, it is possible to relatively freely dispose the first and second tip cutting edges 21 and 22 at expected positions. Accordingly, it is possible to easily cope with requirements of various drills 30.

In addition, in a case where the drill 30 adopting the above-described configuration of the present embodiment drills a composite material (particularly, a metal plate is disposed on the end portion of the rear side through which the drill passes) in which a plate of metal such as titanium or aluminum is laminated on the CFRP or a metal material having high extensibility or the like, as the work material, particularly, remarkable effects can be exerted.

Moreover, since the angle θ2 which is formed between the axis O and the fourth tip cutting edge 24 is 30 degrees or less in the side view of the drill shown in FIG. 15, the following effects are exerted.

That is, since the angle 02 is 30 degrees or less, the fourth tip cutting edge 24 is not largely inclined to the axis O and extends so as to approximately follow the axis O, and it is possible to shorten the edge length of the fourth tip cutting edge 24. Accordingly, it is possible to lengthen the edge length of the second tip cutting edge 22, and effects generated by providing the above-described second tip cutting edge 22 are more remarkable.

In addition, in the present embodiment, the twisted flute type drill 30 is described, in which the chip discharge flute 2 is gradually twisted toward the opposite to the rotation direction T of the drill as it goes from the tip surface 6 of the drill main body 1 toward the posterior end in the axis O direction. However, the present invention is not limited to this.

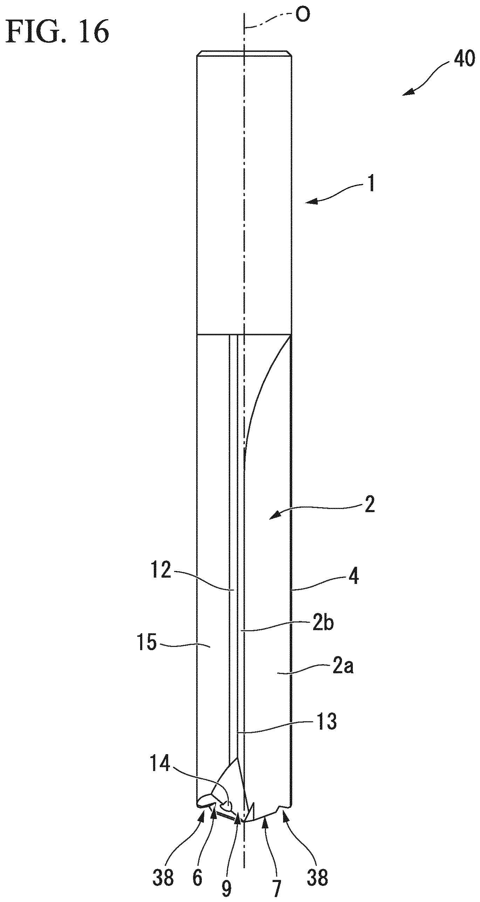

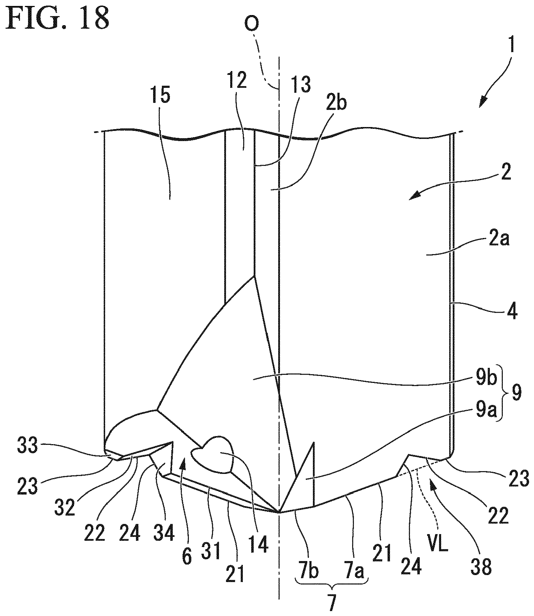

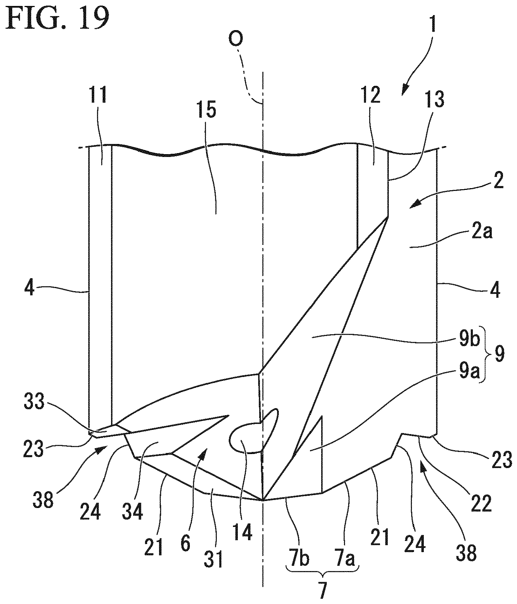

Here, FIGS. 16 to 19 show a modification example of the drill 30 described in the second embodiment and show a straight flute type drill 40.

As shown in FIG. 16, in the drill 40 of this modification example, the chip discharge flute 2 straightly extends in the axis O direction without being twisted in the circumferential direction. The present invention can be also applied to the straight flute type drill 40.

Differences between the drill 40 and the drill 30 described in the second embodiment will be described below.

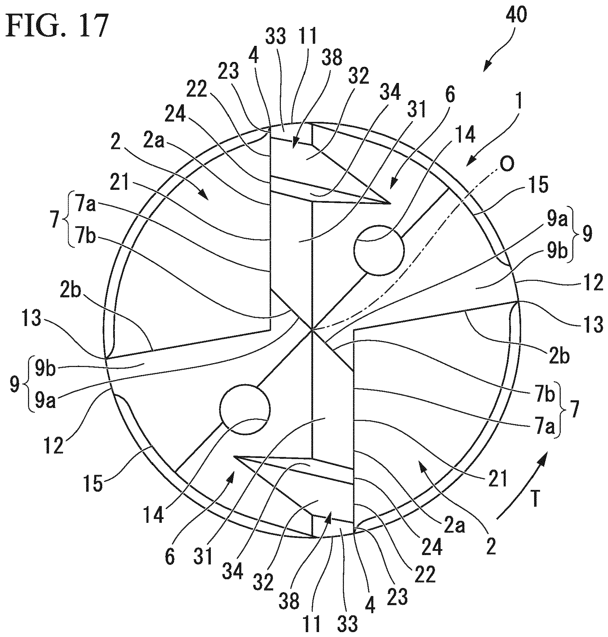

As shown in FIG. 17, in the drill 40 of this modification example, the inner circumferential shape of the flute of the chip discharge flute 2 is a L shape in a cross sectional view. In addition, this modification example includes the second margin portion 12 as a margin portion in addition to the margin portion 11 (first margin portion).

Except for the above-described matters, since the drills 30 and 40 have the same configurations as each other, in FIGS. 16 to 19, the same reference numbers are assigned to the same portions as those described in the first and second embodiments, and the detailed descriptions are omitted.

In addition, the present invention is not limited to the above-described embodiments, and various modifications can be applied to the present invention within a range which does not depart from the gist of the present invention.

For example, each of the drills 10 to 40 described in the above-described embodiments is the drill (twist drill) having two cutting edges in which the pair of (two) chip discharge flutes 2 are disposed on the outer circumference of the drill main body 1 with a gap in the circumferential direction, and the pair of (two) tip cutting edges 7 are formed. However, the present invention is not limited to this. That is, the present invention can be applied to each of the drills 10 to 40 having three or more cutting edges in which three or more chip discharge flutes 2 are disposed on the outer circumference of the drill main body 1 with a gap in the circumferential direction and three or more tip cutting edges 7 are formed.

In addition, in the above-described embodiments, the drill main body 1 is formed of a hard material such as cemented carbide. However, the material of the drill main body 1 is not limited to this. Alternatively, the cutting portion of the drill main body 1 may be coated with a coating film such as a diamond coating film.

In addition, each of the above-described drills 10 to 40 is a solid type drill which is integrally molded. However, the present invention can be applied to a drill head which is detachably mounted on the tip portion of the tool main body of the indexable insert drill, or a drill head which is mounted so as to be fixed to the tip portion of the tool main body by brazing or the like.

That is, although it is not shown particularly, the present invention can be adopted to a drill head which includes a head main body (corresponding to the drill main body 1 of each of the above-described embodiments) which is rotated around the axis O along with the tool main body, the chip discharge flute 2 which is formed on the outer circumference of the head main body and extends from the tip toward the posterior end in the axis O direction, and the tip cutting edge 7 which is formed on the intersection ridge portion between the wall surface 2a facing in the rotation direction T of the drill of the chip discharge flute 2 and the tip surface 6 of the head main body. In this case, the tip cutting edge 7 of the drill head includes the first tip cutting edge 21 which extends toward the posterior end in the axis O direction as it goes toward the outside in the radial direction and the second tip cutting edge 22 which is disposed outside the first tip cutting edge 21 in the radial direction, the second tip cutting edge 22 extends toward the tip in the axis O direction as it goes toward the outside in the radial direction or extends to be perpendicular to the axis O, the radially inner end of the second tip cutting edge 22 is disposed on the posterior end in the axis O direction with respect to the radially outer end of the first tip cutting edge 21, and the radially outer end of the second tip cutting edge 22 is disposed on a virtual extension line VL of the first tip cutting edge 21 which extends toward the outside in the radial direction. In addition, in the drill head, various configurations described in the above-described embodiments may be combined.

In addition, the point angle α, the angles β, δ, θ1, and θ2, the clearance angles γ1 to γ4, and the distances a and b are not limited to the numeral ranges described in the above-described embodiments.

### <Reference example>

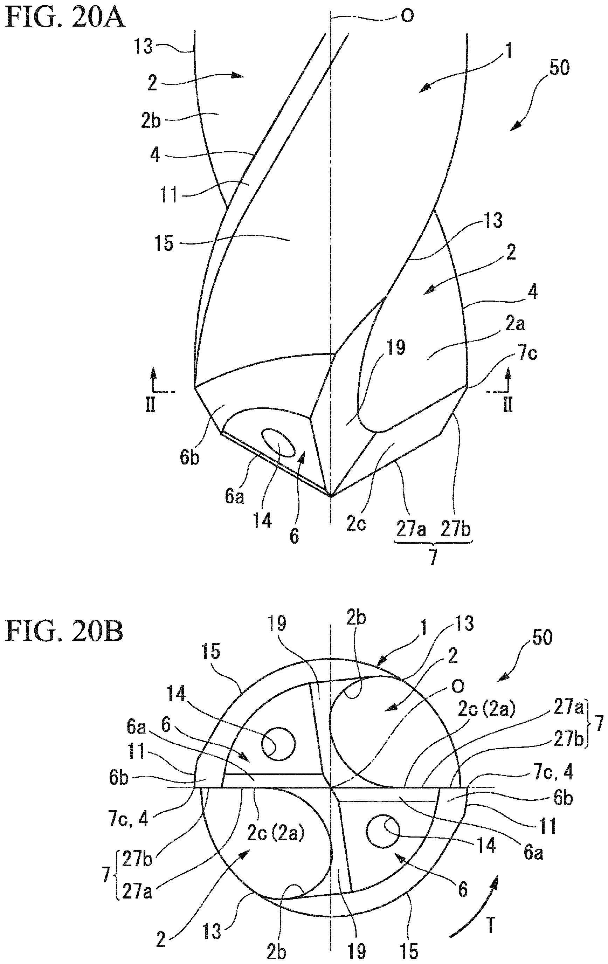

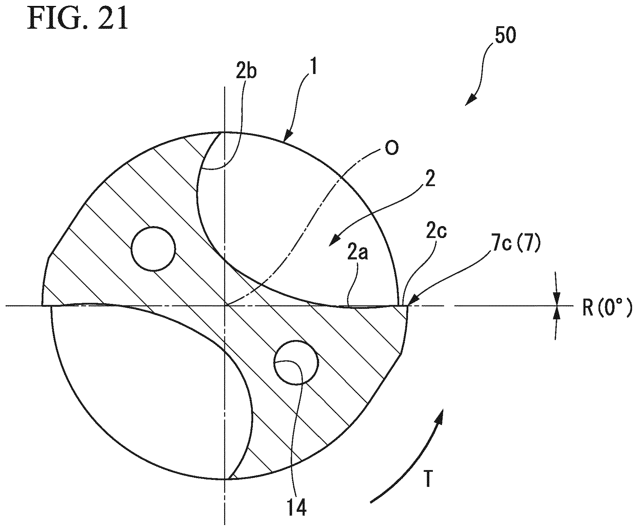

Hereinafter, a drill 50 according to a reference example having the basic technology becoming the basis of each of third and fourth embodiments described below of the present invention will be described with reference to FIGS. 20A, 20B, and 21.

### [Schematic Configuration of Drill]

As shown in FIGS. 20A and 20B, the drill 50 of the present reference example includes the drill main body 1 which has an approximately columnar shape with an axis O as a center, and which is formed of a hard material such as cemented carbide. In the drill main body 1, the posterior end portion of the drill main body 1 in the axis O direction is a shank portion (not shown) which has a columnar shape, and the tip portion thereof in the axis O direction is a cutting portion having a cutting edge. In addition, the tip cutting edge 7 and the peripheral cutting edge 4 described below are included in the cutting edge.

In the drill 50, the shank portion of the drill main body 1 is detachably mounted on a main shaft of a machining tool, a three-jaw chuck of a drilling machine and an electric drill, or the like, and the drill main body 1 is fed to the tip (lower side in FIG. 20A) in the axis O direction while being rotated in a rotation direction T of the drill around the axis O, and cuts a work material by a cutting portion to perform drilling.

In addition, for example, the work material includes a CFRP (carbon fiber reinforced resin) which is used in an aircraft part or the like, a composite material in which a plate of metal such as titanium or aluminum is laminated on the CFRP, or the like. In the present specification, the above are collectively referred to as CFRP or the like.

### [Definition of Direction Used in Present Specification]

In the present specification, a direction from the shank portion toward the cutting portion in the axis O direction of the drill main body 1 is referred to as a direction toward a tip (lower side in FIG. 20A), and a direction from the cutting portion toward the shank portion is referred to as a direction toward a posterior end (upper side in FIG. 20A).

In addition, a direction orthogonal to the axis O is referred to as a radial direction, and in the radial direction, a direction approaching the axis O is referred to as the inside in the radial direction, and a direction which is away from the axis O is referred to as the outside in the radial direction.

In addition, a direction revolving around the axis O is referred to a circumferential direction, and in the circumferential direction, a direction in which the drill 50 rotates during cutting is referred to the rotation direction T of the drill, and a direction opposite to the rotation direction T of the drill is referred to as a opposite to the rotation direction T of the drill (counter direction of the rotation of the drill).

### [Outer Circumference of Drill Main Body]

The chip discharge flute 2 which extends from the tip toward the posterior end in the axis O direction, and the peripheral cutting edge 4 which is formed on an intersection ridge portion between the wall surface 2a facing in the rotation direction T of the drill of the chip discharge flute 2 and the outer circumferential surface of the drill main body 1 are provided on the outer circumference of the drill main body 1.

In addition, the margin portion 11 which is continued to the opposite to the peripheral cutting edge 4 in the rotation direction T of the drill, extends along the peripheral cutting edge 4, and has the same diameter as that of the peripheral cutting edge 4 so as to be the outermost diameter portion in the cutting portion of the drill main body 1, and a body clearance 15 which is continued to the opposite to the margin portion 11 in the rotation direction T of the drill and has a diameter which is smaller than those of the peripheral cutting edge 4 and the margin portion 11 are formed on the outer circumferential surface except for the chip discharge flute 2 in the outer circumference of the drill main body 1.

### [Chip Discharge Flute]

In the present reference example, multiple chip discharge flutes 2 are formed with gaps to each other on the outer circumference of the drill main body 1 in the circumferential direction, each of the chip discharge flutes 2 is opened to the tip surface 6 of the drill main body 1, is gradually twisted toward the opposite to the rotation direction T of the drill as it goes from the tip toward the posterior end in the axis O direction, and extends in a spiral shape.

Specifically, in the wall surface 2a facing in the rotation direction T of the drill of the chip discharge flute 2, a gash rake face 2c parallel to the axis O is formed on the tip portion which is continued to the tip surface 6 via the tip cutting edge 7 described below. In the example shown in FIG. 20A, the gash rake face 2c has a parallelogram shape. In addition, in the chip discharge flute 2, a portion (that is, a portion except for the gash rake face 2c) positioned so as to be closer to the posterior end in the axis O direction than the gash rake face 2c extends so as to be gradually twisted toward the opposite to the rotation direction T of the drill as it goes from the gash rake face 2c toward the posterior end in the axis O direction.

As shown in FIGS. 20A, 20B, and 21, the chip discharge flutes 2 are disposed at equal intervals (equal pitches) on the outer circumference of the drill main body 1 in the circumferential direction so as to be positioned rotationally symmetrical with respect to the axis O. Specifically, the drill 50 of the present reference example is a twist drill in which two chip discharge flutes 2 are disposed in the drill main body 1 so as to be rotationally symmetrical 180 degrees with respect to the axis O.

Each of the chip discharge flutes 2 is opened to the tip surface 6 of the drill main body 1 and extends the direction toward the posterior end, and although it is not specifically shown, the chip discharge flute 2 terminates upward at the outer circumferential surface toward the outside in the radial direction, for example, in the vicinity of center portion in the axis O direction of the drill main body 1. In addition, in the drill main body 1, the range in which the chip discharge flute 2 is formed in the axis O direction becomes a cutting portion, and the portion closer to the posterior end than this range becomes the shank portion.

In a sectional view (cross sectional view) perpendicular to the axis O shown in FIG. 21, in the chip discharge flute 2, the inner circumference of the flute has a recessed curved surface shape, and the chip discharge flute 2 is formed to be recessed toward the inside in the radial direction and in the rotation direction T of the drill. In addition, the chip discharge flute 2 is formed such that the flute depth is deepest (the inner circumference of the flute is closest to the axis O) in the vicinity of the center portion in the circumferential direction.

### [Peripheral Cutting Edge and Margin Portion]

In FIGS. 20A and 20B, in the peripheral cutting edge 4, the tip portion in the axis O direction becomes a leading edge. Specifically, the outer diameter of the cutting portion of the drill main body 1 gradually and slightly decreases from the tip toward the posterior end in the axis O direction and a back taper is applied to the cutting portion. According to this, the outer diameter of the peripheral cutting edge 4 gradually decreases from the tip of the drill main body 1 toward the posterior end. However, the present reference example is not limited to this, and a back taper may not be applied to the cutting portion of the drill main body 1.

The margin portion 11 is continued to the wall surface 2a facing in the rotation direction T of the drill of the chip discharge flute 2 and is formed to be positioned on a virtual cylindrical surface of an outer diameter which is approximately the same as the outermost diameter (a diameter φD of a circle of a rotation locus which is formed when the radially outer end of the tip cutting edge 7 rotates around the axis O) of the tip cutting edge 7 described below. In addition, in the drill main body 1, the intersection ridge portion between the wall surface 2a facing in the rotation direction T of the drill of the chip discharge flute 2 and the margin portion 11 becomes the peripheral cutting edge 4.

In the present reference example, since the chip discharge flute 2 is formed so as to be twisted in a spiral shape as described above, each of the peripheral cutting edge 4 and the margin portion 11 along the chip discharge flute 2 is gradually twisted toward the opposite to the rotation direction T of the drill as it goes from the tip toward the posterior end in the axis O direction, and extends in a spiral shape. That is, the chip discharge flute 2, the peripheral cutting edge 4, and the margin portion 11 have the same helix angle (lead, axial inclination angle) as each other. For example, the helix angle of the peripheral cutting edge 4 is 40 degrees or less.

### [Body Clearance]

In the outer circumferential surface of the drill main body 1, a portion positioned between the margin portion 11 and the chip discharge flute 2 adjacent to the opposite to the margin portion 11 in the rotation direction T of the drill becomes the body clearance 15. Although it is not shown particularly, the body clearance 15 is disposed so as to be retreated to the inside in the radial direction with respect to the rotation locus around the axis O of the peripheral cutting edge 4.

Specifically, the body clearance 15 is continued to the opposite to the margin portion 11 in the rotation direction T of the drill on the outer circumferential surface of the drill main body 1 and has an outer diameter which is smaller than the outer diameter of the margin portion 11. The retreat amount (body clearance depth) in which the body clearance 15 is retreated from the rotation locus of the peripheral cutting edge 4 toward the inside in the radial direction may be constant over the entire region in the circumferential direction in the body clearance 15. Alternatively, in the body clearance 15, the retreat amount from the rotation locus of the peripheral cutting edge 4 toward the inside in the radial direction may gradually increase as it goes from the end portion in the rotation direction T of the drill toward the opposite to the rotation direction T of the drill.

### [Heel Portion]

In addition, in the outer circumference of the drill main body 1, the intersection ridge portion between the body clearance 15 and the wall surface 2b facing the opposite to the rotation direction T of the drill of the chip discharge flute 2 becomes the heel portion 13. The heel portion 13 is sharpened toward the opposite to the rotation direction T of the drill and has a ridge shape which extends along the chip discharge flute 2.

### [Tip of Drill Main Body]

The tip surface 6 facing the direction toward the tip of the drill 50 (drill feeding direction), the tip cutting edge 7 which is formed on the intersection ridge portion between the wall surface 2a facing in the rotation direction T of the drill of the chip discharge flute 2 and the tip surface 6, and the thinning surface 19 which is positioned between the tip surface 6 and the chip discharge flute 2 which is adjacent to the opposite to the tip surface 6 in the rotation direction T of the drill are provided on the tip portion of the drill main body 1.

### [Tip Surface]

In FIG. 20B, the tip surface (tip flank face) 6 includes a tip inner flank face 6a which is inclined toward the posterior end in the axis O direction as it goes from a tip inner cutting edge 27a which is positioned on the inside in the radial direction in a tip inner cutting edge 27a and a tip outer cutting edge 27b described below of the tip cutting edge 7 toward the opposite to the rotation direction T of the drill, and a tip outer flank face 6b which is inclined toward the posterior end in the axis O direction as it goes from the tip outer cutting edge 27b which is positioned on the outside in the radial direction toward the opposite to the rotation direction T of the drill.

Since each of the tip inner flank face 6a and the tip outer flank face 6b is gradually inclined toward the posterior end in the axis O direction as it goes toward the opposite to the rotation direction T of the drill, each of clearance angles is applied to each of the tip inner cutting edge 27a and the tip outer cutting edge 27b.

In the front view of the drill shown in FIG. 20B, the tip inner flank face 6a includes a front portion which has a rectangular shape which is long in the radial direction, and a fan-shaped rear portion which is continued to the opposite to the front portion in the rotation direction T of the drill and has a clearance angle which is set to be larger than that of the front portion. However, the present reference example is not limited to this, in the tip inner flank face 6a, the clearance angles of the front portion and the rear portion may be set to be the same as each other, and the front portion and the rear portion may be formed to be flush with each other.

Moreover, in the front view of the drill, the tip outer flank face 6b has an arched band shape which extends in the circumferential direction.

A coolant hole 14 is opened to at least one of the tip surface 6 and the thinning surface 19. In the present reference example, the coolant hole 14 is opened to the rear portion of the tip inner flank face 6a on the tip surface 6.

In the front view of the drill shown in FIG. 20B, the opening shape of the coolant hole 14 is a circular shape. However, the present reference example is not limited to this, and for example, the opening shape may be a polygonal shape, an elliptical shape, or the like in addition to the circular shape.

Although it is not shown particularly, each of the coolant holes 14 extends so as to be twisted inside the drill main body 1 along the chip discharge flute 2 (at approximately the same lead as that of the chip discharge flute 2) and penetrates the drill main body 1 in the axis O direction. A coolant (compressed air, or an oil or water-soluble cutting fluid) which is supplied from a main shaft of a machining tool or the like flows into the coolant hole 14, and the coolant flows out to the tip portion of the drill main body 1 and the machined portion of the work material.

### [Tip Cutting Edge]

As shown in FIGS. 20A and 20B, the tip cutting edge 7 is formed on an intersection ridge portion which is formed between the tip portion (that is, the gash rake face 2c) of the wall surface 2a facing in the rotation direction T of the drill of the chip discharge flute 2 and a portion of the tip surface 6 of the drill main body 1 which is continued to the opposite to the rotation direction T of the drill from the gash rake face 2c. The gash rake face 2c is the rake face of the tip cutting edge 7, and the tip surface 6 is the flank face of the tip cutting edge 7. The tip cutting edge 7 extends from the axis O in the drill main body 1 to the radially outer end (the outermost circumstance).

The tip cutting edge 7 of the present reference example includes the tip inner cutting edge 27a which gradually extends toward the posterior end in the axis O direction as it goes from the axis O toward the outside in the radial direction, and the tip outer cutting edge 27b which is continued to the radially outer end of the tip inner cutting edge 27a, gradually extends the posterior end in the axis O direction as it goes from the outer end toward the outside in the radial direction, and has a displacement amount (that, inclination) in the axis O direction per unit length in the radial direction which is greater than the displacement amount of the tip inner cutting edge 27a.

That is, the tip cutting edge 7 includes the tip inner cutting edge 27a and the tip outer cutting edge 27b which are connected to each other in the radial direction, the tip inner cutting edge 27a is disposed inside the tip outer cutting edge 27b in the radial direction, and the tip outer cutting edge 27b is disposed outside the tip inner cutting edge 27a in the radial direction.

In addition, as shown in FIG. 20A, in a side view of drill when the gash rake face 2c is viewed from the front, the inclination angle (the angle of the acute angle in the acute angle and the obtuse angle which are formed between the axis O and the tip outer cutting edge 27b) of the tip outer cutting edge 27b with respect to the axis O is smaller than the inclination angle (the angle of the acute angle in the acute angle and the obtuse angle which are formed between the axis O and the tip inner cutting edge 27a) of the tip inner cutting edge 27a with respect to the axis O.

In addition, as shown in FIG. 20B, in the front view of the drill when the drill main body 1 is viewed from the tip in the axis O direction toward the posterior end, the tip cutting edge 7 extends in the radial direction. In addition, the "tip cutting edge 7 extending in the radial direction" indicates that an angle formed between the virtual straight-line passing through the radially outer end (outer circumferential corner) 7c of the tip cutting edge 7 and the axis O in the front view of the drill, and the edge length direction of the tip cutting edge 7 becomes a value (approximately 0 degree) close to zero, and specifically, for example, the angle is 5 degrees or less (0 degree to 5 degrees). In addition, in the shown example in the present reference example, the angle becomes 0 degree.

That is, the tip cutting edge 7 of the present reference example is set to be zero in a center height and the tip cutting edge 7 is not set to center height ascending or center height descending.

Here, the "center height" is described. As is well known, the center height (center-height dimension) is a distance in which the tip cutting edge is separated from a virtual straight-line which is parallel to the edge length direction of the tip cutting edge and passes through the axis in a front view of the drill. Specifically, in drills 100 and 110 of the related art shown in FIGS. 29B and 31B, a distance L in which the tip cutting edge 107 is separated from the virtual straight-line which is parallel to the edge length direction of the tip cutting edge 107 and passes through the axis O is the center height. In addition, a case where the tip cutting edge 107 is positioned in the rotation direction T of the drill with respect to the virtual straight-line is the "center height ascending", and a case where the tip cutting edge 107 is positioned on the opposite to the rotation direction T of the drill with respect to the virtual straight-line is the "center height descending".

The drills 100 and 110 of the related art are the center height ascending.

As shown in FIG. 20B, in the drill 50 of the present reference example, the center height of the tip cutting edge 7 is zero. Specifically, in the front view of the drill, the tip cutting edge 7 is formed in a straight shape, and the center height is set to zero over the entire edge length of the tip cutting edge 7 (over the entirety of the tip inner cutting edge 27a and the tip outer cutting edge 27b).

In addition, as described above, since the gash rake face 2c of the chip discharge flute 2 which becomes the rake face of the tip cutting edge 7 is formed so as to be parallel to the axis O of the drill main body 1, an axial rake angle (a rake angle in the axis direction) of the tip cutting edge 7 becomes a negative angle (0 degree) over the entire edge length the tip cutting edge 7 (over the entirety of the tip inner cutting edge 27a and the tip outer cutting edge 27b).

In this way, since the axial rake angle of the tip cutting edge 7 becomes a negative angle (0 degree) and the tip cutting edge 7 extends in the radial direction (the center height becomes zero), as shown in FIG. 21, the radial rake angle R of the outer circumferential corner 7c of the tip cutting edge 7 becomes a negative angle (0 degree).

### [Thinning Surface]

In FIGS. 20A and 20B, in the tip portion of the drill main body 1, a thinning surface 19 is formed in a portion which is positioned between a region described below and the tip surface 6. The region is set from the wall surface 2b facing the opposite to the rotation direction T of the drill in the tip portion of the chip discharge flute 2 to a flute bottom (the wall surface portion which is positioned on the innermost side in the radial direction of the chip discharge flute 2).

The thinning surface 19 is inclined toward the posterior end in the axis O direction as it goes from the tip surface 6 toward the opposite to the rotation direction T of the drill. The displacement amount (that is, inclination) of the thinning surface 19 in the axis O direction per unit length in the rotation direction T of the drill is greater than the displacement amount of the tip surface 6.

### [Effect of Present Reference Example]

According to the drill 50 of the above-described present reference example, since the gash rake face 2c of the chip discharge flute 2 becoming the rake face of the tip cutting edge 7 is formed so as to be parallel to the axis O of the drill main body 1, the axial rake angle of the tip cutting edge 7 becomes a negative angle (0 degree).

In addition, in the front view of the drill shown in FIG. 20B, the tip cutting edge 7 extends in the radial direction of the drill main body 1, is not set to center height ascending or center height descending, and is set to zero in the center height. Specifically, in the front view of the drill, the angle which is formed between the virtual straight-line and the edge length direction of the tip cutting edge 7 becomes approximately 0 degree. The virtual straight-line passes through the radially outer end (outer circumferential corner) 7c of the tip cutting edge 7 and the axis O.

Before the effects of the present reference example are described, first, problems of the drills 100 and 110 of the related art will be specifically described with reference to FIGS. 29A to 33.

Each of the drills 100 and 110 includes a drill main body 101 which is rotated around an axis O, a chip discharge flute 102 which is formed on the outer circumference of the drill main body 101 and extends from the tip of the drill main body 101 toward the posterior end thereof in the axis O direction, and a tip cutting edge 107 which is formed on an intersection ridge portion between a wall surface facing in a rotation direction T of a drill of the chip discharge flute 102 and the tip surface of the drill main body 101.

In addition, a portion of the tip cutting edge 107 which is closely related to finishing accuracy of the inner circumference of the machined hole which is subjected to the drilling is the vicinity of the radially outer end (outer circumferential corner) 107c in the tip cutting edge 107.

In the drill 100 which is shown in FIGS. 29A, 29B, and 30, the chip discharge flute 102 is opened to the tip surface of the drill main body 101, is gradually twisted toward the opposite to the rotation direction T of the drill as it goes from the tip surface toward the posterior end in the axis O direction, and extends in a spiral shape. Accordingly, the axial rake angle (the rake angle in the axis direction) of the tip cutting edge 107 is a positive angle. In addition, as shown in FIG. 30, the radial rake angle (the rake angle in the radial direction) R of the outer circumferential corner 107c of the tip cutting edge 107 is a positive angle (+).

If a work material such as CFRP is dilled using the drill 100, burrs or the like easily occur in a region (a circumferential region) shown by a reference numeral A in the inner circumference of the machined hole of a work material W shown in FIG. 33.

That is, the work material W configured of CFRP or the like has a direction of fibers, and in FIG. 33, the direction of the fibers is an up-down direction (vertical direction). Accordingly, if the radial rake angle R of the outer circumferential corner 107c of the tip cutting edge 107 is a positive angle (+), the edge tip cuts the region A of the inner circumference of the machined hole at an acute angle (edge tip sharply cuts in a direction opposite to the lines of the fibers), the fibers are easily peeled out, and burrs or the like occur.

In addition, in the drill 110 shown in FIGS. 31A, 31B, and 32, a gash rake face 102c which is parallel to the axis O is formed on the tip portion of the chip discharge flute 102. Accordingly, the axial rake angle of the tip cutting edge 107 is a negative angle (0 degree). In addition, as shown in FIG. 32, the radial rake angle R of the outer circumferential corner 107c of the tip cutting edge 107 is a negative angle (-) which is smaller than 0 degree.

If a work material such as CFRP is dilled using the drill 110, burrs or the like easily occur in a region (a circumferential region) shown by a reference numeral B in the inner circumference of the machined hole of a work material W shown in FIG. 33.

That is, if the radial rake angle R of the outer circumferential corner 107c of the tip cutting edge 107 is a negative angle (-), the edge tip cuts the region B of the inner circumference of the machine hole at an obtuse angle (the edge tip cuts the region B in the directions of the lines of fibers but less sharply cuts the region B), a remainder of fibers easily occurs, and burrs or the like occur.

Accordingly, occurrence of burrs or the like over the entire circumferential region of the inner circumference of the machined hole being prevented so as to improve finishing accuracy is preferable.

In the configuration of the present reference example, since the axial rake angle of the tip cutting edge 7 becomes a negative angle (0 degree) and the tip cutting edge 7 extends in the radial direction (the center height becomes zero), in the front view of the drill shown in FIG. 21, the radial rake angle R of the outer circumferential corner 7c of the tip cutting edge 7 becomes a negative angle (0 degree).

Accordingly, if a work material such as CFRP or the like is drilled by the drill 50 of the present reference example, occurrence of burrs or the like is significantly decreased in the region (circumferential region) shown by the reference numeral A and the region (circumferential region) shown by the reference numeral B in the inner circumference of the machined hole of the work material W shown in FIG. 33.

Specifically, in the drill 100 (refer to FIGS. 29A, 29B, and 30) of the related art, the edge tip cuts the region A of the inner circumference of the machined hole of the work material W at an acute angle (the edge tip sharply cuts in the direction opposite to the line of fibers), and the fibers are easily peeled out. However, in the drill 50 of the present reference example, since the edge tip perpendicularly cuts the region A, the fibers are prevented from being peeled out. In addition, in the drill 110 (refer to FIGS. 31A, 31B, and 32) of the related art, the edge tip cuts the region B at an obtuse angle (the edge tip cuts the region B in the direction of the line of fibers but less sharply cuts the region B), a remainder of fibers easily occurs. However, in the drill 50 of the present reference example, since the edge tip perpendicularly cuts the region B, occurrence of the remainder of fibers is prevented.

Accordingly, in the drill 50 of the present reference example, it is possible to prevent occurrence of burrs or the like over the entire circumferential region of the inner circumference of the machined hole.

Hereinbefore, according to the present reference example, it is possible to stably increase finishing accuracy of the inner circumference of the machined hole which is drilled in the work material W.

In the present reference example, a portion of the chip discharge flute 2 which is positioned to be closer to the posterior end in the axis O direction than the gash rake face 2c extends so as to be gradually twisted toward the opposite to the rotation direction T of the drill as it goes from the gash rake face 2c toward the posterior end in the axis O direction, and the chip discharge flute 2 is a twisted flute which extends in a spiral shape in the outer circumference of the drill main body 1. Accordingly, chip discharging properties are favorably maintained.

In addition, in the present reference example, the tip cutting edge 7 includes the tip inner cutting edge 27a and the tip outer cutting edge 27b, and in the side view of the drill shown in FIG. 20A, the inclination angle of the tip outer cutting edge 27b with respect to the axis O is smaller than the inclination angle of the tip inner cutting edge 27a with respect to the axis O. Accordingly, the following effects are exerted.

That is, in this case, the corner portion (outer circumferential corner 7c) by which (the tip outer cutting edge 27b of) the tip cutting edge 7 and (the leading edge of) the peripheral cutting edge 4 are connected to each other is formed at a large obtuse angle, and a chipping of the edge tip at this corner portion is significantly decreased, the tool life increases, and stable drilling is performed.

Moreover, as shown in FIG. 20A, in the side view of the drill when the tip cutting edge 7 is viewed from the front, a point angle (point angle between the pair of tip outer cutting edges 27b) of the drill 50 corresponding to an angle which is two times an acute angle in an acute angle and an obtuse angle which are formed between the tip outer cutting edge 27b and the axis O decreases. Accordingly, when a work material is drilled, it is possible to decrease a thrust load applied from the tip outer cutting edge 27b to the work material, and delamination or the like in the inner circumference of the machined hole is prevented.

### <Third Embodiment>

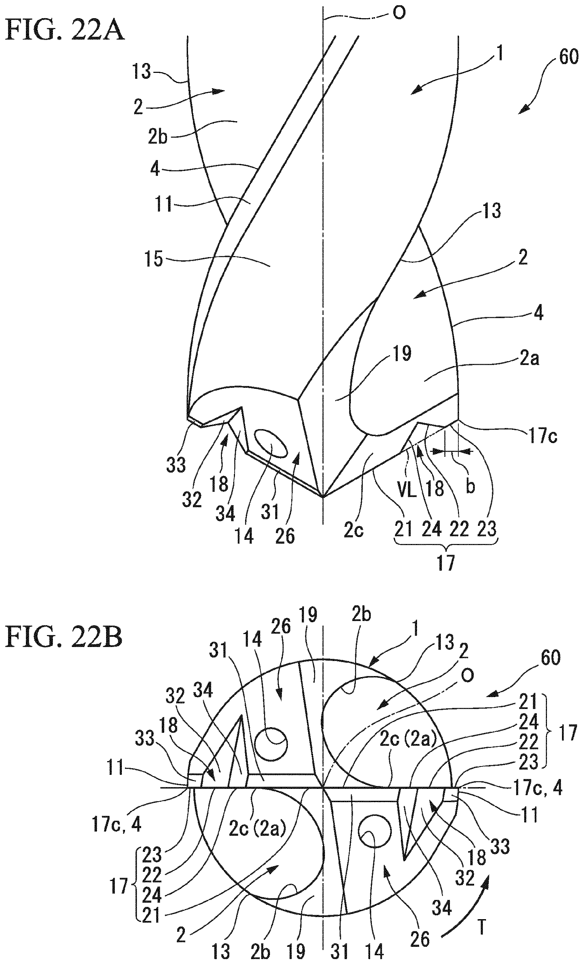

Next, a drill 60 according to a third embodiment of the present invention will be described with reference to FIGS. 22A to 25.

In addition, detailed descriptions of the same components as those of the above-described reference example embodiment are omitted, and differences therebetween will be mainly described as follows.

### [Difference between Reference Example and Third Embodiment]

The shape of the tip (tip surface 26 and tip cutting edge 17) of the drill main body 1 of the drill 60 of the present embodiment is mainly different from that of the drill 50 described in the above-described reference example.

### [Tip Surface]

In the drill 60 of the present embodiment shown in FIGS. 22A and 22B, the tip surface (tip flank face) 26 of the drill main body 1 includes the first flank face 31 which is inclined toward the posterior end in the axis O direction as it goes from the first tip cutting edge 21 which is positioned on the innermost side in the radial direction among first to fourth tip cutting edges 21 to 24 described below of the tip cutting edge 17 toward the opposite to the rotation direction T of the drill, the third flank face 33 which is inclined toward the posterior end in the axis O direction as it goes from the third tip cutting edge 23 which is positioned on the outermost side in the radial direction among the first to fourth tip cutting edges 21 to 24 toward the opposite to the rotation direction T of the drill, the second flank face 32 which is inclined toward the posterior end in the axis O direction as it goes from the second tip cutting edge 22 positioned on the outside in the radial direction in the second tip cutting edge 22 and the fourth tip cutting edge 24 positioned between the first tip cutting edge 21 and the third tip cutting edge 23 toward the opposite to the rotation direction T of the drill, and the fourth flank face 34 which is inclined toward the posterior end in the axis O direction as it goes from the fourth tip cutting edge 24 positioned on the inside in the radial direction in the second tip cutting edge 22 and the fourth tip cutting edge 24 toward the opposite to the rotation direction T of the drill.

Since each of the first to fourth flank faces 31 to 34 is gradually inclined toward the posterior end in the axis O direction as it goes toward the opposite to the rotation direction T of the drill, a clearance angle is applied to each of the first to fourth tip cutting edges 21 to 24.

As shown in FIG. 22A, each of the first flank face 31, the third flank face 33, and the fourth flank face 34 is inclined toward the posterior end in the axis O direction as it goes toward the outside in the radial direction. In addition, the second flank face 32 is inclined toward the tip in the axis O direction as it goes toward the outside in the radial direction.

In the front view of the drill shown in FIG. 22B, the tip surface 26 includes a front portion which is continued to the opposite to the tip cutting edge 17 in the rotation direction T of the drill and has an approximately rectangular shape which is long as the entirety in the radial direction, and a fan-shaped rear portion which is continued to the opposite to the front portion in the rotation direction T of the drill and has a clearance angle which is set to be larger than that of the front portion. However, the present invention is not limited to this, in the first flank face 31 and the third flank face 33 among the first to fourth flank faces 31 to 34 of the tip surface 26, the clearance angles of the front portion and the rear portion may be set to be the same as each other, and the front portion and the rear portion may be formed to be flush with each other.

In addition, the tip surface 26 includes a recessed portion 18 which extends from the tip cutting edge 17 toward the opposite to the rotation direction T of the drill and is formed to be recessed toward the posterior end in the axis O direction. In the present embodiment, the recessed portion 18 is formed in a flute shape which extends from the tip cutting edge 17 toward the opposite to the rotation direction T of the drill, and is formed from the front portion to the rear portion on the tip surface 26.

The recessed portion 18 includes a bottom surface which is positioned on the outside in the radial direction in the recessed portion 18 and faces toward the tip in the axis O direction, and a wall surface which is positioned on the inside in the radial direction in the recessed portion 18 and faces the outside in the radial direction. In addition, the bottom surface of the recessed portion 18 becomes the second flank face 32, and the wall surface of the recessed portion 18 becomes the fourth flank face 34.

In the present embodiment, the position of the coolant hole 14 which is opened to the tip portion of the drill main body 1 is set to be closer to the inside in the radial direction than the recessed portion 18.

### [Tip Cutting Edge]

As shown in FIGS. 22A and 22B, the tip cutting edge 17 is formed on an intersection ridge portion which is formed between the tip portion (the gash rake face 2c) of the wall surface 2a facing in the rotation direction T of the drill of the chip discharge flute 2 and a portion of the tip surface 26 of the drill main body 1 which is continued to the opposite to the rotation direction T of the drill from the gash rake face 2c. The gash rake face 2c is the rake face of the tip cutting edge 17, and the tip surface 26 is the flank face of the tip cutting edge 17. The tip cutting edge 17 extends from the axis O in the drill main body 1 to the radially outer end (the outermost circumstance).

The tip cutting edge 17 of the present embodiment includes the first tip cutting edge 21 which gradually extends toward the posterior end in the axis O direction as it goes toward the outside in the radial direction, the second tip cutting edge 22 which is disposed outside the first tip cutting edge 21 in the radial direction, the third tip cutting edge 23 which is disposed outside the second tip cutting edge 22 in the radial direction, and the fourth tip cutting edge 24 which connects the radially outer end of the first tip cutting edge 21 and the radially inner end of the second tip cutting edge 22 to each other.

In FIG. 22A, the first tip cutting edge 21 of the tip cutting edge 17 gradually extends toward the posterior end in the axis O direction as it goes from the axis O toward the outside in the radial direction.

The second tip cutting edge 22 gradually extends toward the tip in the axis O direction as it goes toward the outside in the radial direction or extends to be perpendicular to the axis O. In the example of the present embodiment, the second tip cutting edge 22 is inclined toward the tip in the axis O direction as it goes toward the outside in the radial direction.

The radially inner end of the second tip cutting edge 22 is disposed on the posterior end in the axis O direction with respect to the radially outer end of the first tip cutting edge 21.

In addition, in the present embodiment, the radially inner end of the second tip cutting edge 22 is disposed on the outside in the radial direction with respect to the radially outer end of the first tip cutting edge 21. Accordingly, the fourth tip cutting edge 24 which connects the radially inner end of the second tip cutting edge 22 and the radially outer end of the first tip cutting edge 21 to each other extends toward the posterior end in the axis O direction as it goes toward the outside in the radial direction and functions as the cutting edge which cuts the work material.

In addition, the radially outer end of the second tip cutting edge 22 is disposed on the virtual extension line VL of the first tip cutting edge 21 which extends toward the outside in the radial direction.

In addition, when the diameter (outermost diameter) of the rotation locus which is obtained by rotating the tip cutting edge 17 in the circumferential direction around the axis O is set to φD, the radially outer end of the second tip cutting edge 22 is disposed within the range which is φD × 10% or less from the radially outer end (outer circumferential corner 17c) of the tip cutting edge 17. Specifically, in the side view of the drill shown in FIG. 22A, the distance (length in the radial direction) indicated by the reference numeral b is set to φD × 10% or less. In addition, the lower limit of the distance b satisfies b = 0, and in this case, the third tip cutting edge 23 may not be formed. A modification example of the drill 60 in a case where the third tip cutting edge 23 is not formed will be separately described below.

The third tip cutting edge 23 extends toward the posterior end in the axis O direction as it goes from the radially outer end of the second tip cutting edge 22 toward the outside in the radial direction. The third tip cutting edge 23 is positioned at the outermost diameter portion of the tip cutting edge 17, and the radially outer end (outer circumferential corner 17c) of the third tip cutting edge 23 is connected to the tip (leading edge) of the peripheral cutting edge 4.

In addition, the third tip cutting edge 23 extends along the virtual extension line VL of the first tip cutting edge 21. That is, the third tip cutting edge 23 is formed so as to coincide with the virtual extension line VL.

In this way, the tip cutting edge 17 of the present embodiment includes the first tip cutting edge 21, the fourth tip cutting edge 24, the second tip cutting edge 22, and the third tip cutting edge 23 in this order from the axis O (the center in the radial direction) toward the outside in the radial direction.

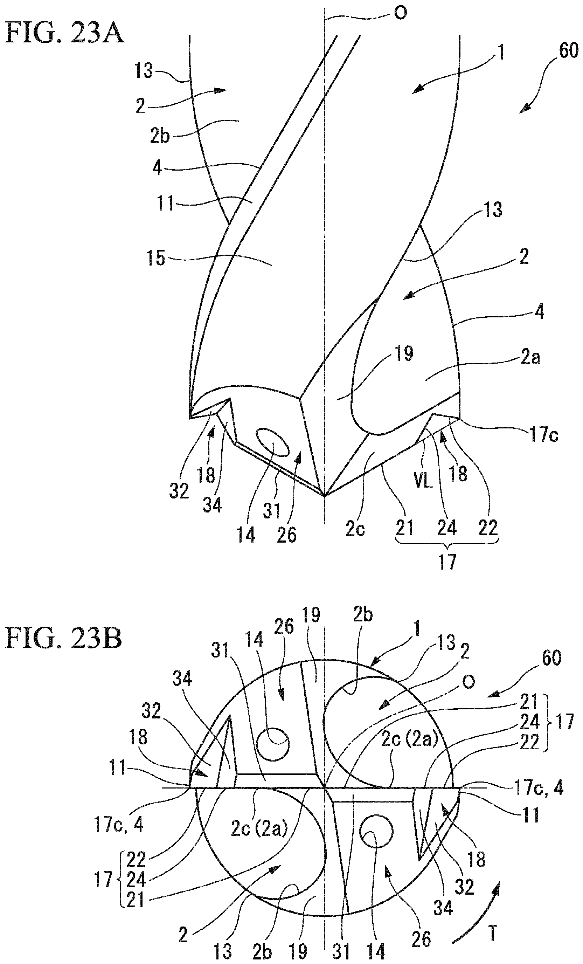

Here, FIGS. 23A to 25 show a modification example of the drill 60 of the present embodiment.

In this modification example, the tip cutting edge 17 does not include the third tip cutting edge 23, and the radially outer end of the second tip cutting edge 22 becomes the outer circumferential corner 17c and is connected to the leading edge of the peripheral cutting edge 4.

### [Angle, Radial Position, or the like of Each Component of Drill]

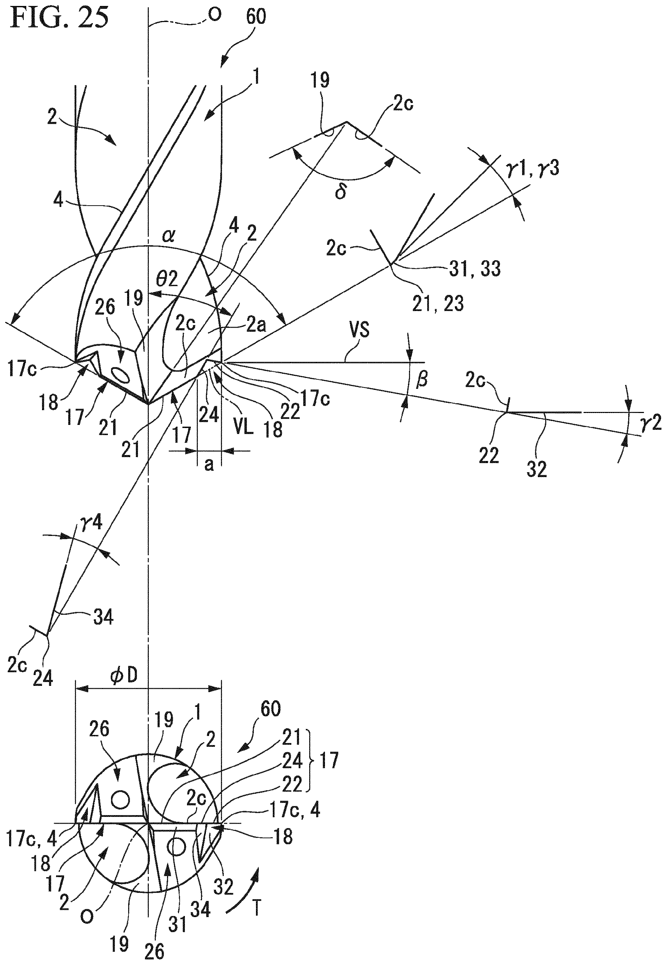

An angle, a radial position, or the like of each component of the drill 60 of the present embodiment will be described with reference to FIG. 25.

As shown in FIG. 25, the clearance angle γ1 of the first tip cutting edge 21 (first flank face 31) and the clearance angle γ3 of the third tip cutting edge 23 (third flank face 33) are the same as each other. In addition, the clearance angle γ2 of the second tip cutting edge 22 (second flank face 32) is smaller than the clearance angle γ1 and the clearance angle γ3. In the present embodiment, for example, each of the clearance angles γ1 and γ3 is approximately 15 degrees, and for example, the clearance angle γ2 is approximately 10 degrees. The clearance angle γ4 of the fourth tip cutting edge 24 (fourth flank face 34) is larger than the clearance angle γ2, and in the present embodiment, for example, is approximately 15 degrees.

In a side view of the drill shown in FIG. 25, a point angle α of the drill 60 corresponding to an angle which is two times an acute angle in an acute angle and an obtuse angle which are formed between the first tip cutting edge 21 and the axis O is within a range from 100 degrees to 170 degrees. In addition, since the drill 60 of the present embodiment is a twist drill, the point angle α is the same as the angle which is formed between extension lines of the first tip cutting edges 21 of the pair of tip cutting edges 17 in the side view of the drill.

In addition, when a diameter (outermost diameter) of a rotation locus which is obtained by rotating the tip cutting edge 17 in the circumferential direction around the axis O is set to φD, the radially outer end of the first tip cutting edge 21 is disposed within a range which is φD × 25% or less from the radially outer end of the tip cutting edge 17. Specifically, in the side view of the drill of FIG. 25, a distance (length in the radial direction) indicated by a reference numeral a is set to φD × 25% or less.

In the side view of the drill of FIG. 25, among an acute angle and an obtuse angle which are formed between the virtual plane VS perpendicular to the axis O and the second tip cutting edge 22, the angle β of the acute angle is set to 25 degrees or less. Specifically, the angle β is 0 degree to 25 degrees.

In addition, in the side view of the drill, among an acute angle and an obtuse angle which are formed between the axis O and the fourth tip cutting edge 24, the angle θ2 of the acute angle is set to 30 degrees or less. Specifically, the angle θ2 is more than 0 degree and equal to or less than 30 degrees.

In addition, in FIG. 25, for example, the angle δ which is formed between the gash rake face 2c positioned on the tip portion of the chip discharge flute 2 and the thinning surface 19 is approximately 120 degrees.

### [Cutting Force (Thrust Load and Radial Load) During Drilling]

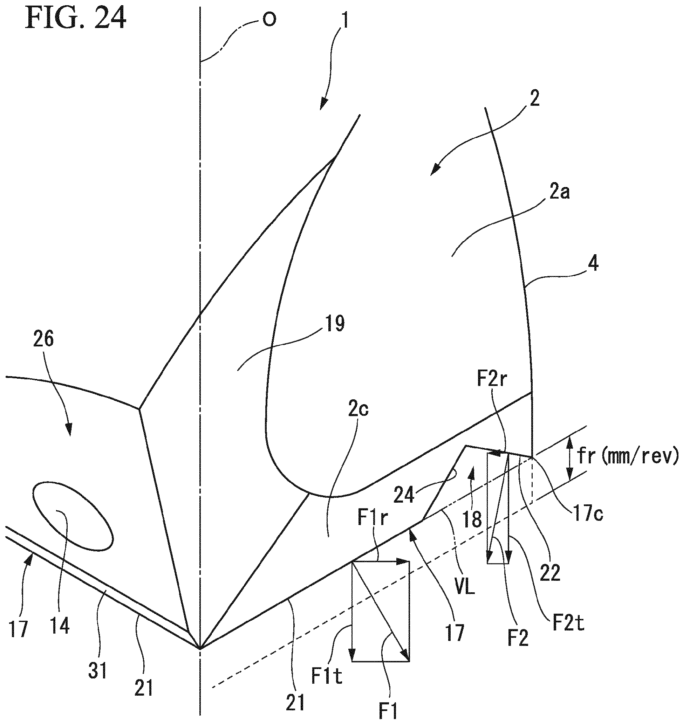

Next, a cutting force which is applied from the drill 60 to the work material during drilling, and a thrust load and a radial load thereof will be described with reference to FIG. 24.

FIG. 24 is a view showing the vicinity of the tip cutting edge 17 of the drill 60 in an enlarged manner, and in FIG. 24, the reference numeral F1 indicates the cutting force which is applied to the work material at a predetermined point of the first tip cutting edge 21 in the tip cutting edge 17, and the reference numeral F2 indicates the cutting force which is applied to the work material at a predetermined point of the second tip cutting edge 22 in the tip cutting edge 17. In addition, in actual, the cutting forces F1 and F2 are generated in the entire edge length region of the first and second tip cutting edges 21 and 22. Moreover, similarly, the cutting force is generated in the fourth tip cutting edge 24. However, the cutting force is not shown.

In the cutting force F1, the component force in the direction of the drill feed fr is the thrust load F1t, and the component force in the radial direction of the drill is the radial load F1r. In addition, in the cutting force F2, a component force in the direction of the drill feed fr is the thrust load F2t, and the component force in the radial direction of the drill is the radial load F2r.

In addition, in the drill 60 of the present embodiment, the directions of the thrust loads F1t and F2t are the same as each other. However, the directions of the radial loads F1r and F2r are different from each other. Alternatively, the radial load F2r is approximately zero (in a case where the second tip cutting edge 22 extends so as to be perpendicular to the axis O).

### [Effects of the Present Embodiment]

Similarly to the above-described reference example, in the drill 60 of the present embodiment, since the axial rake angle of the tip cutting edge 17 becomes a negative angle (0 degree) and the tip cutting edge 17 extends in the radial direction (the center height becomes zero), the radial rake angle R of the outer circumferential corner 17c of the tip cutting edge 17 becomes a negative angle (0 degree).

Accordingly, in the drill 60 of the present embodiment, effects similar to those of the above-described reference example are obtained, and it is possible to stably increase finishing accuracy of the inner circumference of the machined hole which is drilled in the work material W.

In addition, in the present embodiment, the tip cutting edge 17 positioned on the tip surface 26 of the drill 60 includes the first tip cutting edge 21 and the second tip cutting edge 22 disposed outside the first tip cutting edge 21 in the radial direction. Specifically, the second tip cutting edge 22 is inclined toward the tip in the axis O direction as it goes toward the outside in the radial direction or extends to be perpendicular to the axis O while the first tip cutting edge 21 is inclined toward the posterior end in the axis O direction as it goes toward the outside in the radial direction. In addition, since the radially inner end of the second tip cutting edge 22 is disposed to be closer to the posterior end in the axis O direction than the radially outer end of the first tip cutting edge 21, and the radially outer end of the second tip cutting edge 22 is positioned on the virtual extension line VL of the first tip cutting edge 21 which extends toward the outside in the radial direction, the following effects are exerted.

That is, since the tip cutting edge 17 separately includes the first tip cutting edge 21 positioned inside the tip of the drill 60 in the radial direction and the second tip cutting edge 22 positioned outside the tip of the drill 60 in the radial direction, as shown in FIG. 24, the thrust load (a force which is applied from the drill 60 to the work material in the direction of the drill feed fr) F1t generated when the first tip cutting edge 21 drills the work material applies to a portion positioned inside the inner circumference (here, the inner circumference means a planned portion which will be the inner circumference of the machined hole after the machining, and hereinafter, referred to as an inner circumference planned portion) in the radial direction of the machined hole in the work material, and it is possible to prevent the thrust load F1t from being transmitted to the outer circumferential portion (the inner circumference planned portion of the machined hole in the work material) of the drill 60.

Specifically, in general, the thrust load applied to the work material during the drilling easily increases in the portion (the vicinity of the center portion in the radial direction including the axis O) inside the tip of the drill in the radial direction, and in the drill of the related art, the thrust load applied from the vicinity of the center portion of the tip of the drill to the work material is transmitted to the inner circumference planned portion of the machined hole, and delamination easily occurs.

According to the present embodiment, since the first and second tip cutting edges 21 and 22 are separated from each other, the thrust load F1t applied from the vicinity of the center portion of the tip of the drill 60 to the work material is prevented from being transmitted to the inner circumference planned portion of the machined hole. Accordingly, it is possible to prevent delamination from occurring in the inner circumference of the machined hole after the machining.

In addition, since the first and second tip cutting edges 21 and 22 are separately formed so as to prevent the delamination, unlike the drill of the related art, it is not necessary to set the point angle α of the drill to be small (for example, smaller than 100 degrees) in order to prevent the delamination or it is not necessary to form an acute angle so as to sharpen the tip portion of the drill. Therefore, according to the present embodiment, it is possible to decrease the edge length of the tip cutting edge 17. Accordingly, it is possible to decrease a cutting resistance during the drilling.

Moreover, it is possible to decrease the length of the tip cutting edge 17 in the axis O direction, it is possible to decrease the stroke (the machined length in the direction of the drill feed fr) during the drilling, and machining efficiency (productivity) is improved.

As shown in FIG. 24, in cutting forces F1 and F2 which is applied from the first and second tip cutting edges 21 and 22 to the work material during the drilling, the component forces toward the tip (the direction of the drill feed fr) in the axis O direction become thrust loads F1t and F2t, and component forces in the radial direction become radial forces F1r and F2r.

In addition, in the present embodiment, the second tip cutting edge 22 of the tip cutting edge 17 is inclined toward the tip in the axis O direction as it goes toward the outside in the radial direction or extends to be perpendicular to the axis O while the first tip cutting edge 21 of the tip cutting edge 17 is inclined toward the posterior end in the axis O direction as it goes toward the outside in the radial direction.

Accordingly, the direction of the radial load F1r applied from the first tip cutting edge 21 to the work material and the direction of the radial load F2r applied from the second tip cutting edge 22 to the work material are different from each other while the directions of the thrust loads F1t and F2t applied from the first and second tip cutting edges 21 and 22 to the work material are the same as each other.

Specifically, the radial load F2r of the second tip cutting edge 22 is applied to the work material toward the inside in the radial direction or becomes approximately zero (is not applied) while the radial load F1r of the first tip cutting edge 21 is applied to the work material toward the outside in the radial direction.

Here, for example, in the drill of the related art, since the point angle α is set to be small or the tip portion of the drill is formed at an acute angle so as to sharpen the tip portion of the drill. Accordingly, since the radial load applied to the work material toward the outside in the radial direction increases, the drilling is performed while enlarging the machined hole in the radial direction, a diameter reduction phenomenon (spring back) of the machined hole occurs after the machining, and it may be difficult to secure inner-diameter accuracy of the machined hole.

According to the present embodiment, the radial load F1r toward the outside in the radial direction which is applied from the first tip cutting edge 21 to the work material is decreased or is not further increased by the radial load F2r which is applied in the direction different from the radial load F1r and is applied from the second tip cutting edge 22 to the work material. That is, the entire radial load of the tip cutting edge 17 of the drill 60 according to the present embodiment is further decreased than the entire radial load of the tip cutting edge of the drill of the related art. In addition, in the present embodiment, it is possible to dispose the second tip cutting edge 22 near the inner circumference planned portion of the machined hole of the work material, and in this case, the radial load toward the inside in the radial direction of the second tip cutting edge 22 can be directly applied to the inner circumference planned portion of the machined hole.

Accordingly, it is possible to effectively prevent the diameter reduction phenomenon from occurring in the inner circumference of the machined hole, and it is possible to increase inner-diameter accuracy of the machine hole.

Moreover, since the second tip cutting edge 22 extends toward the tip in the axis O direction as it goes toward the outside in the radial direction or extends to be perpendicular to the axis O, the second tip cutting edge 22 sharply cuts the vicinity of the inner circumference planned portion of the machine hole.

Accordingly, it is possible to effectively prevent burrs or the like from occurring in the inner circumference of the machined hole, and it is possible to increase quality of the inner circumference of the machined hole.

In addition, since the radially outer end of the second tip cutting edge 22 is positioned on the virtual extension line VL of the first tip cutting edge 21, the first and second tip cutting edges 21 and 22 approximately simultaneously cut the work material during the drilling.

Accordingly, an excessive cutting resistance is not applied to the second tip cutting edge 22 during the drilling, and it is possible to prevent wear and chipping of the second tip cutting edge 22 while sufficiently increasing the sharpness of the second tip cutting edge 22 according to the above-described configuration.

In addition, since the radially outer end of the second tip cutting edge 22 is positioned on the virtual extension line VL of the first tip cutting edge 21, the first and second tip cutting edges 21 and 22 are not disposed to be largely separated from each other in the axis O direction.

Accordingly, it is possible to reliably obtain the above-described effect by which the stroke can be decreased during the drilling.

In addition, when the drill 60 is manufactured, since the radially outer end of the second tip cutting edge 22 is positioned on the virtual extension line VL of the first tip cutting edge 21, for example, it is possible to easily form the first and second tip cutting edges 21 and 22 by forming the recessed portion (recessed portion 18) on a portion of the entire edge length of the tip cutting edge 17. Accordingly, it is possible to easily manufacture the drill 60.

In addition, since the radially outer end of the second tip cutting edge 22 is positioned on the virtual extension line VL of the first tip cutting edge 21, it is possible to easily secure large regrinding allowance of the tip cutting edge 17. Accordingly, it is possible to lengthen the tool life.

Hereinbefore, according to the above-described embodiment, it is possible to improve the quality and the inner-diameter accuracy of the inner circumference of the machined hole bored in the work material, the cutting resistance is decreased during the drilling, it is possible to improve the machining efficiency, and it is possible to decrease wear and chipping of the cutting edge (tip cutting edge 17), to sufficiently secure the regrinding allowance, and to lengthen the tool life.

In addition, according to the drill 60 shown in FIGS. 22A and 22B, since the tip cutting edge 17 includes the third tip cutting edge 23 which is disposed outside the second tip cutting edge 22 in the radial direction and the third tip cutting edge 23 extends along the virtual extension line VL, the following effects are exerted.

That is, according to the configuration, the above-described remarkable effects can be obtained by the first and second tip cutting edges 21 and 22, the third tip cutting edge 23 cuts the work material approximately simultaneously with the first and second tip cutting edges 21 and 22 and it is possible to stably improve the quality and the inner-diameter accuracy of the inner circumference of the machined hole.

In addition, since the third tip cutting edge 23 is provided between the radially outer end of the second tip cutting edge 22 and the tip (leading edge) of the peripheral cutting edge 4 extending along the chip discharge flute 2, it is possible to prevent a sharp corner portion from being formed between the tip cutting edge 17 and the peripheral cutting edge 4 by the third tip cutting edge, and it is possible to connect the tip cutting edge and the peripheral cutting edge to each other at a corner portion having an obtuse angle. That is, since it is possible to sufficiently increase the strength of the edge tip in the connection portion (outer circumferential corner 17c) between the tip cutting edge 17 and the peripheral cutting edge 4, wear and chipping of the cutting edge is significantly decreased.

Particularly, for example, in a case where drilling is performed on a composite material in which a plate of metal such as titanium or aluminum is laminated on a CFRP (carbon fiber reinforced resin) or a work material configured of a metal material having high extensibility or the like, preferably, it is possible to stably cut the work material with high accuracy by adopting the above-described configuration (third tip cutting edge 23).

In the drill 60 of the present embodiment shown in FIGS. 23A and 23B, the third tip cutting edge 23 may not be provided, and for example, with respect to a work material configured of only CFRP, the radially outer end of the second tip cutting edge 22 and the tip of the peripheral cutting edge 4 are directly connected to each other (that is, the distance b = 0 in FIG. 22A), and a sharp corner portion (outer circumferential corner 17c) may be positively formed between the tip cutting edge 17 and the peripheral cutting edge 4 so as to increase sharpness.

In addition, in the present embodiment, since the fourth tip cutting edge 24 which connects the first tip cutting edge 21 and the second tip cutting edge 22 to each other is disposed therebetween, it is possible to more reliably prevent a remainder from occurring between the first and second tip cutting edges 21 and 22.

Accordingly, for example, in a case where the configuration is applied to the drill 60 having multiple cutting edges such as two cutting edges or three cutting edges, separation positions (positions at which the fourth tip cutting edges 24 are disposed) between the first and second tip cutting edges 21 and 22 in the cutting edges (tip cutting edges 17) adjacent to each other in the circumferential direction are not required to be deviated to each other in the edge length direction (radial direction).

In this way, according to the configuration of the present embodiment, since a remainder does not occur in each of the tip cutting edges 17 adjacent to each other in the circumferential direction, it is possible to relatively freely dispose the first and second tip cutting edges 21 and 22 at expected positions. Accordingly, it is possible to easily cope with requirements of various drills 60.

In a side view shown in FIG. 25 when the drill main body 1 is viewed in the radial direction, the point angle α of the drill 60 is within a range from 100 degrees to 170 degrees, the following effects are exerted.

That is, since the point angle α of the drill 60 is 100 degrees or more, the point angle α is not excessively small, and it is possible to prevent the radial load (the force which is applied to the work material toward the outside in the radial direction) F1r from being excessively increased during the drilling. Accordingly, the effects by which the diameter reduction phenomenon of the machined hole after the machining is prevented are more remarkable.

In addition, since the point angle α of the drill 60 is 170 degrees or less, the point angle α is not excessively large, and it is possible to prevent the thrust load (the force which is applied to the work material in the drill feeding direction) F1t from being excessively increased during the drilling. Accordingly, effects by which the delamination is prevented are more reliably exerted.

Moreover, since the radially outer end of the second tip cutting edge 22 is disposed within a range which is φD (the diameter of the rotation locus of the tip cutting edge 17) × 10% or less from the outermost end of the entire tip cutting edge 17 in the radial direction (that is, the distance b in FIG. 22A is φD × 10% or less), the following effects are exerted.

That is, it is possible to dispose the second tip cutting edge 22 near the inner circumference planned portion of the machined hole of the work material, and the radial load F2r toward the inside in the radial direction of the second tip cutting edge 22 can be directly applied to the inner circumference planned portion of the machined hole.

Accordingly, it is possible to effectively prevent the diameter reduction phenomenon from occurring in the inner circumference of the machined hole, and it is possible to increase inner-diameter accuracy of the machine hole.

Moreover, since the second tip cutting edge 22 extends toward the tip in the axis O direction as it goes toward the outside in the radial direction or extends to be perpendicular to the axis O, the second tip cutting edge 22 sharply cuts the vicinity of the inner circumference planned portion of the machine hole.

Accordingly, it is possible to effectively prevent burrs or the like from occurring in the inner circumference of the machined hole, and it is possible to increase quality of the inner circumference of the machined hole.

In addition, since the radially outer end of the first tip cutting edge 21 is disposed within a range of φD (the diameter of the rotation locus of the tip cutting edge 17) × 25% or less from the outermost end of the entire tip cutting edge 17 in the radial direction (that is, the distance a in FIG. 25 is φD × 25% or less), the following effects are exerted.

That is, the edge length of the first tip cutting edge 21 can be secured approximately half or more of the entire edge length of the tip cutting edge 17, and when the second tip cutting edge 22 disposed outside the first tip cutting edge 21 in the radial direction is formed, it is possible to prevent stiffness of the tip of the drill 60 from being decreased due to a large recessed portion 18 being notched or the like.

In addition, since the angle β which is formed between the virtual plane VS perpendicular to the axis O and the second tip cutting edge 22 in the side view of the drill shown in FIG. 25 is 25 degrees or less, the following effects are exerted.

That is, in this case, it is possible to prevent the position of the radially inner end of the second tip cutting edge 22 in the axis O direction from being largely separated from the first tip cutting edge 21 toward the posterior end in the axis O direction. Accordingly, when the second tip cutting edge 22 is formed, it is possible to prevent stiffness of the tip of the drill 60 from being decreased due to a large recessed portion 18 being notched or the like. In addition, effects by which the stroke can be decreased during the drilling are more reliably exerted.

Moreover, since the angle θ2 which is formed between the axis O and the fourth tip cutting edge 24 is 30 degrees or less in the side view of the drill shown in FIG. 25, the following effects are exerted.

That is, in this case, since the angle θ2 is 30 degrees or less, the fourth tip cutting edge 24 is not largely inclined to the axis O and extends so as to approximately follow the axis O, and it is possible to shorten the edge length of the fourth tip cutting edge 24. Accordingly, it is possible to lengthen the edge length of the second tip cutting edge 22, and effects generated by providing the above-described second tip cutting edge 22 are more remarkable.

In addition, although it is not shown particularly, in the tip cutting edge 17 of the drill 60 of the present embodiment, the radially inner end of the second tip cutting edge 22 may be disposed on the inside in the radial direction or at the same position in the radial direction with respect to the radially outer end of the first tip cutting edge 21. In this case, the fourth tip cutting edge 24 does not function as the cutting edge and is simply formed on the ridge (becomes a pretended cutting edge).

According to the configuration, since drilling is performed such that the first tip cutting edge 21 and the second tip cutting edge 22 overlap each other in the radial direction, remainder does not occur between the first and second tip cutting edges 21 and 22. That is, it is possible to prevent the remainder from occurring between the radially outer end of the first tip cutting edge 21 and the radially inner end of the second tip cutting edge 22 without applying a function of the cutting edge to the connection portion (the ridge) which connects the radially outer end of the first tip cutting edge 21 and the radially inner end of the second tip cutting edge 22 to each other, particularly.

Accordingly, for example, in a case where the configuration is applied to the drill 60 having multiple cutting edges such as the twist drill described in the present embodiment, separation positions (positions corresponding to the radially outer end of the first tip cutting edge 21 and the radially inner end of the second tip cutting edge 22) between the first and second tip cutting edges 21 and 22 in the cutting edges (tip cutting edges 17) adjacent to each other in the circumferential direction are not required to deviated to each other in the edge length direction (radial direction).

Specifically, for example, in the drill head of the related art disclosed in Japanese Unexamined Patent Application, First Publication No. H11-129109, if positions of nicks are not deviated to each other in the edge length direction in the cutting edges (tip cutting edges) adjacent to each other in the circumferential direction, a remainder occurs.

According to the configuration of the present embodiment, since the remainder does not occur in each of the tip cutting edges 17 adjacent to each other in the circumferential direction, it is possible to relatively freely dispose the first and second tip cutting edges 21 and 22 at expected positions. Accordingly, it is possible to easily cope with requirements of various drills 60.

In addition, in the side view of the drill, among an acute angle and an obtuse angle which are formed between the axis O and the ridge, preferably, the angle of the acute angle is set to 10 degrees or less.

That is, in this case, it is possible to prevent a remainder from occurring between the first and second tip cutting edges 21 and 22, and when the second tip cutting edge 22 is formed, it is possible to prevent stiffness of the tip of the drill 60 from being decreased due to a large recessed portion 18 being notched toward the inside in the radial direction or the like.

### <Fourth Embodiment>

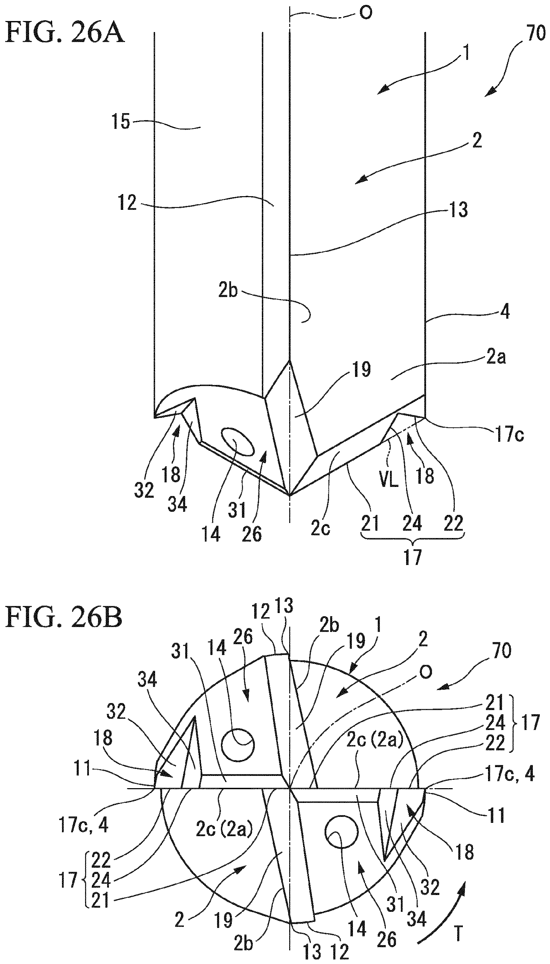

Next, a drill 70 according to a fourth embodiment of the present invention will be described with reference to FIGS. 26A and 26B.

In addition, detailed descriptions of the same components as those of the above-described reference example and the third embodiment are omitted, and differences therebetween will be mainly described as follows.

### [Difference between Reference Example and Embodiment]

The drill 70 of the present embodiment is mainly different from the drills 50 and 60 described in the above-described reference example and third embodiment with respect to the shape of the chip discharge flute 2 of the drill main body 1, and in that the second margin portion 12 is provided in the present embodiment.

### [Chip Discharge Flute]

As shown in FIGS. 26A and 26B, in the drill 70 of the present embodiment, the chip discharge flute 2 extends so as to be parallel to the axis O. That is, the chip discharge flute 2 straightly extends in the axis O direction without being twisted in the circumferential direction. That is, the drill 70 is a straight flute type drill. In addition, the gash rake face 2c is formed on the tip portion of the wall surface 2a of the chip discharge flute 2.

In addition, in the drill 70 of the present embodiment, the inner circumferential shape of the flute of the chip discharge flute 2 is formed in an L shape in a cross sectional view.

### [Second Margin Portion]

In addition, the drill 70 includes the second margin portion 12 as a margin portion in addition to the margin portion 11 (first margin portion). The second margin portion 12 is formed so as to have the same diameter as that of the first margin portion 11, and is disposed between the body clearance 15 and the chip discharge flute 2 adjacent to the opposite to the body clearance 15 in the rotation direction T of the drill.

### [Effects of the Present Embodiment]

Similarly to the above-described reference example and third embodiment, in the drill 70 of the present embodiment, since the axial rake angle of the tip cutting edge 17 becomes a negative angle (0 degree) and the tip cutting edge 17 extends in the radial direction (the center height becomes zero), the radial rake angle R of the outer circumferential corner 17c of the tip cutting edge 17 becomes a negative angle (0 degree).

Accordingly, in the drill 70 of the present embodiment, effects similar to those of the above-described reference example and third embodiment are obtained, and it is possible to stably increase finishing accuracy of the inner circumference of the machined hole which is drilled in the work material W.

In addition, in the present embodiment, the chip discharge flute 2 is a straight flute which linearly extends on the outer circumference of the drill main body 1. Accordingly, the chip discharge flute is easily formed when the drill is manufactured.

### [Other Configurations included in the Present Invention]

In addition, the present invention is not limited to the above-described embodiments, and various modifications can be applied to the present invention within a range which does not depart from the gist of the present invention.

For example, each of the drills 50 to 70 described in the above-described reference example and embodiments is the drill (twist drill) having two cutting edges in which the pair of (two) chip discharge flutes 2 are disposed on the outer circumference of the drill main body 1 with a gap in the circumferential direction, and the pair of (two) tip cutting edges 7 and 17 are formed. However, the present invention is not limited to this. That is, the present invention can be applied to each of the drills 60 and 70 having three or more cutting edges in which three or more chip discharge flutes 2 are disposed on the outer circumference of the drill main body 1 with a gap in the circumferential direction and three or more tip cutting edges 17 are formed.

In addition, in the above-described embodiments, the drill main body 1 is formed of a hard material such as cemented carbide. However, the material of the drill main body 1 is not limited to this. Alternatively, the cutting portion of the drill main body 1 may be coated with a coating film such as a diamond coating film.

In addition, each of the above-described drills 50 to 70 is a solid type drill which is integrally molded. However, the present invention can be applied to a drill head which is detachably mounted on the tip portion of the tool main body of the indexable insert drill, or a drill head which is mounted so as to be fixed to the tip portion of the tool main body by brazing or the like.

That is, although it is not shown particularly, the present invention can be adopted to a drill head which includes a head main body (corresponding to the drill main body 1 of each of the above-described embodiments) which is rotated around the axis O along with the tool main body, the chip discharge flute 2 which is formed on the outer circumference of the head main body and extends from the tip toward the posterior end in the axis O direction, and the tip cutting edge 17 which is formed on the intersection ridge portion between the wall surface 2a facing in the rotation direction T of the drill of the chip discharge flute 2 and the tip surface 26 of the head main body. In this case, in the drill head, the gash rake face 2c is formed so as to be parallel to the axis O on the tip portion of the wall surface 2a of the chip discharge flute 2 which is continued to the tip surface 26 via the tip cutting edge 17, and in the front view of the drill when the head main body is viewed from the tip toward the posterior end in the axis O direction, the tip cutting edge 17 extends in the radial direction orthogonal to the axis O. In addition, in the drill head, various configurations described in the above-described embodiments may be combined.

In addition, the point angle α, the angles β, δ, and θ2, the clearance angles γ1 to γ4, and the distances a and b are not limited to the numeral ranges described in the above-described embodiments.

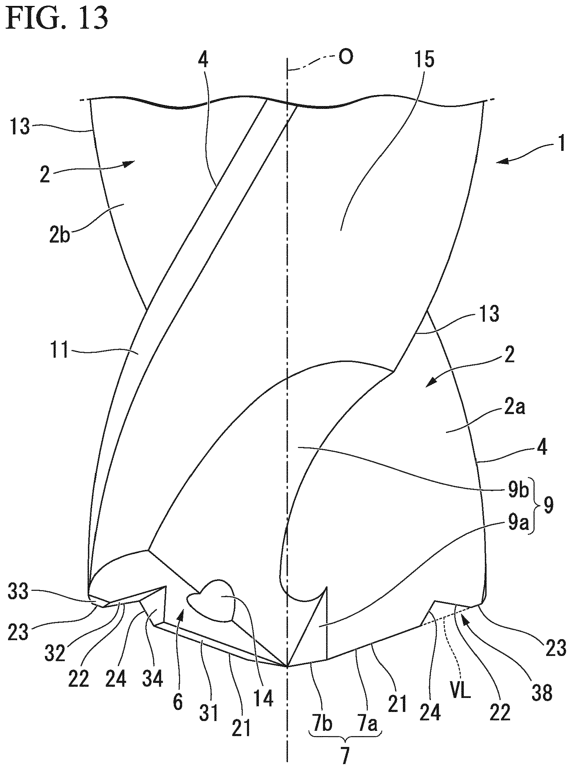

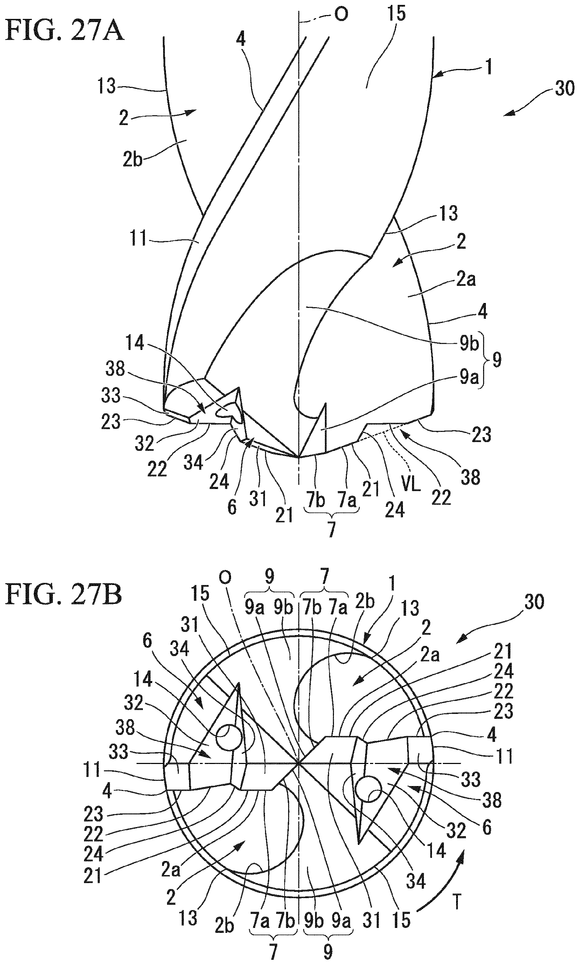

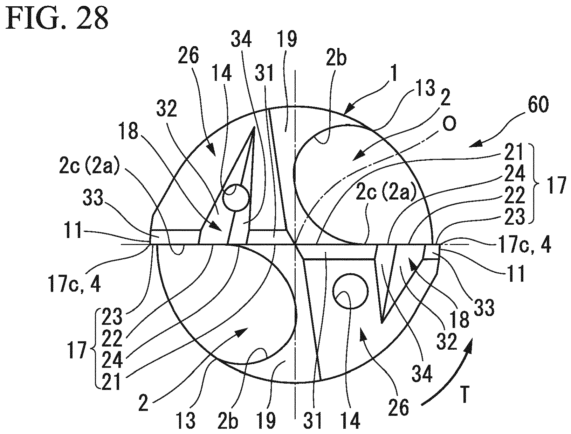

Here, FIGS. 27A and 27B show a modification example (modification example of the drill 30 shown in FIGS. 12 and 13) of the drill 30 of the above-described second embodiment. In addition, FIG 28 shows a modification example of the drill 60 (modification example of the drill 60 shown in FIG. 22B) of the above-described third embodiment.

In the modification examples, the coolant hole 14 which penetrates the inside of the drill main body 1 in the axis O direction is opened to the tip surfaces 6 and 26, and at least a portion of the coolant hole 14 is disposed in the recessed portions 38 and 18. In addition, detailed descriptions of the same components as those of the above-described embodiments are omitted, and differences therebetween will be mainly described as follows.

Specifically, in the modification example of the drill 30 shown in FIGS. 27A and 27B, the recessed portion 38 formed on the tip surface 6 extends from at least the second tip cutting edge 22 of the tip cutting edge 7 toward the opposite to the rotation direction T of the drill, and is recessed toward the posterior end in the axis O direction. In the shown example, the recessed portion 38 extends from the second tip cutting edge 22 and the fourth tip cutting edge 24 of the tip cutting edge 7 to the opposite to the rotation direction T of the drill, and is formed to be further recessed than the portion except for the recessed portion 38 of the tip surface 6.

More specifically, the recessed portion 38 includes the second flank face 32 which is the wall surface (bottom surface) extending from the second tip cutting edge 22 toward the opposite to the rotation direction T of the drill, and the fourth flank face 34 which is the wall surface extending from the fourth tip cutting edge 24 toward the opposite to the rotation direction T of the drill, the pair of wall surfaces are connected to each other at the deepest portion of the recessed portion 38, and the recessed portion 38 has a V-shaped recessed cross section. In addition, in the shown example, each of the pair of wall surfaces (second flank face 32 and fourth flank face 34) of the recessed portion 38 is formed in a flat surface shape.

The end portion of the recessed portion 38 in the rotation direction T of the drill is opened to the chip discharge flute 2 adjacent to the tip surface 6 on which the recessed portion 38 is disposed in the rotation direction T of the drill. In addition, the end portion opposite to the recessed portion 38 in the rotation direction T of the drill is positioned on the thinning surface 9b which is adjacent to the opposite to the tip surface 6 on which the recessed portion 38 is disposed in the rotation direction T of the drill. That is, in the example shown in FIGS. 27A and 27B, the recessed portion 38 is formed so as to be notched from the tip cutting edge 7 to the tip surface (tip flank face) 6 and the thinning surface 9b.

In addition, although it is not shown particularly, the ridge 16 shown in FIG. 5 may be formed on the tip cutting edge 7 instead of the fourth tip cutting edge 24, and in this case, the recessed portion 38 extends from the second tip cutting edge 22 and the ridge 16 of the tip cutting edge 7 toward the opposite to the rotation direction T of the drill.

In addition, the coolant hole 14 is opened to at least one of the pair of recessed portions 38. In the example shown in FIGS. 27A and 27B, the pair of coolant holes 14 opened to the tip surface 6 are disposed on the pair of recessed portions 38, that is, each of coolant holes 14 is opened to each recessed portion 38 (the coolant hole 14 is opened to both of the pair of recessed portions 38). In addition, the open portion of the coolant hole 14 is disposed at the intermediate portion which is disposed between the end portion of the recessed portion 38 in the rotation direction T of the drill and the end portion on the opposite to the rotation direction T of the drill. In other words, the recessed portion 38 extends from the open portion of the coolant hole 14 toward each of the rotation direction T of the drill and the opposite to the rotation direction T of the drill.

In addition, the open portion of the coolant hole 14 is opened to both of the pair of wall surfaces (second flank face 32 and fourth flank face 34) of the recessed portion 38. That is, in the example shown in FIGS. 27A and 27B, the open portion of the coolant hole 14 is disposed on the deepest portion of the recessed portion 38, and is opened to each portion of the pair of wall surfaces positioned at the deepest portion.

In addition, in the shown example, the open portion of the coolant hole 14 is disposed (accommodated) in the recessed portion 38 without protruding from the recessed portion 38 to the outside. However, at least a portion of the coolant hole 14 may be opened to the inside of the recessed portion 38, and the present invention is not limited to the configuration in which the entire region of the open portion of the coolant hole 14 is disposed inside the recessed portion 38.

In addition, in the modification example of the drill 60 shown in FIG. 28, the shapes of the pair of recessed portions 18 formed on the tip surface 26 are different from each other. The positions of the recessed portions 18 are different from each other in the radial direction, and the lengths in the rotation direction T of the drill are different from each other. That is, the pair of recessed portions 18 does not have a rotationally symmetrical shape about the axis O. Accordingly, the pair of tip cutting edges 17 does not have a rotationally symmetrical shape about the axis O.

In addition, in the example shown in FIG. 28, in the pair of recessed portions 18, the coolant hole 14 is opened to only one recessed portion 18, and the coolant hole 14 is not opened to another recessed portion 18. In addition, in the shown example, the end portion on the opposite to the recessed portion 18 in the rotation direction T of the drill does not reach the thinning surface 19.

In addition, although it is not shown particularly, any one of honing processing of 0.010 to 0.200 mm in a negative angle and edge tip processing such as a gash of 0 degree or less in a rake angle may be performed on the edge tip of the tip cutting edge 17 portion (in shown example, second tip cutting edge 22 and fourth tip cutting edge 24) of the recessed portion 18 which is opened to the gash rake face 2c.

According to the above-described modification example, a coolant (compressed air, or an oil or water-soluble cutting fluid) which flows from the coolant hole 14 into the recessed portions 38 and 18 stably and easily flows from the recessed portions 38 and 18 to the second tip cutting edge 22 and the portions (third tip cutting edge 23 or outer circumferential corner 17c or the like) of the tip cutting edges 7 and 17 positioned outside the second tip cutting edge 22 in the radial direction, and to the tip (leading edge) or the like of the peripheral cutting edge 4 by effects of a centrifugal force during the drilling, or the like.

Specifically, the coolant is supplied to the cutting edges (tip cutting edges 7 and 17 and the peripheral cutting edge 4) and the vicinity thereof while flowing from the tip surfaces (tip flank faces) 6 and 26 to the chip discharge flute (rake face) 2 adjacent to the tip surfaces 6 and 26 in the rotation direction T of the drill through the inside of the recessed portions 38 and 18. That is, the coolant reaches the cutting edge from the tip surfaces 6 and 26 without being subjected to influences of the chips which flow on the rake face. Accordingly, the cutting edge and the vicinity (machined portion) of the inner circumference of the machined hole of the work material are effectively cooled, and it is possible to remarkably improve machining accuracy.

Specifically, in the related art, after a coolant flows out from the coolant hole opened to the tip surface of the drill, the coolant unstably flows in a state where the direction of the flow is not determined and is supplied to the cutting edge through the inside of the chip discharge flute positioned on the opposite to the tip surface in the rotation direction of the drill, the outer circumferential surface of the drill, or the like. Accordingly, a useless coolant which does not reach the vicinity of the cutting edge increases, and it is not possible to obtain sufficient cooling effects. In addition, it is difficult to increase discharging properties with respect to the chips inside the chip discharge flute. Particularly, for example, in a case where a work material such as CFRP or a composite material in which a metal plate is laminated on CFRP or the like is drilled, the temperature of the machined portion is increased due to cutting heat, the CFRP is embrittled, and burrs or the delamination easily occur. In addition, since chips stay in the machined portion, the bitten chips scratch the inner circumference of the machined hole, the machined surface is damaged, and machining quality decreases.

According to the configuration described in the modification example of the present invention, the coolant flows from the position near the cutting edge into the chip discharge flute 2 adjacent to the tip surfaces 6 and 26 in the rotation direction T of the drill through the inside of the recessed portions 38 and 18 without waste. Accordingly, the coolant is stably supplied to the machined portion, an increase in the temperature of the machined portion is significantly suppressed, and it is possible to stably increase machining quality. In addition, since the coolant stably flows to the machined portion, it is possible to prevent the chips from being stayed in the machined portion, and it is possible to significantly prevent the machining quality from being decreased due to biting of chips or the like.

In addition, it is possible to effectively prevent wear or damage of the outer circumference corner 17c of the tip cutting edges 7 and 17 or the leading edge of the peripheral cutting edge 4 in which a cutting load easily increases, and it is possible to favorably maintain cutting performance over a long period.

In addition, in the present modification, since each of the recessed portions 38 and 18 extends from the open portion of the coolant hole 14 in the rotation direction T of the drill and toward the opposite to the rotation direction T of the drill, the following effects are exerted.

In this case, since the recessed portions 38 and 18 extend from the open portion of the coolant hole 14 in the rotation direction T of the drill, the coolant flowing in the recessed portions 38 and 18 stably flows from the tip surfaces 6 and 26 of the drill to the chip discharge flute 2 adjacent to the tip surfaces 6 and 26 in the rotation direction of the drill, and the above-described effects are remarkably exerted.

In addition, since the recessed portions 38 and 18 extends from the open portion of the coolant hole 14 toward the opposite to the rotation direction T of the drill, the coolant flowing in the recessed portions 38 and 18 stably flows into the chip discharge flute 2 adjacent to the opposite to the tip surfaces 6 and 26 of the drill in the rotation direction T of the drill. Accordingly, discharging of the chips inside the chip discharge flutes 2 is promoted, it is possible to increase chip discharging properties, chip clogging is significantly suppressed, and it is possible to continuously and favorably maintain drilling with high accuracy.

Particularly, in a case where the end portion on the opposite to the recessed portion 38 in the rotation direction T of the drill reaches the thinning surface 9b (is disposed on the thinning surface 9b) as the example shown in FIGS. 27A and 27B, the coolant more stably and easily flows from the recessed portion 38 into the chip discharge flute 2 positioned on the opposite to the recessed portion 38 in the rotation direction T of the drill, and the above-described effects by which the chip discharging properties are increased are more remarkable.

In addition, in the above-described modification example, since the recessed portions 38 and 18 include the pair of wall surfaces (second flank face 32 and fourth flank face 34) which are connected to each other at the deepest portions of the recessed portions 38 and 18, and has a V-shaped recessed cross section, and the open portion of the coolant hole 14 is opened to both of the pair of wall surfaces, the following effects are exerted.

That is, in this case, since the coolant hole 14 is opened to both of the pair of wall surfaces which are connected to each other at the deepest portion of the recessed portions 38 and 18, the coolant flowing out from the coolant hole 14 flows along each of the wall surfaces so as to be uniformly distributed, deviation in the flow in the recessed portions 38 and 18 decreases to from at least a stable flow, and the coolant flows out from the recessed portions 38 and 18 and is stably supplied to the machined portion. Accordingly, the above-described effects are more remarkably exerted.

In addition, configurations (components) described in the above-described embodiments, the modification examples, the reference example, the rewriting, or the like may be combined within a scope which does not depart from the gist of the present invention, and addition, omission, replacement, other modifications of the configurations may be performed. In addition, the present invention is not limited by the above-described embodiments, and is defined by only claims.

### Industrial Applicability

According to the drill and the drill head of the present invention, quality and inner-diameter accuracy of the inner circumference of the machined hole bored in the work material can increase, machining efficiency can be increased by decreasing a cutting resistance during drilling, wear and chipping of the cutting edge can be prevented, a regrinding allowance can be sufficiently secured, and a tool life can be extended. Accordingly, the present invention is susceptible of industrial application.

### Reference Signs List

1: drill main body
2: chip discharge flute
2a: wall surface
2c: gash rake face
6, 26: tip surface (tip flank face)
7, 17: tip cutting edge
8, 18, 38: recessed portion
10, 20, 30, 40, 60, 70: drill
14: coolant hole
16: ridge
21: first tip cutting edge
22: second tip cutting edge
23: third tip cutting edge
24: fourth tip cutting edge
32: second flank face (wall surface of recessed portion)
34: fourth flank face (wall surface of recessed portion)
φD: diameter (outermost diameter) of rotation locus of tip cutting edge
O: axis
T: rotation direction of the drill
VL: virtual extension line
VS: virtual plane
α: point angle
β: angle
θ1, θ2: angle

## Claims

1. A drill comprising:
a drill main body which is rotated around an axis;
a chip discharge flute which is formed on the outer circumference of the drill main body, and extends from the tip of the drill main body toward the posterior end of the drill main body in an axis direction; and
a tip cutting edge which is formed on an intersection ridge portion between a wall surface facing in a rotation direction of the drill of the chip discharge flute and the tip surface of the drill main body,
wherein the tip cutting edge includes:
a first tip cutting edge which extends toward the axially posterior end as it goes toward the outside in a radial direction orthogonal to the axis; and
a second tip cutting edge which is disposed outside the first tip cutting edge in the radial direction,
wherein the second tip cutting edge extends toward the tip in the axis direction as it goes toward the outside in the radial direction or extends to be perpendicular to the axis,
wherein the radially inner end of the second tip cutting edge is disposed on the axially posterior end with respect to the radially outer end of the first tip cutting edge, and
wherein the radially outer end of the second tip cutting edge is disposed on a virtual extension line of the first tip cutting edge which extends toward the outside in the radial direction.

2. The drill according to claim 1,
wherein the tip cutting edge includes a third tip cutting edge which is disposed outside the second tip cutting edge in the radial direction, and
wherein the third tip cutting edge extends along the virtual extension line.

3. The drill according to claim 1 or 2,
wherein the radially inner end of the second tip cutting edge is disposed on the inside in the radial direction or at the same position in the radial direction with respect to the radially outer end of the first tip cutting edge.

4. The drill according to claim 3,
wherein a ridge which connects the radially outer end of the first tip cutting edge and the radially inner end of the second tip cutting edge is formed, and
wherein an angle θ1 which is formed between the axis and the ridge is 10 degrees or less in a side view in which the drill main body is viewed in the radial direction.

5. The drill according to claim 1 or 2,
wherein the radially inner end of the second tip cutting edge is disposed on the outside in the radial direction with respect to the radially outer end of the first tip cutting edge,
wherein the tip cutting edge includes a fourth tip cutting edge which connects the radially outer end of the first tip cutting edge and the radially inner end of the second tip cutting edge, and
wherein the fourth tip cutting edge extends toward the axially posterior end as it goes toward the outside in the radial direction.

6. The drill according to claim 5,
wherein an angle θ2 which is formed between the axis and the fourth tip cutting edge is 30 degrees or less in a side view in which the drill main body is viewed in the radial direction.

7. The drill according to any one of claims 1 to 6,
wherein a point angle α of the drill corresponding to an angle which is two times an acute angle which is formed between the first tip cutting edge and the axis in a side view in which the drill main body is viewed in the radial direction is 100 degrees or more and 170 degrees or less.

8. The drill according to any one of claim 1 to 7,
wherein when a diameter of a rotation locus which is obtained by rotating the tip cutting edge in the circumferential direction around the axis is set to φD, the radially outer end of the second tip cutting edge is disposed within a range which is φD × 10% or less from the radially outer end of the tip cutting edge.

9. The drill according to any one of claims I to 8,
wherein when a diameter of a rotation locus which is obtained by rotating the tip cutting edge in the circumferential direction around the axis is set to φD, the radially outer end of the first tip cutting edge is disposed within a range which is φD × 25% or less from the radially outer end of the tip cutting edge.

10. The drill according to any one of claims 1 to 9,
wherein an angle β which is formed between a virtual plane perpendicular to the axis and the second tip cutting edge is 25 degrees or less in a side view in which the drill main body is viewed in the radial direction.

11. The drill according to any one of claims 1 to 10,
wherein a gash rake face which is parallel to the axis is formed on a tip portion continued to the tip surface via the tip cutting edge on the wall surface facing in the rotation direction of the drill of the chip discharge flute, and
wherein the tip cutting edge extends in the radial direction orthogonal to the axis in a front view of the drill in which the drill main body is viewed from the tip toward the posterior end in the axis direction.

12. The drill according to claim 11,
wherein a portion of the chip discharge flute which is positioned to be closer to the axially posterior end than the gash rake face extends so as to be gradually twisted toward the opposite to the rotation direction of the drill as it goes from the gash rake face toward the axially posterior end.

13. The drill according to claim 11,
wherein the chip discharge flute extends to be parallel to the axis.

14. The drill according to any one of claims 1 to 13,
wherein a recessed portion which extends from at least the second tip cutting edge of the tip cutting edge toward the opposite to the rotation direction of the drill and which is recessed toward the axially posterior end is formed on the tip surface,
wherein a coolant hole which penetrates the drill main body in the axis direction is formed inside the drill main body, and
wherein at least a portion of the coolant hole which opens to the tip surface is disposed in the recessed portion.

15. The drill according to claim 14,
wherein the recessed portion extends from the open portion of the coolant hole in the rotation direction of the drill and toward the opposite to the rotation direction of the drill.

16. The drill according to claim 14 or 15,
wherein the recessed portion includes a pair of wall surfaces which are connected to each other at the deepest portion of the recessed portion, and has a V-shaped recessed cross section, and
wherein the open portion of the coolant hole is opened to both of the pair of wall surfaces.

17. A drill head which is mounted on a tip portion of a tool main body, comprising:
a head main body which is rotated around an axis along with the tool main body;
a chip discharge flute which is formed on the outer circumference of the head main body, and extends from the tip of the head main body toward the posterior end of the head main body in an axis direction; and
a tip cutting edge which is formed on an intersection ridge portion between a wall surface facing in a rotation direction of the drill of the chip discharge flute and the tip surface of the head main body,
wherein the tip cutting edge includes:
a first tip cutting edge which extends toward the axially posterior end as it goes toward the outside in a radial direction orthogonal to the axis; and
a second tip cutting edge which is disposed outside the first tip cutting edge in the radial direction,
wherein the second tip cutting edge extends toward the tip in the axis direction as it goes toward the outside in the radial direction or extends to be perpendicular to the axis,
wherein the radially inner end of the second tip cutting edge is disposed on the axially posterior end with respect to the radially outer end of the first tip cutting edge, and
wherein the radially outer end of the second tip cutting edge is disposed on a virtual extension line of the first tip cutting edge which extends toward the outside in the radial direction.

18. The drill head according to claim 17,
wherein a gash rake face which is parallel to the axis is formed on a tip portion continued to the tip surface via the tip cutting edge on the wall surface facing in the rotation direction of the drill of the chip discharge flute, and
wherein the tip cutting edge extends in the radial direction orthogonal to the axis in a front view of the drill in which the head main body is viewed from the tip toward the posterior end in the axis direction.

19. The drill head according to claim 17 or 18,
wherein a recessed portion which extends from at least the second tip cutting edge of the tip cutting edge toward the opposite to the rotation direction of the drill and which is recessed toward the axially posterior end is formed on the tip surface,
wherein a coolant hole which penetrates the head main body in the axis direction is formed inside the head main body, and
wherein at least a portion of the coolant hole which opens to the tip surface is disposed in the recessed portion.

20. The drill head according to claim 19,
wherein the recessed portion extends from the open portion of the coolant hole in the rotation direction of the drill and toward the opposite to the rotation direction of the drill.

21. The drill head according to claim 19 or 20,
wherein the recessed portion includes a pair of wall surfaces which are connected to each other at the deepest portion of the recessed portion, and has a V-shaped recessed cross section, and
wherein the open portion of the coolant hole is opened to both of the pair of wall surfaces.
